# EUROPEAN PATENT APPLICATION

(11) **EP 4 458 526 A1**
(43) Date of publication of application: **06.11.2024**
(21) Application number: 21969905.5
(22) Date of filing: 27.12.2021
(51) Int. Cl.: B25J 13/08

(54) **CONTROL DEVICE, CONTROL SYSTEM, ROBOT SYSTEM, CONTROL METHOD, AND COMPUTER PROGRAM**

(71) Applicant: NIKON CORPORATION, Minato-ku Tokyo 108-6290 (JP)
(72) Inventor: HOSOMI, Koji, Minato-ku Tokyo 108-6290 (JP); SHIGENO, Hikaru, Minato-ku Tokyo 108-6290 (JP); EFTAKHAR, Ashik, Minato-ku Tokyo 108-6290 (JP); MIYANO, Makito, Minato-ku Tokyo 108-6290 (JP); HASEGAWA, Satoshi, Minato-ku Tokyo 108-6290 (JP); MIMURA, Kohei, Minato-ku Tokyo 108-6290 (JP); KOYANAGI, Daisuke, Minato-ku Tokyo 108-6290 (JP); MORINO, Yusuke, Minato-ku Tokyo 108-6290 (JP); SANO, Hideyuki, Minato-ku Tokyo 108-6290 (JP); SHIMIZU, Hayate, Minato-ku Tokyo 108-6290 (JP)
(74) Representative: Arnold & Siedsma
(86) International application number: PCT/JP2021/048572
(87) International publication number: WO 2023/127021

(57) **Abstract**

A control apparatus: calculates, based on first image data acquired by a first imaging apparatus capturing an object during a relative movement between the object and first and second imaging apparatuses, a first position including at least one of a position of the object in at least one of first to third directions respectively parallel to first to third axes and a pose of the object around at least one the first to third axes in a first coordinate system defined by the first to third axes; calculates, based on shape data that is generated from second image data acquired by the second imaging apparatus capturing the object during the relative movement and that indicates a three-dimensional shape of the object, a second position including at least one of a position of the object in at least one of fourth to sixth directions respectively parallel to fourth to sixth axes and a pose of the object around at least one of the fourth to sixth axes in a second coordinate system defined by the fourth to sixth axes; generates the control signal based on the first and second positions; and outputs, in a first cycle, the control signal.

## Description

### Technical Field

The present invention relates to a control apparatus, a control system, a robot system, a control method, and a computer program that is configured to generate a control signal for controlling a robot, for example.

### Background Art

A Patent Literature 1 discloses one example of a control apparatus that calculates a position of an object that is a target for a process performed by a robot, and controls the robot based on the calculated position. This type of control apparatus is required to accurately calculate the position of the object.

### Citation List

### Patent Literature

Patent Literature 1: US2013/0230235A1

### Summary of Invention

A first aspect provides a control apparatus that generates a control signal for controlling a robotic arm, wherein a process apparatus that performs a process on an object, a first imaging apparatus that outputs first image data, and a second imaging apparatus that outputs second image data are mounted to the robotic arm, the robotic arm moves the process apparatus, the first imaging apparatus, and the second imaging apparatus, the control apparatus includes: a calculation unit that generates the control signal; and an output unit that outputs the control signal generated by the calculation unit, the calculation unit: calculates, based on the first image data acquired by the first imaging apparatus capturing the object during a relative movement between the object and the first and second imaging apparatuses, a first position that includes at least one of a position of the object in at least one direction of a first direction parallel to a first axis, a second direction parallel to a second axis, and a third direction parallel to a third axis and a pose of the object around at least one axis of the first axis, the second axis, and the third axis in a first coordinate system that is defined by the first axis, the second axis, and the third axis that are orthogonal to one another; calculates, based on shape data that is generated from the second image data acquired by the second imaging apparatus capturing the object during the relative movement and that indicates a three-dimensional shape of the object, a second position that includes at least one of a position of the object in at least one direction of a fourth direction parallel to a fourth axis, a fifth direction parallel to a fifth axis, and a sixth direction parallel to a sixth axis and a pose of the object around at least one axis of the fourth axis, the fifth axis, and the sixth axis in a second coordinate system that is defined by the fourth axis, the fifth axis, and the sixth axis that are orthogonal to one another and that is different from the first coordinate system; and generates the control signal based on the first position and the second position, the output unit outputs, in a first predetermined cycle, the control signal generated by the calculation unit based on the first position and the second position.

A second aspect provides a control system that includes: the control apparatus provided by the first aspect; the first imaging apparatus; and the second imaging apparatus.

A third aspect provides a robot system that includes: the control apparatus provided by the first aspect; the first imaging apparatus; the second imaging apparatus; and the robotic arm.

A fourth aspect provides a control method that generates a control signal for controlling a robotic arm, wherein a process apparatus that performs a process on an object, a first imaging apparatus that outputs first image data, and a second imaging apparatus that outputs second image data are mounted to the robotic arm, the robotic arm moves the process apparatus, the first imaging apparatus, and the second imaging apparatus, wherein the control method includes: calculating, based on the first image data acquired by the first imaging apparatus capturing the object during a relative movement between the object and the first and second imaging apparatuses, a first position that includes at least one of a position of the object in at least one direction of a first direction parallel to a first axis, a second direction parallel to a second axis, and a third direction parallel to a third axis and a pose of the object around at least one axis of the first axis, the second axis, and the third axis in a first coordinate system that is defined by the first axis, the second axis, and the third axis that are orthogonal to one another; calculating, based on shape data that is generated from the second image data acquired by the second imaging apparatus capturing the object during the relative movement and that indicates a three-dimensional shape of the object, a second position that includes at least one of a position of the object in at least one direction of a fourth direction parallel to a fourth axis, a fifth direction parallel to a fifth axis, and a sixth direction parallel to a sixth axis and a pose of the object around at least one axis of the fourth axis, the fifth axis, and the sixth axis in a second coordinate system that is defined by the fourth axis, the fifth axis, and the sixth axis that are orthogonal to one another and that is different from the first coordinate system; generating the control signal based on the first position and the second position; and outputting, in a predetermined cycle, the control signal generated based on the first position and the second position.

A fifth aspect provides a computer program that allows a computer to execute the control method provided by the fourth aspect.

An operation and another advantage of the present invention will be apparent from an example embodiment described below.

### Brief Description of Drawings

[FIG. 1] FIG. 1 is a block diagram that illustrates a configuration of a robot system in a present example embodiment.
[FIG. 2] FIG. 2 is a side view that illustrates an external appearance of a robot in the present example embodiment.
[FIG. 3] FIG. 3 is a block diagram that illustrates a configuration of a control apparatus in a present example embodiment.
[FIG. 4] FIG. 4 is a flowchart that illustrates a flow of a robot control processing.
[FIG. 5] Each of FIG. 5A to FIG. 5D is a side view that illustrates a positional relationship between the robot and a workpiece at a certain timing in a period during which a picking process, which is for picking the workpiece placed on a placing apparatus that moves on a support surface, is performed.
[FIG. 6] Each of FIG. 6A to FIG. 6D is a side view that illustrates a positional relationship between the robot and the workpiece at a certain timing in a period during which a placing process, which is for placing the workpiece on a placing apparatus that moves on the support surface, is performed.
[FIG. 7] FIG. 7 is a block diagram that illustrates a logical processing block for calculating a position of the workpiece W by performing a matching processing and a tracking processing.
[FIG. 8] FIG. 8 schematically illustrates a 2D matching processing.
[FIG. 9] FIG. 9 is a timing chart that illustrates a relationship between a timing at which a imaging apparatus generates a workpiece image and a timing at which a 2D matching unit performs the 2D matching processing.
[FIG. 10] FIG. 10 schematically illustrates a 3D matching processing.
[FIG. 11] FIG. 11 is a timing chart that illustrates a relationship between the timing at which the imaging apparatus generates the workpiece image and a timing at which a 3D matching unit performs the 3D matching processing.
[FIG. 12] FIG. 12 schematically illustrates 3D matching target data that is a part of workpiece shape data.
[FIG. 13] FIG. 13 schematically illustrates a 2D tracking processing.
[FIG. 14] FIG. 14 is a timing chart that illustrates a relationship between the timing at which the imaging apparatus generates the workpiece image and a timing at which a 2D tracking unit performs the 2D tracking processing.
[FIG. 15] FIG. 15 schematically illustrates a 3D tracking processing.
[FIG. 16] FIG. 16 is a timing chart that illustrates a relationship between the timing at which the imaging apparatus generates the workpiece image and a timing at which a 3D tracking unit performs the 3D tracking processing.
[FIG. 17] FIG. 17 is a timing chart that illustrates a relationship between the timing at which the 2D matching unit performs the 2D matching processing and the timing at which the 2D tracking unit performs the 2D tracking processing.
[FIG. 18] FIG. 18 is a block diagram that illustrates a configuration of a control apparatus in a first modified example.
[FIG. 19] FIG. 19 schematically illustrates a planar surface removing processing.
[FIG. 20] FIG. 20 is a block diagram that illustrates a configuration of an imaging unit.
[FIG. 21] FIG. 21 schematically illustrates a High-Dynamic-Range rendering processing.
[FIG. 22] FIG. 22 schematically illustrates a de-noise processing.
[FIG. 23] FIG. 23 is a block diagram that illustrates a configuration of a robot system in a second modified example.
[FIG. 24] FIG. 24 is a block diagram that illustrates a configuration of a robot system in a third modified example.

### Example Embodiments

Next, with reference to drawings, an example embodiment of a control apparatus, a control system, a robot system, a control method, and a computer program will be described. In the below described description, the example embodiment of the control apparatus, the control system, the robot system, the control method, and the computer program will be described by using a robot system SYS.

### (1) Configuration of Robot System SYS

Firstly, a configuration of the robot system SYS will be described.

### (1-1) Entire Configuration of Robot System SYS

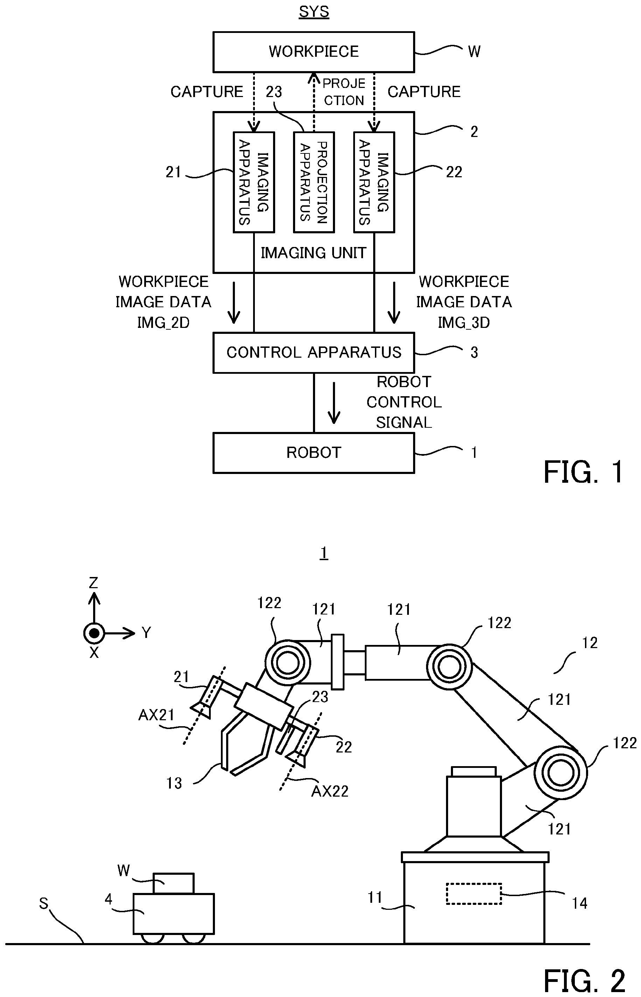

Firstly, with reference to FIG.1 , an entire configuration of the robot system SYS will be described. FIG. 1 is a block diagram that illustrates the entire configuration of the robot system SYS.

As illustrated in FIG. 1, the robot system SYS includes: a robot 1; an imaging unit 2, and a control apparatus 3.

The robot 1 is an apparatus that is configured to perform a predetermined process on a workpiece W that is one example of an object. One example of the robot 1 is illustrated in FIG. 2. FIG. 2 is a side view that illustrates an external appearance of the robot 1. As illustrated in FIG. 2, the robot 1 includes: a base 11; a robotic arm 12, an end effector 13, and a robot control apparatus 14, for example.

The base 11 is a member that is a foundation of the robot 1. The base 11 is placed on a support surface S, such as a floor. The base 11 may be fixed to the support surface S. Alternatively, the base 11 may be movable relative to the support surface S. As one example, the base 11 may be configured to be self-propelled on the support surface S. In this case, the base 11 may be mounted on an Automatic Guided Vehicle (AGV). FIG. 2 illustrates an example in which the base 11 is fixed to the support surface S.

The robotic arm 12 is attached to the base 11. The robotic arm 12 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the apparatus in which the plurality of links 121 connected through the joint 122 and the base 11 may be referred to as the robotic arm 12.

The end effector 13 is attached to the robotic arm 12. In an example illustrated in FIG. 2, the end effector 13 is attached to an end of the robotic arm 12. The end effector 13 is movable by a movement of the robotic arm 12. Namely, the robotic arm 12 moves the end effector 13.

The end effector 13 is an apparatus that performs a predetermined process on the workpiece W. For example, the end effector 13 may perform a picking process for picking the workpiece W. For example, the end effector 13 may perform a placing process for placing the workpiece W that has been picked by the end effector 13 at a desired position. For example, the end effector 13 may perform a fitting process for fitting the workpiece W that has been picked by the end effector 13 into another object different from the workpiece W. At least one of a hand gripper that is configured to pick the workpiece W by physically clamping the workpiece W and a vacuum gripper that is configured to pick the workpiece W by vacuum-sucking the workpiece W is one example of the end effector 13 that performs at least one of the picking process, the placing process, and the fitting process. FIG. 2 illustrates an example in which the end effector 13 is the hand gripper.

Note that FIG. 2 illustrates an example in which the robot 1 is a robot including the robotic arm 12 (namely, a vertically articulated robot). However, the robot 1 may be a robot that is different from the vertically articulated of robot. For example, the robot 1 may be a SCARA robot (namely, a horizontally articulated robot). For example, the robot 1 may be a parallel link robot. For example, the robot 1 may be a dual-armed robot including two robotic arms 12. For example, the robot 1 may be a Cartesian coordinate robot.

The workpiece W, on which the end effector 13 performs the predetermined process, may be placed on a placing apparatus 4. The placing apparatus 4 may be disposed on the support surface S. The placing apparatus 4 may be fixed to the support surface S. Alternatively, the placing apparatus 4 may be movable relative to the support surface S. As one example, the placing apparatus 4 may be configured to be self-propelled on the support surface S. Note that FIG. 2 illustrates an example in which the placing apparatus 4 is configured to be self-propelled on the support surface S. In this case, the placing apparatus 4 may be referred to as an Automatic Guided Vehicle (AGV). Note that the placing apparatus 4 may be referred to as a conveyor belt.

The robot control apparatus 14 controls an operation of the robot 1. As one example, the robot control apparatus 14 may control an operation of the robotic arm 12. For example, the robot control apparatus 14 may control an operation of the robotic arm 12 so that the desired link 121 rotates around an axis defined by the desired joint 122. The robot control apparatus 14 may control the operation of the robotic arm 12 so that the end effector 13 attached to the robotic arm 12 is located at (in other words, moved to) a desired position. As another example, the robot control apparatus 14 may control an operation of the end effector 13. For example, the robot control apparatus 14 may control the operation of the end effector 13 so that the end effector 13 picks the workpiece W at a desired timing. For example, the robot control apparatus 14 may control the operation of the end effector 13 so that the end effector 13 places the workpiece W at a desired position (namely, releases the workpiece W that has been picked) at a desired timing. In a case where the end effector 13 is the hand gripper, the robot control apparatus 14 may control a timing at which the hand gripper opens and closes. In a case where the end effector 13 is the vacuum gripper, the robot control apparatus 14 may control a timing at which a vacuum of the vacuum gripper is turned on and turned off.

Again in FIG. 1, the imaging unit 2 captures a target object (for example, the workpiece W). In order to capture the workpiece W, the imaging unit 2 includes an imaging apparatus 21, an imaging apparatus 22, and a projection apparatus 23.

The imaging apparatus 21 is a camera that is configured to capture the target object (for example, the workpiece W). The imaging apparatus 21 generates workpiece image data IMG_2D by capturing the workpiece W. The workpiece image data IMG_2D generated by the imaging apparatus 21 is outputted from the imaging apparatus 21 to the control apparatus 3. In the present example embodiment, the imaging apparatus 21 is a monocular camera. Specifically, the imaging apparatus 21 is configured to capture the workpiece W by using the monocular camera (in other words, an imaging element). Note that the imaging apparatus 21 is not limited to the monocular camera. The imaging apparatus 21 may be a stereo camera that is configured to capture the workpiece W by using two monocular cameras, or may include three or more monocular cameras. Note that the imaging apparatus 21 may be at least one of a light field camera, a plenoptic camera, and a multispectral camera.

The imaging apparatus 22 is a camera that is configured to capture the target object (for example, the workpiece W), as with the imaging apparatus 21. In the present example embodiment, the imaging apparatus 22 is a stereo camera. Specifically, the imaging apparatus 22 is the stereo camera that is configured to capture the workpiece W by using two monocular cameras (in other words, two imaging elements). The imaging apparatus 22 generates workpiece image data IMG_3D by capturing f the workpiece W. Specifically, since the imaging apparatus 22 is the stereo camera, the imaging apparatus 22 generates the workpiece image data IMG_3D that includes two image data generated by the two monocular cameras, respectively. The workpiece image data IMG_3D generated by the imaging apparatus 22 is outputted from the imaging apparatus 22 to the control apparatus 3. Note that the imaging apparatus 22 is not limited to the stereo camera. The imaging apparatus 22 may be a monocular camera or may include three or more monocular cameras. Note that the imaging apparatus 22 may be at least one of a light field camera, a plenoptic camera, and a multispectral camera.

The projection apparatus 23 is an apparatus that is configured to irradiate the target object (for example, the workpiece W) with projection light. Especially, the projection apparatus 23 is an apparatus that is configured to project a desired projection pattern on the workpiece W by irradiating the workpiece W with the projection light. The desired projection pattern may include a random pattern, for example. The random pattern may be a projection pattern having different patterns in unit irradiation areas, respectively. The random pattern may include a random dot pattern. The desired projection pattern is not limited to the random pattern, but may include a one-dimensional or two-dimensional grid pattern, or may include a pattern that is different from the grid pattern, for example. The imaging apparatus 22 captures the workpiece W on which the projection pattern is projected. In this case, the workpiece W on which the projection pattern is projected is included in the image indicated by the workpiece image data IMG_3D. On the other hand, the imaging apparatus 21 may not capture the workpiece W on which the projection pattern is projected. The imaging apparatus 21 may capture the workpiece W on which the projection pattern is not projected. In this case, the workpiece W on which the projection pattern is projected may not be included in the image indicated by the workpiece image data IMG_2D. The image indicated by the workpiece image data IMG_2D may include the workpiece W on which the projection pattern is not projected.

Note that the projection apparatus 23 may be considered to illuminate the workpiece W with the projection light by irradiating the workpiece W with the projection light. In this case, the projection apparatus 23 may serve as an illumination apparatus that illuminates the workpiece W. In a case where the projection apparatus 23 serves as the illumination apparatus, the projection light may be referred to as illumination light. In a case where the projection apparatus 23 serves as the illumination apparatus, the projection light may not be that light capable of projecting the desired projection pattern on the workpiece W.

The imaging unit 2 is mounted on the robotic arm 12, as with the end effector 13. Namely, the imaging apparatuses 21 and 22 and the projection apparatus 23 are attached to the robotic arm 12. For example, as illustrated in FIG. 2, the imaging apparatuses 21 and 22 and the projection apparatus 23 may be attached to an end of the robotic arm 12, as with the end effector 13. In this case, the imaging apparatuses 21 and 22 and the projection apparatus 23 are movable by the movement of the robotic arm 12. Namely, the robotic arm 12 moves the imaging apparatuses 21 and 22 and the projection apparatus 23. Note that the imaging unit 2 may not be mounted on the robotic arm 12. The imaging unit 2 may be mounted at any position at which it can irradiate the workpiece W with the projection light and it can capture the workpiece W. Note that at least one of the imaging apparatuses 21 and 22 and the projection apparatus 23 may be mounted on the robotic arm 12, and at least other one of the imaging apparatuses 21 and 22 and the projection apparatus 23 may be mounted at a position that is different from the robotic arm 12.

The imaging apparatuses 21 and 22 may capture the workpiece W in synchronization with each other. For example, the imaging apparatuses 21 and 22 may capture the workpiece W simultaneously. Namely, the imaging apparatuses 21 and 22 may capture the workpiece W so that a timing at which the imaging apparatus 21 captures of the workpiece W is the same as a timing at which the imaging apparatus 22 captures the workpiece W. However, the imaging apparatuses 21 and 22 may not capture the workpiece W simultaneously. Namely, the imaging apparatuses 21 and 22 may capture the workpiece W so that the timing at which the imaging apparatus 21 captures the workpiece W is different from the timing at which the imaging apparatus 22 captures the workpiece W.

The control apparatus 3 performs a robot control processing. The robot control processing is a processing for generating a robot control signal for controlling the robot 1. Specifically, the control apparatus 3 generates the robot control signal based on the workpiece image data IMG_2D and IMG_3D outputted from the imaging unit 2. In the present example embodiment, the control apparatus 3 calculates a position of the workpiece W in a global coordinate system of the robot system SYS based on the workpiece image data IMG_2D and IMG_3D, and generates the robot control signal based on the calculated position of the workpiece W. For example, it can be said that the global coordinate system is a coordinate system based on the robot 1. Note that the control apparatus 3 may calculate the position of the workpiece W in a coordinate system (for example, in a 2D imaging coordinate system, a 3D imaging coordinate system, or a common coordinate system described below) different from the global coordinate system of the robot system SYS based on the workpiece image data IMG_2D and IMG_3D, and generate the robot control signal based on the calculated position of the workpiece W.

Thus, the control apparatus 3 and the imaging unit 2 are used to control the robot 1. For this reason, a system including the control apparatus 3 and the imaging unit 2 may be referred to as a robot control system or a control system.

The robot control signal generated by the control apparatus 3 is outputted to the robot control apparatus 14 of the robot 1. The robot control apparatus 14 controls the operation of the robot 1 (for example, controls a driving of the actuator built in the joint 122 of the robotic arm 12) based on the robot control signal generated by the control apparatus 3. Therefore, the robot control signal may include a signal for controlling the operation of the robot 1.

The robot control signal may include a signal that is used as it is by the robot control apparatus 14 to control the operation of the robot 1. The robot control signal may include a signal that is usable as it is as a robot driving signal that is used by the robot control apparatus 14 to control the operation of the robot 1. In this case, the robot control apparatus 14 may use the robot control signal as it is to control the operation of the robot 1. Specifically, for example, the control apparatus 3 may generate a driving signal of the actuator built in the joint 122 of the robotic arm 12 as the robot control signal, and the robot control apparatus 14 may use the robot control signal generated by the control apparatus 3 (namely, the driving signal of the actuator built in the joint 122 of the robotic arm 12) as it is to control the actuator built in the joint 122 of the robotic arm 12. As a result, the robot control apparatus 14 can move the robotic arm 12. For example, the control apparatus 3 may generate a driving signal of the actuator that moves the end effector 13 attached to the robotic arm 12 as the robot control signal, and the robot control apparatus 14 may use the robot control signal generated by the control apparatus 3 (namely, the driving signal of the actuator for moving the end effector 13) as it is to control the actuator for moving the end effector 13. As a result, the robot control apparatus 14 can move the end effector 13.

Alternatively, the robot control signal may include a signal that is usable by the robot control apparatus 14 to generate the robot driving signal for controlling the operation of the robot 1. Incidentally, it can be said that the signal that is usable by the robot control apparatus 14 to generate the robot driving signal for controlling the operation of the robot 1 is a signal based on which the robot control apparatus 14 controls the operation of the robot 1. In this case, the robot control apparatus 14 may generate a signal for controlling the operation of the robot 1 based on the robot control signal and control the operation of the robot 1 based on the generated signal. For example, the robot control apparatus 14 may generate the driving signal of the actuator built in the joint 122 of the robotic arm 12, based on the robot control signal, and control the actuator built in the joint 122 of the robotic arm 12 based on the generated signal. As a result, the robot control apparatus 14 can move the robotic arm 12. For example, the robot control apparatus 14 may generate the driving signal of the actuator for moving the end effector 13 based on the robot control signal, and control the actuator for moving the end effector 13 based on the generated signal. As a result, the robot control apparatus 14 can move the end effector 13.

Note that the signal that is usable by the robot control apparatus 14 to generate the robot driving signal for controlling the operation of the robot 1 may be a signal indicating the position of the workpiece W in the global coordinate system. In this case, for example, the robot control apparatus 14 may generate the driving signal of the actuator built in the robot joint 122 of the robotic arm 12 based on the robot control signal so that the end effector 13 moves closer to the workpiece W in the global coordinate system indicated by the robot control signal (namely, a positional relationship between the robot 1 and the workpiece W is a desired positional relationship), and control the operation of the robot 1 based on the generated signal. Note that the signal that is usable by the robot control apparatus 14 to generate the robot driving signal for controlling the operation of the robot 1 may be a signal indicating the desired positional relationship between the robot 1 and the workpiece W in the global coordinate system. In this case, for example, the robot control apparatus 14 may generate the driving signal of the actuator built in the robot joint 122 of the robotic arm 12 based on the robot control signal so as to realize the desired positional relationship between the robot 1 and the workpiece W indicated by the robot control signal, and control the operation of the robot 1 based on the generated signal. Note that the signal that is usable by the robot control apparatus 14 to generate the robot driving signal for controlling the operation of the robot 1 may be a signal indicating a desired position of the end effector 13 in the global coordinate system. In this case, for example, the robot control apparatus 14 may generate the driving signal of the actuator built in the robot joint 122 of the robotic arm 12 based on the robot control signal so as to realize the desired position of the end effector 13 in the global coordinate system (namely, the positional relationship between the robot 1 and the workpiece W is the desired positional relationship), and control the operation of the robot 1 based on the generated signal. As one example, the robot control apparatus 14 may generate the driving signal of the actuator built in the robot joint 122 of the robotic arm 12 based on the robot control signal so that the end effector 13 moves to a position at which the end effector 13 can pick the workpiece W located at the position indicated by the robot control signal, and control the operation of the robot 1 based on the generated signal. As another example, the robot control apparatus 14 may generate the driving signal of the actuator built in the robot joint 122 of the robotic arm 12 based on the robot control signal so that the end effector 13, which has picked the workpiece W located at the position indicated by the robot control signal, moves away from the placing apparatus 4 on which the workpiece W was placed, and control the operation of the robot 1 based on the generated signal. Note that the signal that is usable by the robot control apparatus 14 to generate the robot driving signal for controlling the operation of the robot 1 may be a signal indicating a desired position of a desired end of a desired robotic arm 12 in the global coordinate system, or a signal indicating a desired position of the imaging unit 2 in the global coordinate system. Note that the coordinate system used as a base in the robot control signal may be a coordinate system (for example, the 2D imaging coordinate system, the 3D imaging coordinate system, or the common coordinate system described below) other than the global coordinate system.

### (1-2) Configuration of Control Apparatus 3

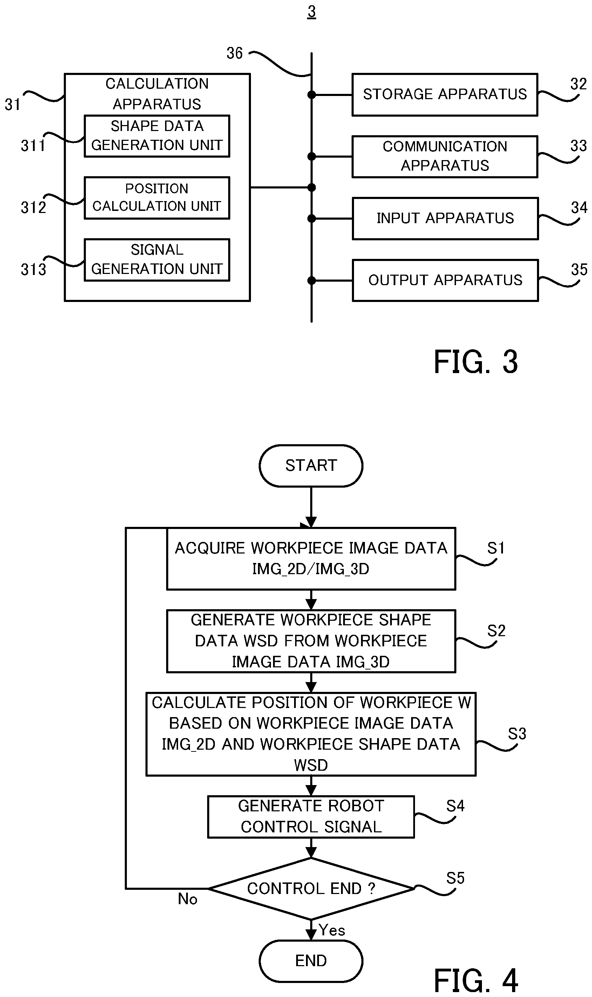

Next, with reference to FIG. 3, a configuration of the control apparatus 3 will be described. FIG. 3 is a block diagram that illustrates the configuration of the control apparatus 3.

As illustrated in FIG. 3, the control apparatus 3 includes a calculation apparatus 31, a storage apparatus 32, and a communication apparatus 33. Furthermore, the control apparatus 3 may include an input apparatus 34 and an output apparatus 35. However, the control apparatus 3 may not include at least one of the input apparatus 34 and the output apparatus 35. The calculation apparatus 31, the storage apparatus 32, the communication apparatus 33, the input apparatus 34, and the output apparatus 35 may be connected through a data bus 36.

The calculation apparatus 31 may include at least one of a CPU (Central Processing Unit), a GPU (Graphic Processing Unit), and a FPGA (Field Programmable Gate Array), for example. The calculation apparatus 31 reads a computer program. For example, the calculation apparatus 31 may read the computer program recorded in the storage apparatus 32. For example, the calculation apparatus 31 may read the computer program recorded in a non-transitory computer-readable recording medium by using a non-illustrated recording medium reading apparatus of the control apparatus 3. The calculation apparatus 31 may obtain (namely, download or read) the computer program from a non-illustrated apparatus external to the control apparatus 3 through the communication apparatus 33 (alternatively, other communication apparatus). The calculation apparatus 31 executes the read computer program. As a result, a logical functional block for performing an operation that should be performed by the control apparatus 3 (for example, the above-described robot control processing) is implemented in the calculation apparatus 31. Namely, the calculation apparatus 31 is configured to serve as a controller for implementing the logical functional block for performing the operation that should be performed by the control apparatus 3.

An arithmetic model that is buildable by machine learning may be implemented in the calculation apparatus 31 by the calculation apparatus 31 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The calculation apparatus 31 may perform the robot control processing by using the arithmetic model. Namely, an operation for performing the robot control processing may include an operation for performing the robot control processing by using the arithmetic model. Note that the arithmetic model that has been built by off-line machine learning using training data may be implemented in the calculation apparatus 31. Moreover, the arithmetic model implemented in the calculation apparatus 31 may be updated by online machine learning on the calculation apparatus 31. Alternatively, the calculation apparatus 31 may perform the operation that should be performed by the control apparatus 3 by using the arithmetic model implemented in an apparatus external to the calculation apparatus 31 (namely, the arithmetic model implemented in an apparatus external to the control apparatus 3), in addition to or instead of the arithmetic model implemented in the calculation apparatus 31.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the calculation apparatus 31. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the control apparatus 3 by means of the control apparatus 3 (namely, a computer) executing the computer program, may be realized by a hardware such as a predetermined gate array (a FPGA, an ASIC) of the control apparatus 3, or may be realized in a form in which the logical process block and a partial hardware module that realizes a partial element of the hardware are combined.

FIG. 3 illustrates an example of a logical functional block realized in the calculation apparatus 31 to execute the robot control processing. As illustrated in FIG. 3, a shape data generation unit 311, a position calculation unit 312, and a signal generation unit 313 are implemented in the calculation apparatus 31. Note that an operation performed by each of the shape data generation unit 311, the position calculation unit 312, and the signal generation unit 313 will be described in detail later with reference to FIG. 4 and so on, and a description thereof is omitted here.

The storage apparatus 32 is configured to store desired data. For example, the storage apparatus 32 may temporarily store the computer program that is executed by the calculation apparatus 31. The storage apparatus 32 may temporarily store data temporarily used by the calculation apparatus 31 in a case where the calculation apparatus 31 executes the computer program. The storage apparatus 32 may store data stored for a long term by the control apparatus 3. The storage apparatus 32 may include at least one of a RAM, a ROM, a hard disk apparatus, a magneto-optical disc, a SSD and a disk array apparatus. Namely, the storage apparatus 32 may include a non-transitory recording medium.

The communication apparatus 33 is configured to communicate with each of the robot 1 and the imaging unit 2 through a no-illustrated communication network. Alternatively, the communication apparatus 33 may be configured to communicate with other apparatus that is different from the robot 1 and the imaging unit 2, in addition to or instead of at least one of the robot 1 and the imaging unit 2, through an non-illustrated communication network. In the present example embodiment, the communication apparatus 33 may receive (namely, acquire) the workpiece image data IMG_2D and IMG_3D from the imaging unit 2. Furthermore, the communication apparatus 33 may transmit (namely, output) the robot control signal to the robot 1.

The input apparatus 34 is an apparatus that is configured to receive an input of information from an outside of the control apparatus 3 to the control apparatus 3. For example, the input apparatus 34 may include an operating apparatus (for example, at least one of a keyboard, a mouse, and a touch panel) that is operable by a user of the control apparatus 3. For example, the input apparatus 34 may include a recording medium reading apparatus that is configured to read information recorded as data on a recording medium that is attachable to the control apparatus 3.

Incidentally, information is allowed to be inputted to the control apparatus 3 as data from the apparatus external to the control apparatus 3 through the communication apparatus 33. In this case, the communication apparatus 33 may serve as an input apparatus that receives an input of information to the control apparatus 3 from outside of the control apparatus 3.

The output apparatus 35 is an apparatus that outputs information to the outside of the control apparatus 3. For example, the output apparatus 35 may output the information as an image. Namely, the output apparatus 35 may include a display apparatus (a so-called display) that is configured to display an image. For example, the output apparatus 35 may output the information as audio. Namely, the output apparatus 35 may include an audio apparatus (so-called a speaker) that is configured output the audio. For example, the output apparatus 35 may output the information on a paper. Namely, the output apparatus 35 may include a printing apparatus (so-called a printer) that is configured to print desired information on the paper. For example, the output apparatus 35 may output the information as data on a recording medium that is attachable to the control apparatus 3.

Incidentally, the control apparatus 3 is allowed to output the information as the data to the apparatus external to the control apparatus 3 through the communication apparatus 33. In this case, the communication apparatus 33 may serve as an output apparatus that outputs the information to the apparatus external to the control apparatus 3.

### (2) Robot Control Processing

Next, the robot control processing performed by the control apparatus 3 will be described.

### (2-1) Flow of Robot Control Processing

Firstly, with reference to FIG. 4, a flow of the robot control processing will be described. FIG. 4 is a flowchart that illustrates the flow of the robot control processing.

As illustrated in FIG. 4, the control apparatus 3 acquires the workpiece image data IMG_2D from the imaging apparatus 21 by using the communication apparatus 33 (a step S1). Specifically, the imaging apparatus 21 captures the workpiece W at a predetermined 2D imaging rate. For example, the imaging apparatus 21 may capture the workpiece W at the 2D imaging rate, at which the workpiece W is captured tens of times to hundreds of times (as one example, 500 times) per second. As a result, the imaging apparatus 21 generates the workpiece image data IMG_2D in a cycle based on the predetermined 2D imaging rate. For example, the imaging apparatus 21 may generate tens to hundreds of (as one example, 500) workpiece image data IMG_2D per second. The control apparatus 3 acquires the workpiece image data IMG_2D each time the imaging apparatus 21 generates the workpiece image data IMG_2D. Namely, the control apparatus 3 may acquire tens to hundreds of (as one example, 500) workpiece image data IMG_2D in one second.

The control apparatus 3 further acquires the workpiece image data IMG_3D from the imaging apparatus 22 by using the communication apparatus 33 (the step S1). Specifically, the imaging apparatus 22 captures the workpiece W at a predetermined 3D imaging rate. The 3D imaging rate is the same as the 2D imaging rate. However, the 3D imaging rate may be different from the 2D imaging rate. For example, the imaging apparatus 22 may capture the workpiece W at the 3D imaging rate, at which the workpiece W is captured tens of times to hundreds of times (as one example, 500 times) per second. As a result, the imaging apparatus 22 generates the workpiece image data IMG_3D in a cycle based on the predetermined 3D imaging rate. For example, the imaging apparatus 22 may generate tens to hundreds of (as one example, 500) workpiece image data IMG_3D per second. The control apparatus 3 acquires the workpiece image data IMG_3D each time the imaging apparatus 22 generates the workpiece image data IMG_3D. Namely, the control apparatus 3 may acquire tens to hundreds of (as one example, 500) workpiece image data IMG_3D in one second.

Each time the control apparatus 3 acquires the workpiece image data IMG_3D, the shape data generation unit 311 generates workpiece shape data WSD, which indicates a three-dimensional shape of the workpiece W, based on the acquired workpiece image data IMG_3D (a step S2). As described above, the image indicated by the workpiece image data IMG_3D includes the workpiece W on which the projection pattern is projected. In this case, the projection pattern in the image indicated by the workpiece image data IMG_3D reflects the three-dimensional shape of the workpiece W on which the projection pattern is projected. A shape of the projection pattern in the image indicated by the workpiece image data IMG_3D reflects the three-dimensional shape of the workpiece W on which the projection pattern is projected. Therefore, the shape data generation unit 311 generates the workpiece shape data WSD based on the projection pattern included in the image indicated by the workpiece image data IMG_3D. For example, the shape data generation unit 311 calculates parallax by performing a matching for each part (for example, each pixel) between the images indicated by the two image data included in the workpiece image data IMG_3D, respectively. Specifically, in this matching, the shape data generation unit 311 calculates the parallax by performing the matching for each part of the projection pattern included in the images indicated by the two image data, respectively (namely, each part between the projection patterns included in the images, respectively). The shape data generation unit 311 generates the workpiece shape data WSD (namely, calculates the three-dimensional shape of the workpiece W) by using a well-known method based on a principle of triangulation using the calculated parallax. A calculation accuracy of the parallax is higher in a case where the matching for each part between images in which the projection pattern is included (namely, for each part between the projection patterns) is performed, compared to a case where the matching for each part between images in which the projection pattern is not included is performed. Therefore, an accuracy of the generated workpiece shape data WSD (namely, a calculation accuracy of the three-dimensional shape of the workpiece W) is higher.

The workpiece shape data WSD may be any data as long as it can indicate the three-dimensional shape of the workpiece W. Depth image data is one example of the workpiece shape data WSD. The depth image data is an image in which not only brightness information but also depth information is associated with each pixel of a depth image indicated by the depth image data. The depth information is information that indicates a distance between each part of an object included in each pixel and the imaging apparatus 22 (namely, a depth). Note that the depth image data may be an image in which the brightness information of each pixel indicates the depth of each part of the object (the distance between each part of the object and the imaging apparatus 22). The shape data generation unit 311 may calculate the distance between the imaging apparatus 22 and each part of the object included in the image indicated by the workpiece image data IMG_3D based on the projection pattern included in the image indicated by the workpiece image data IMG_3D, and associates the calculated distance to each pixel of the workpiece image data IMG_3D as the depth information to generate the depth image. Point cloud date is another example of the workpiece shape data WSD. The point cloud data is data indicating a set of points, each of which corresponds to each part of the object included in the image indicated by the workpiece image data IMG_3D, in a three-dimensional space. The shape data generation unit 311 may generate the point cloud data based on the depth image data and a camera parameter of the imaging apparatus 22.

Then, the position calculation unit 312 calculates a position of the workpiece W based on the workpiece image data IMG_2D acquired at the step S1 and the workpiece shape data WSD generated at the step S2 (a step S3). For example, the position calculation unit 312 may calculate the position of a feature point of the workpiece W. At least one of a center of the workpiece W, a center of gravity of the workpiece W, a vertex of the workpiece W, a center of a surface of the workpiece W, and a center of gravity of the surface of the workpiece W is one example of the feature point of the workpiece W.

At the step S3, the position calculation unit 312 calculates the position of the workpiece W in a global coordinate system. The global coordinate system is a coordinate system that is a basis for the robot system SYS. Specifically, the global coordinate system is a coordinate system that is used to control the robot 1. For example, the robot control apparatus 14 may control the robotic arm 12 so that the end effector 13 is located at a desired position in the global coordinate system. The global coordinate system is a coordinate system that is defined by an X-axis(GL), a Y-axis(GL) and a Z-axis(GL) that are orthogonal to one another. The X-axis(GL) may be an axis along a horizontal plane. The Y-axis(GL) may be an axis along the horizontal plane. The Z-axis(GL) may be an axis orthogonal to the horizontal plane. The Z-axis(GL) may be an axis extending along a gravity direction. Note that a X-axis, a Y-axis, and a Z-axis illustrated in FIG. 2 may be the X-axis(GL), the Y-axis(GL), and the Z-axis(GL), respectively. Note that an origin of the global coordinate system may not be an origin of the X-axis(GL), the Y-axis(GL), and the Z-axis(GL) illustrated in FIG. 2. For example, the origin of the global coordinate system may be any position of the base 11 in FIG. 2, any position of the support surface S, or any position of a contact surface of the base 11 to the support surface S (for example, a center or a center of gravity of the contact surface).

The position calculation unit 312 may calculate, as the position of the workpiece W in the global coordinate system, at least one of a position Tx of the workpiece W in the X-axis direction(GL) parallel to the X-axis(GL), a position Ty of the workpiece W in the Y-axis direction(GL) parallel to the Y-axis(GL), a position Tz of the workpiece W in the Z-axis direction(GL) parallel to the Z-axis(GL). The position calculation unit 312 may calculate, as the position of the workpiece W in the global coordinate system, a rotational amount Rx of the workpiece W around the X-axis(GL), a rotational amount Ry of the workpiece W around the Y-axis(GL), and a rotational amount Rz of the workpiece W around the Z-axis(GL), in addition to or instead of the positions Tx, Ty, and Tz. The rotational amount Rx of the workpiece W around the X-axis(GL), the rotational amount Ry of the workpiece W around the Y-axis(GL), and the rotational amount Rz of the workpiece W around the Z-axis(GL) may be considered to be equivalent to a parameter representing a pose of the workpiece W around the X-axis(GL), a parameter representing a pose of the workpiece W around the Y-axis(GL), and a parameter representing a pose of the workpiece W around the Z-axis(GL), respectively. In this case, the position calculation unit 312 may be considered to calculate, as the position of the workpiece W, the pose of the workpiece W around the X-axis(GL), the pose of the workpiece W around the Y-axis(GL), and the pose of the workpiece W around the Z-axis(GL).

Incidentally, the rotational amount Rx of the workpiece W around the X-axis(GL), the rotational amount Ry of the workpiece W around the Y-axis(GL), and the rotational amount Rz of the workpiece W around the Z-axis(GL) may be considered to represent a position of the workpiece W in a rotational direction around the X-axis(GL), a position of the workpiece W in a rotational direction around the Y-axis(GL), and a position of the workpiece W in a rotational direction around the Z-axis(GL), respectively. Namely, each of the rotational amount Rx of the workpiece W around the X-axis(GL), the rotational amount Ry of the workpiece W around the Y-axis(GL), and the rotational amount Rz of the workpiece W around the Z-axis(GL) may be regarded as a parameter representing the position of the workpiece W. In the below-described description, for the purpose of consistency of terms, the rotational amount Rx of the workpiece W around the X-axis(GL), the rotational amount Ry of the workpiece W around the Y-axis(GL), and the rotational amount Rz of the workpiece W around the Z-axis(GL) are referred to as the position Rx of the workpiece W in the rotational direction around the X-axis(GL), the position Ry of the workpiece W in the rotational direction around the Y-axis(GL), and the position Rz of the workpiece W in the rotational direction around the Z-axis(GL), respectively.

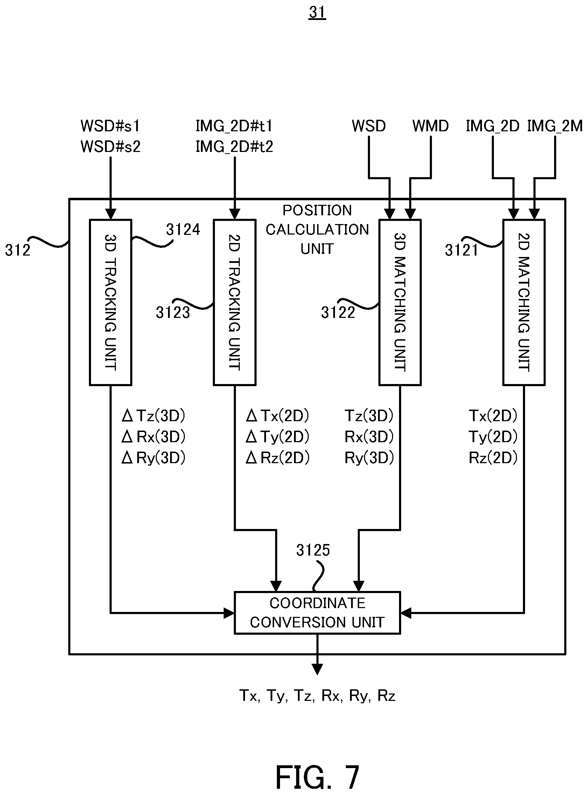

Incidentally, a processing for calculating the position of the workpiece W in the global coordinate system at the step S3 of FIG. 4 will be described in detail later with reference to FIG. 7 and so on, and the description thereof is omitted here.

Then, the signal generation unit 313 generates the robot control signal based on the position of the workpiece W calculated at the step S3 (a step S4). For example, the signal generation unit 313 may generate the robot control signal so that the robot 1 performs the predetermined process on the workpiece W. For example, the signal generation unit 313 may generate the robot control signal so that the positional relationship between the robot 1 and the workpiece W is the desired positional relationship. For example, the signal generation unit 313 may generate the robot control signal for controlling the operation of the robotic arm 12 so that the positional relationship between the robot 1 and the workpiece W is the desired positional relationship. For example, the signal generation unit 313 may generate the robot control signal so that the end effector 13 performs the predetermined process on the workpiece W at a timing at which the positional relationship between the robot 1 and the workpiece W is the desired positional relationship. For example, the signal generation unit 313 may generate the robot control signal for controlling the operation of the end effector 13 so that the end effector 13 performs the predetermined process on the workpiece W at a timing at which the positional relationship between the robot 1 and the workpiece W is the desired positional relationship. Incidentally, it can be said that the robot control signal for controlling the operation of the end effector 13 is an end effector control signal.

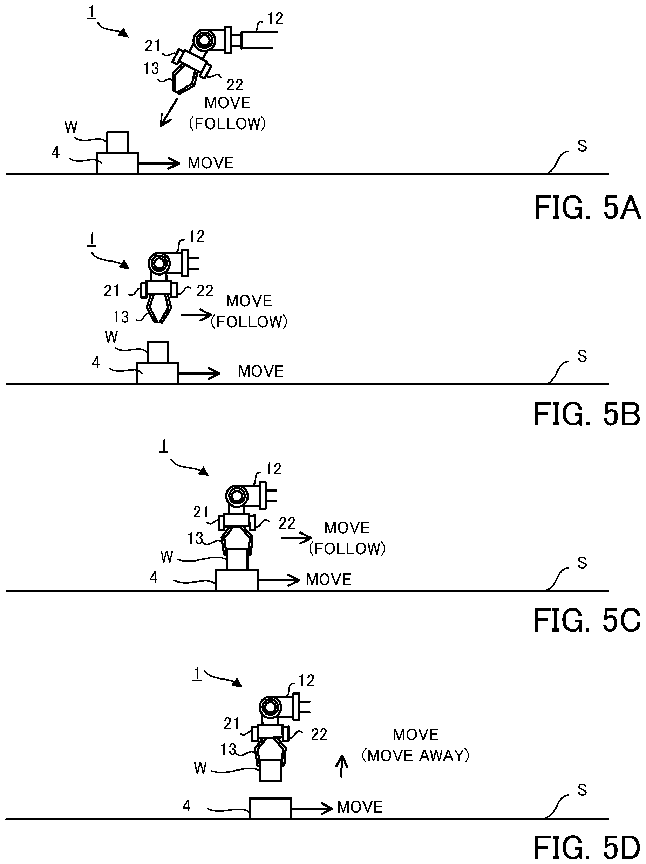

As one example, each of FIG. 5A to FIG. 5D is a side view that illustrates the positional relationship between the robot 1 and the workpiece W at a certain timing in a period during which the picking process for picking the workpiece W placed on the placing apparatus 4 such as the Automatic Guided Vehicle (AGV) moving on the support surface S is performed. In this case, as illustrated in FIG. 5A, the signal generation unit 313 may generate the robot control signal for controlling the operation of the robotic arm 12 so that the end effector 13 moves toward a space directly above the moving workpiece W. As illustrated in FIG. 5B, the signal generation unit 313 may generate the robot control signal for controlling the operation of the robotic arm 12 so that the end effector 13, which is located directly above the moving workpiece W, remains directly above the workpiece W and moves closer to the workpiece W until it can pick the workpiece W. As illustrated in FIG. 5C, the signal generation unit 313 may generate the robot control signal for controlling the operations of the robotic arm 12 and the end effector 13 so that the end effector 13, which is located at a position where it can pick the moving workpiece W, picks the workpiece W while following the moving workpiece W. As illustrated in FIG. 5D, the signal generation unit 313 may generate the robot control signal for controlling the operations of the robotic arm 12 and end effector 13 so that the end effector 13, which has picked the workpiece W, moves away from the moving workpiece W while picking the workpiece W.

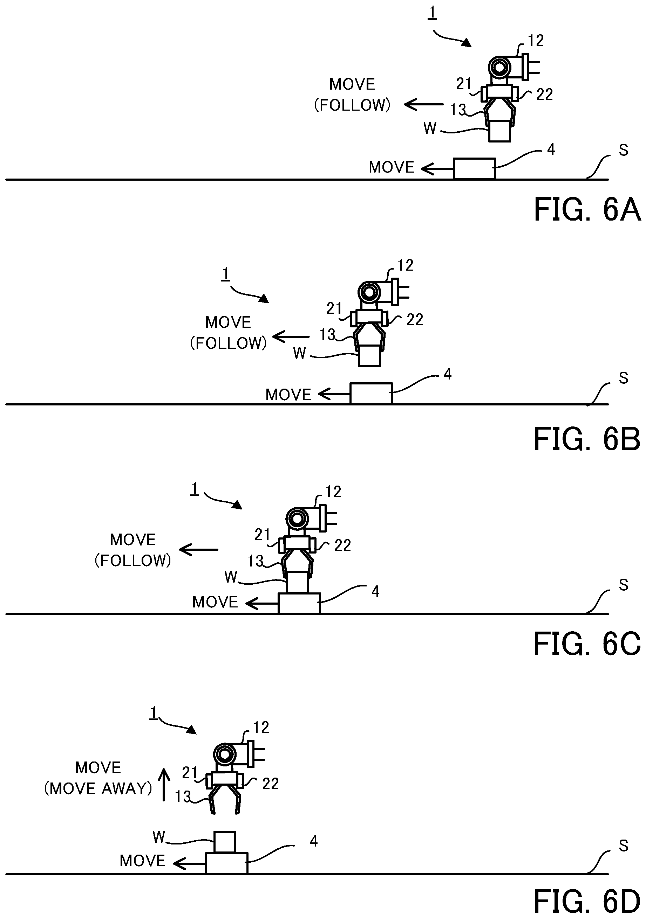

Incidentally, in a case where the robot 1 picks the workpiece W by using the end effector 13, the robot 1 may place the picked workpiece W on the placing apparatus 4. Namely, the robot 1 may perform the placing process for placing the workpiece W on the placing apparatus 4. In this case, the control apparatus 3 may calculate a position of the placing apparatus 4 (for example, a position of a part of the placing apparatus 4 on which the workpiece W is to be placed) by performing an operation that is the same as the operation performed in a case where the position of the workpiece W is calculated, and generate the robot control signal based on the calculated position of the placing apparatus 4. Specifically, the imaging apparatus 21 may generate the workpiece image data IMG_2D in which the placing apparatus 4 is included by capturing the placing apparatus 4. Incidentally, in a case where the imaging apparatus 21 captures an object different from the workpiece W, the workpiece image data IMG_2D generated by the imaging apparatus 21 may be image data indicating an image in which the object different from the workpiece W is included or in which the workpiece W is not included. Moreover, the imaging apparatus 22 may generate the workpiece image data IMG_3D in which the placing apparatus 4 is included by capturing the placing apparatus 4. Incidentally, in a case where the imaging apparatus 22 captures an object different from the workpiece W, the workpiece image data IMG_3D generated by the imaging apparatus 22 may be image data indicating an image in which the object different from the workpiece W is included or in which the workpiece W is not included. The control apparatus 3 may calculate the position of the placing apparatus 4 based on the workpiece image data IMG_2D and IMG_3D generated by capturing the placing apparatus 4, and generate the robot control signal based on the calculated position of the placing apparatus 4 so that the robot 1 performs the placing process. For example, each of FIG. 6A to FIG. 6D is a side view that illustrates the positional relationship between the robot 1 and the workpiece W at a certain timing in a period during which the placing process for placing the workpiece W on the placing apparatus 4 moving on the support surface S is performed. In this case, as illustrated in FIG. 6A, the signal generation unit 313 may generate, based on the calculated position of the placing apparatus 4, the robot control signal for controlling the operation of the robotic arm 12 so that the end effector 13, which is holding the workpiece W, moves toward a space directly above the moving placing apparatus 4 while holding the workpiece W. As illustrated in FIG. 6B, the signal generation unit 313 may generate, based on the calculated position of the placing apparatus 4, the robot control signal for controlling the operation of the robotic arm 12 so that so that the end effector 13, which is located directly above the moving placing apparatus 4 and is holding the workpiece W, moves closer to the placing apparatus 4 until the workpiece W can be placed on the placing apparatus 4 while locating directly above the placing apparatus 4 and holding the workpiece W. As illustrated in FIG. 6C, the signal generation unit 313 may generate, based on the calculated position of the placing apparatus 4, the robot control signal for controlling the operations of the robotic arm 12 and the end effector 13 so that the end effector 13, which is located at a position where it can place the workpiece W on the placing apparatus, places the workpiece W on the placing apparatus 4 (namely, releases the picked workpiece W) while following the moving placing apparatus 4. As illustrated in FIG. 6D, the signal generation unit 313 may generate, based on the calculated position of the placing apparatus 4, the robot control signal for controlling the operation of the robotic arm 12 so that the end effector 13, which has finished placing the workpiece W on the placing apparatus 4, moves away from the placing apparatus 4.

As can be seen from the description of FIG. 6A to FIG. 6D, in the present example embodiment, the target object whose position is calculated by the control apparatus 3 is not limited to the workpiece W, but may include any object different from the workpiece W (in the example illustrated in FIG. 6A to FIG. 6D, the placing apparatus 4). In this case, the imaging apparatus 21 may capture the target object and generate the workpiece image data IMG_2D indicating the image in which the target object is included. Note that the workpiece image data IMG_2D indicating the image in which the target object is included may be referred to simply as image data IMG_2D. Moreover, the imaging apparatus 22 may capture the target object and generate the workpiece image data IMG_3D indicating the image in which the target object is included. Note that the workpiece image data IMG_3D indicating the image in which the target object is included may be referred to simply as image data IMG_3D. Moreover, the shape data generation unit 311 of the control apparatus 3 may generate the workpiece shape data WSD indicating the three-dimensional shape of the target object based on the workpiece image data IMG_3D. Note that the workpiece shape data WSD indicating the three-dimensional shape of the target object may be referred to simply as shape data WSD. The position calculation unit 312 of the control apparatus 3 may calculate the position of the target object based on the workpiece image data IMG_2D and the workpiece shape data WSD. The signal generation unit 313 of the control apparatus 3 may generate the robot control signal based on the position of the target object. For example, the signal generation unit 313 may generate the robot control signal so that the end effector 13 moves closer to the target object. For example, the signal generation unit 313 may generate the robot control signal so that the end effector 13 follows the moving target object. For example, the signal generation unit 313 may generate the robot control signal so that the end effector 13 moves away from the target object. Incidentally, it can be said that the target object whose position is calculated by the control apparatus 3 is the target object on which the end effector 13 performs the process.

The signal generation unit 313 outputs the robot control signal generated at the step S4 to the robot 1 (especially, the robot control apparatus 14) by using the communication apparatus 33. As a result, the robot control apparatus 14 controls the operation of the robot 1 (for example, the operation of at least one of the robotic arm 12 and the end effector 13) based on the robot control signal.

Thereafter, the control apparatus 3 repeats a series of processing from the step S1 to the step S4 until it is determined that the robot control processing is ended (a step S5). Namely, the control apparatus 3 continues to acquire the workpiece image data IMG_2D and IMG_3D from the imaging apparatuses 21 and 22, respectively, in a period during which the operation of the robot 1 is controlled based on the robot control signal. In this case, since the operation of the robot 1 is controlled based on the robot control signal as described above, each of the imaging apparatuses 21 and 22 may capture the target object (for example, the workpiece W) during a relative movement between the target object (for example, the workpiece W) and the imaging apparatuses 21 and 22. For example, each of the imaging apparatuses 21 and 22 may capture the target object (for example, workpiece W) in a period during which the target object (for example, workpiece W) is stationary while the imaging apparatuses 21 and 22 are moving. For example, each of the imaging apparatuses 21 and 22 may capture the target object (for example, workpiece W) in a period during which the target object (for example, workpiece W) is moving while the imaging apparatuses 21 and 22 are stationary. For example, each of the imaging apparatuses 21 and 22 may capture the target object (for example, workpiece W) in a period during which the target object (for example, workpiece W) is moving while the imaging apparatuses 21 and 22 are moving. Namely, the control apparatus 3 may continue to perform the robot control processing illustrated in FIG. 4 during the relative movement between the target object (for example, workpiece W) and the imaging apparatuses 21 and 22 (namely, in a period during which at least one of the imaging apparatuses 21 and 22 and the target object (for example, workpiece W) is moving). As a result, the control apparatus 3 can newly calculate (namely, update) the position of the target object (for example, workpiece W) based on the newly acquired workpiece image data IMG_2D and IMG_3D even in the period during which the operation of the robot 1 is controlled based on the robot control signal. However, each of the imaging apparatuses 21 and 22 may capture the target object (for example, workpiece W) in a period during which the target object (for example, workpiece W) is stationary and the imaging apparatuses 21 and 22 are stationary. The control apparatus 3 may perform the robot control processing illustrated in FIG. 4 in a period during which the imaging apparatuses 21 and 22 and the target object (for example, workpiece W) are stationary.

Note that the position calculation unit 312 may not calculate the position of the target object (for example, workpiece W) in the global coordinate system at the step S3. For example, the position calculation unit 312 may calculate the position of the target object (for example, workpiece W) in a coordinate system different from the global coordinate system (for example, in a 2D imaging coordinate system, in a 3D imaging coordinate system, or in a common coordinate system described below) at the step S3. In this case, the signal generation unit 313 may generate the robot control signal at the step S4 based on the position of the target object (for example, workpiece W) in the coordinate system different from the global coordinate system calculated at the step S3.

### (2-2) Detail of Processing for Calculating Position of Target Object

Next, a detail of the processing for calculating the position of the target object at the step S3 in FIG. 4 will be described. Incidentally, in the below-described description, for convenience of description, a detail of the processing for calculating the position of the workpiece W, which is one example of the target object, will be described. However, the position calculation unit 312 may calculate the position of any target object by performing the same operation as the processing for calculating the position of the workpiece W. Namely, the below-described description of the processing for calculating the position of the workpiece W may be used as a description of the processing for calculating the position of the target object by replacing the term "workpiece W" with the term "target object".

In the present example embodiment, the position calculation unit 312 calculates the position of the workpiece W by performing a matching processing using the workpiece image data IMG_2D and the workpiece shape data WSD and a tracking processing using the workpiece image data IMG_2D and the workpiece shape data WSD. In the below-described description, with reference to FIG. 7, the processing for calculating the position of the workpiece W by performing the matching processing and the tracking processing will be described. FIG. 7 is a block diagram that illustrates the logical processing block for calculating the position of the workpiece W by performing the matching processing and the tracking processing.

As illustrated in FIG. 7, the position calculation unit 312 includes a 2D matching unit 3121, a 3D matching unit 3122, a 2D tracking unit 3123, a 3D tracking unit 3124, and a coordinate conversion unit 3125. The 2D matching unit 3121 performs a 2D matching processing, which is one example of the matching processing. The 3D matching unit 3122 performs a 3D matching processing, which is one example of the matching processing. The 2D tracking unit 3123 performs a 2D tracking processing, which is one example of the tracking processing. The 3D tracking unit 3124 performs a 3D tracking processing, which is one example of the tracking processing. The coordinate conversion unit 3125 performs a position calculation processing for calculating the position of the workpiece W in the global coordinate system based on results of the matching processing and the tracking processing. Therefore, in the below-described description, the 2D matching processing, the 3D matching processing, the 2D tracking processing, the 3D tracking processing, and the position calculation processing will be described in order.

### (2-2-1) 2D Matching Processing performed by 2D Matching Unit 3121

The 2D matching unit 3121 performs, as the 2D matching processing, the matching processing using the workpiece image data IMG_2D. The matching processing using the workpiece image data IMG_2D is a matching processing using the workpiece image data IMG_2D and reference image data IMG_2M.

The reference image data IMG_2M is image data that indicates a two-dimensional image that is a reference of the workpiece W. The reference image data IMG_2M may be image data indicating a plurality of two-dimensional images that are generated by virtually capturing a three-dimensional model of the workpiece W (for example, a CAD model generated by a CAD (Computer Aided Design)) from a plurality of different imaging directions, respectively, for example. Note that the reference image data IMG_2M may be image data indicating a two-dimensional image acquired by capturing the actual workpiece W in advance. In this case, the reference image data IMG_2M may be image data indicating a plurality of two-dimensional images that are generated by capturing the actual workpiece W from a plurality of different imaging directions, respectively. Note that the actual workpiece W captured in advance may be a reference or good workpiece W.

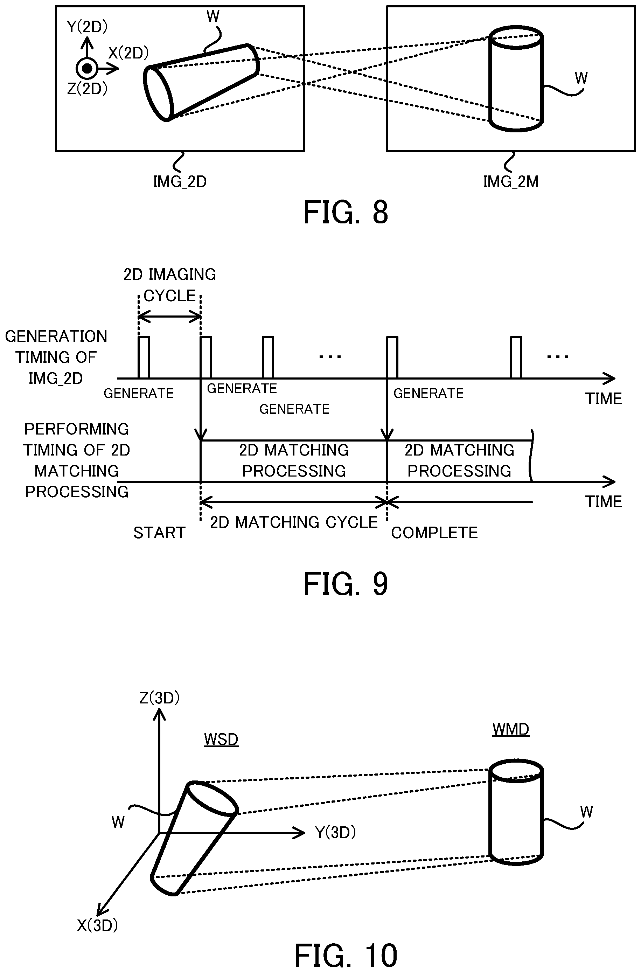

As illustrated in FIG. 8, the 2D matching unit 3121 may perform a matching processing, which uses the workpiece W included in the two-dimensional image indicated by the reference image data IMG_2M as a template, for the workpiece image data IMG_2D. Note that the matching processing itself may be the same as an existing matching processing. For this reason, a detailed description of the matching processing is omitted, however, its overview will be described here. For example, the 2D matching unit 3121 may translate, scale and / or rotate the workpiece W included in the two-dimensional image indicated by the reference image data IMG_2M so that a feature part (for example, at least one of the feature point and an edge) in the entire workpiece W included in the two-dimensional image indicated by the reference image data IMG_2M is closer to (typically, matches) a feature part in the entire workpiece W included in the image indicated by the workpiece image data IMG_2D. Namely, the 2D matching unit 3121 may change a positional relationship between a coordinate system of the reference image data IMG_2M (for example, a coordinate system of the CAD model) and the 2D imaging coordinate system based on the imaging apparatus 21 that captures the workpiece W so that the feature part in the entire workpiece W included in the two-dimensional image indicated by the reference image data IMG_2M is closer to (typically, matches) the feature part in the entire workpiece W included in the image indicated by the workpiece image data IMG_2D. As a result, the 2D matching unit 3121 can determine the positional relationship between the coordinate system of the reference image data IMG_2M and the 2D imaging coordinate system. Then, the 2D matching unit 3121 may calculate a position of the workpiece W in the 2D imaging coordinate system from a position of the workpiece W in the coordinate system of the reference image data IMG_2M based on the positional relationship between the coordinate system of the reference image data IMG_2M and the 2D imaging coordinate system. Note that the 2D matching unit 3121 may change the positional relationship between the coordinate system of the reference image data IMG_2M (for example, the coordinate system of the CAD model) and the 2D imaging coordinate system based on the imaging apparatus 21 that captures the workpiece W so that the feature part in a part of the workpiece W included in the two-dimensional image indicated by the reference image data IMG_2M is closer to (typically, matches) the feature part in a part of the workpiece W included in the image indicated by the workpiece image data IMG_2D. Incidentally, as the matching processing using the workpiece image data IMG_2D, a well-known method that is at least one of a SIFT (Scale-Invariant Feature Transform) and a SURF (Speed-Upped Robust Feature) may be used, for example.

Incidentally, the method of calculating the position of the workpiece W is not limited to the matching processing using the workpiece image data IMG_2D described above, but may be any other well-known method of calculating the position of the workpiece W by using the workpiece image data IMG_2D. The method of calculating the position of the workpiece W may be a well-known method of calculating the position of the workpiece W based on the workpiece image data IMG_2D without using the reference image data IMG_2M, or may be a well-known method of calculating the position of the workpiece W by using the workpiece image data IMG_2D and data that is different from the reference image data IMG_2M. For example, the method of calculating the position of the workpiece W may be a method of calculating the position of the workpiece W based on the workpiece image data IMG_2D by a machine learning or a deep learning. In this case, a prediction model, which outputs the position of the workpiece W when the workpiece image data IMG_2D is inputted thereto, may be built by the machine learning or the deep learning, and the position of the workpiece W may be calculated by inputting the workpiece image data IMG_2D to this prediction model. This prediction model may be stored in the 2D matching unit 3121. Note that the 2D matching unit 3121 may read out this prediction model stored in the storage apparatus 32.

The 2D imaging coordinate system is a coordinate system that is defined by an X-axis(2D), a Y-axis(2D), and a Z-axis(2D) that are orthogonal to one another. At least one of the X-axis(2D), the Y-axis(2D), and the Z-axis(2D) may be an axis that is along an optical axis AX21

(see FIG. 2) of an optical system (especially, an terminal optical element such as an objective lens) of the imaging apparatus 21. Incidentally, it can be said that the optical axis AX21 is an optical axis of the imaging apparatus 21. In the below-described description, an example in which the Z-axis(2D) is the axis along the optical axis of the optical system of the imaging apparatus 21 will be described. The 2D matching unit 3121 may calculate, as the position of the workpiece W in the 2D imaging coordinate system, at least one of a position Tx(2D) of the workpiece W in a X-axis direction(2D) that is parallel to the X-axis(2D), a position Ty(2D) of the workpiece W in a Y-axis direction(2D) that is parallel to the Y-axis(2D), and a position Tz(2D) of the workpiece W in a Z-axis direction(2D) that is parallel to the Z-axis(2D). The 2D matching unit 3121 may calculate, as the position of the workpiece W in the 2D imaging coordinate system, at least one of a rotational amount Rx(2D) of the workpiece W around the X-axis(2D), the rotational amount Ry(2D) of the workpiece W around the Y-axis(2D), and the rotational amount Rz(2D) of the workpiece W around the Z-axis(2D), in addition to or instead of at least one of the positions Tx(2D), Ty(2D), and Tz(2D). The rotational amount Rx(2D) of the workpiece W around the X-axis(2D), the rotational amount Ry(2D) of the workpiece W around the Y-axis(2D), and the rotational amount Rz(2D) of the workpiece W around the Z-axis(2D) may be considered to be equivalent to a parameter representing a pose of the workpiece W around the X-axis(2D), a parameter representing a pose of the workpiece W around the Y-axis(2D), and a parameter representing a pose of the workpiece W around the Z-axis(2D), respectively. In this case, the position calculation unit 312 may be considered to calculate, as the position of the workpiece W, the pose of the workpiece W around the X-axis(2D), the pose of the workpiece W around the Y-axis(2D), and the pose of the workpiece W around the Z-axis(2D).

Incidentally, in the below-described description, for the purpose of consistency of terms, the rotational amount Rx(2D) of the workpiece W around the X-axis(2D), the rotational amount Ry(2D) of the workpiece W around the Y-axis(2D), and the rotational amount Rz(2D) of the workpiece W around the Z-axis(2D) are referred to as a position Rx(2D) of the workpiece W in the rotational direction around the X-axis(2D), a position Ry(2D) of the workpiece W in the rotational direction around the Y-axis(2D), and a position Rz(2D) of the workpiece W in the rotational direction around the Z-axis(2D), respectively, as with the rotational amounts Rx, Ry, and Rz described above.

The 2D matching unit 3121 may calculate at least one position, whose accuracy is relatively higher than that of the position of the workpiece W calculated by the 3D matching unit 3122, among the position Tx(2D), the position Ty(2D), the position Tz(2D), the position Rx(2D), the position Ry(2D), and the position Rz(2D). On the other hand, the 2D matching unit 3121 may not calculate at least other one position, whose accuracy is relatively lower than that of the position of the workpiece W calculated by the 3D matching unit 3122, among the position Tx(2D), the position Ty(2D), the position Tz(2D), the position Rx(2D), the position Ry(2D), and the position Rz(2D). For example, the 2D matching unit 3121 performs the matching processing using the workpiece image data IMG_2D and the reference image data IMG_2M that do not include information of the position in the Z-axis direction(2D). In this case, the position Tx(2D), the position Ty(2D), and the position Rz(2D) can be calculated with relatively high accuracy without using the information of the position in the Z-axis direction(2D). In this case, there is a possibility that the accuracies of the position Tx(2D), the position Ty(2D), and the position Rz(2D) calculated by the 2D matching unit 3121 are higher than the accuracies of below-described position Tx(3D), position Ty(3D), and position Rz(3D) calculated by the 3D matching unit 3122, respectively. On the other hand, there is a possibility that it is not easy to calculate the position Tz(2D), the position Rx(2D), and the position Ry(2D) with high accuracy without using the information of the position in the Z-axis direction(2D). In this case, there is a possibility that the accuracies of the position Tz(2D), the position Rx(2D), and the position Ry(2D) calculated by the 2D matching unit 3121 are lower than the accuracies of below-described position Tz(3D), position Rx(3D), and position Ry(3D) calculated by the 3D matching unit 3122, respectively. Therefore, the 2D matching unit 3121 may calculate the position Tx(2D), the position Ty(2D), and the position Rz(2D). On the other hand, the 2D matching unit 3121 may calculate or may not calculate the position Tz(2D), the position Rx(2D), and the position Ry(2D). In the below-described description, an example in which the 2D matching unit 3121 calculates at least the position Tx(2D), the position Ty(2D), and the position Rz(2D) will be described.

As described in detail later, the control apparatus 3 calculates the position of the workpiece W in the global coordinate system by using the position Tx(2D), the position Ty(2D), and the position Rz(2D) whose accuracies are relatively high and which are calculated by 2D matching unit 3121. In this case, the control apparatus 3 can calculate the position of the workpiece W in the global coordinate system with relatively high accuracy, compared to a case where the position of the workpiece W in the global coordinate system is calculated by using the position whose accuracy is relatively low and which is calculated by 2D matching unit 3121.

Each time the position of the workpiece W is calculated, the 2D matching unit 3121 outputs information related to the calculated position of the workpiece W to the coordinate conversion unit 3125. As one example, the 2D matching unit 3121 may calculate all of the 6DOF (Degree Of Freedom) positions (namely, the position Tx(2D), the position Ty(2D), the position Tz(2D), the position Rx(2D), the position Ry(2D), and the position Rz(2D)), and output the information related to some of the calculated 6DOF positions (for example, the above-described position Tx(2D), position Ty(2D), and position Rz(2D) whose accuracies are relatively high) to the coordinate conversion unit 3125. As another example, the 2D matching unit 3121 may calculate some of the 6DOF positions and output the information related to the calculated some of the 6DOF positions to the coordinate conversion unit 3125. For example, the 2D matching unit 3121 may calculate the above-described position Tx(2D), position Ty(2D), and position Rz(2D) whose accuracies are relatively high and output information related to the position Tx(2D), the position Ty(2D), and the position Rz(2D) to the coordinate conversion unit 3125. As another example, the 2D matching unit 3121 may calculate all of the 6DOF positions and output information related to all of the calculated 6DOF positions to the coordinate conversion unit 3125. In this case, the coordinate conversion unit 3125 may calculate the 6DOF positions of the workpiece W by using all of the 6DOF positions outputted from the 2D matching unit 3121. Alternatively, the coordinate conversion unit 3125 may select some of the 6DOF positions outputted from the 2D matching unit 3121 (for example, the above-described position Tx(2D), position Ty(2D), and position Rz(2D) whose accuracies are relatively high) and calculate the 6DOF positions of the workpiece W by using the selected some of the 6DOF positions.

Here, the 2D matching unit 3121 may calculate the position of the workpiece W in a predetermined 2D matching cycle. Namely, the 2D matching unit 3121 may calculate the position of the workpiece W each time a period corresponding to the 2D matching cycle elapses. Conversely, it may be considered that the period corresponding to the 2D matching cycle is required for the 2D matching unit 3121 to complete the 2D matching processing after starting it. In this case, the 2D matching unit 3121 may output the information related to the position of the workpiece W to the coordinate conversion unit 3125 in the predetermined 2D matching cycle.

As illustrated in FIG. 9, the 2D matching cycle may be longer than a 2D imaging cycle corresponding to the 2D imaging rate at which the imaging apparatus 21 captures the workpiece W. For example, the 2D matching cycle may be a cycle that allows the 2D matching unit 3121 to perform the 2D matching processing dozen times to several dozen times (as one example, 15 times to 30 times) per second. In this case, the imaging apparatus 21 generates new workpiece image data IMG_2D before the 2D matching unit 3121 completes the 2D matching processing after starting it. In this case, the 2D matching unit 3121 may not start a new 2D matching processing using the workpiece image data IMG_2D newly generated by the imaging apparatus 21 even when the imaging apparatus 21 generates the new workpiece image data IMG_2D until the 2D matching unit 3121 completes the 2D matching processing that has already been started. The 2D matching unit 3121 may start a new 2D matching processing using the workpiece image data IMG_2D, which is latest at that time, after completing the 2D matching processing that has already been started. Note that a timing at which the workpiece image data IMG_2D is generated illustrated in FIG. 9 may be a timing at which the imaging apparatus 21 captures the workpiece W to generate the workpiece image data IMG_2D.

However, the 2D matching cycle may not be longer than the 2D imaging cycle. For example, the 2D matching cycle may be shorter than the 2D imaging cycle. For example, the 2D matching cycle may be the same as the 2D imaging cycle.

### (2-2-2) 3D Matching Processing performed by 3D Matching Unit 3122

The 3D matching unit 3122 performs, as the 3D matching processing, the matching processing using the workpiece shape data WSD. The matching processing using the workpiece shape data WSD is a matching processing using workpiece shape data WSD and reference shape data WMD. The reference shape data WMD is data that indicates a three-dimensional shape that is a reference of the workpiece W.

The reference shape data WMD may be data indicating a three-dimensional model (for example, the CAD model) of the workpiece W. Note that the data indicating the three-dimensional shape that is the reference of the workpiece W may be the depth image data, may be the point cloud data, or may be data indicating other three-dimensional shape that is the reference. Note that the reference shape data WMD may be data indicating the three-dimensional shape of the workpiece W acquired by measuring the actual shape of the workpiece W in advance. In this case, the reference shape data WMD may be generated in advance by the shape data generation unit 311 based on the workpiece image data IMG_3D generated by the imaging apparatus 22 capturing the workpiece W on which the projection pattern from the projection apparatus 23 is projected, or may be generated in advance by using a well-known shape measurement apparatus that is different from the robot system SYS. Note that the actual workpiece W captured or measured in advance to generate the reference shape data WSD may be a reference or good workpiece W.

As illustrated in FIG. 10, the 3D matching unit 3122 may perform a matching processing, which uses the workpiece W indicated by the reference shape data WMD as a template, for the workpiece shape data WSD. The matching processing itself may be the same as an existing matching processing. For this reason, a detailed description of the matching processing is omitted, however, its overview will be described here. For example, the 3D matching unit 3122 may translate, scale and / or rotate the workpiece W indicated by the reference shape data WMD so that the feature part in the entire workpiece W indicated by the workpiece shape data WSD is closer to (typically, matches) the feature part in the entire workpiece W indicated by the reference shape data WMD. Namely, the 3D matching unit 3122 may change a positional relationship between a coordinate system of the reference shape data WMD (for example, a coordinate system of the CAD model) and the 3D imaging coordinate system based on the imaging apparatus 22 that captures the workpiece W so that the feature part in the entire workpiece W indicated by the workpiece shape data WSD is closer to (typically, matches) the feature part in the entire workpiece W indicated by the reference shape data WMD. As a result, the 3D matching unit 3122 can determine the positional relationship between the coordinate system of the reference shape data WMD and the 3D imaging coordinate system. Then, the 3D matching unit 3122 may calculate a position of the workpiece W in the 3D imaging coordinate system from a position of the workpiece W in the coordinate system of the reference shape data WMD based on the positional relationship between the coordinate system of the reference shape data WMD and the 3D imaging coordinate system. Note that the 3D matching unit 3122 may change a positional relationship between the coordinate system of the reference shape data WMD (for example, the coordinate system of the CAD model) and the 3D imaging coordinate system based on the imaging apparatus 22 that captures the workpiece W so that the feature part in a part of the workpiece W indicated by the workpiece shape data WSD is closer to (typically, matches) the feature part in a part of the workpiece W indicated by the reference shape data WMD. Incidentally, as the matching processing using the workpiece shape data WSD, a well-known method that is at least one of a RANSAC (Random Sample Consensus), a SIFT (Scale-Invariant Feature Transform), a ICP (Iterative Closest Point), and a DSO (Direct Sparse Odometry) may be used, for example.

Incidentally, the method of calculating the position of the workpiece W is not limited to the matching processing using the workpiece shape data WSD described above, but may be any other well-known method of calculating the position of the workpiece W by using the workpiece shape data WSD. The method of calculating the position of the workpiece W may be a well-known method of calculating the position of the workpiece W based on the workpiece shape data WSD without using the reference shape data WMD, or may be a well-known method of calculating the position of the workpiece W by using the workpiece shape data WSD and data that is different from the reference shape data WMD. For example, the method of calculating the position of the workpiece W may be a method of calculating the position of the workpiece W based on the workpiece shape data WSD by a machine learning or a deep learning. In this case, a prediction model, which outputs the position of the workpiece W when the workpiece shape data WSD is inputted thereto, may be built by the machine learning or the deep learning, and the position of the workpiece W may be calculated by inputting the workpiece shape data WSD to this prediction model. This prediction model may be stored in the 3D matching unit 3122. Note that the 3D matching unit 3122 may read out this prediction model stored in the storage apparatus 32.

The 3D matching unit 3122 performs the 3D matching processing by using the above-described point group data as the workpiece shape data WSD. As a result, the calculation accuracy of the position of the workpiece W is higher than that in a case where the depth image data is used as the workpiece shape data WSD. In this case, the 3D matching unit 3122 uses point cloud data indicating the three-dimensional shape that is the reference of the workpiece W (for example, point cloud data indicating the CAD model) as the reference shape data WMD. However, the 3D matching unit 3122 may perform the 3D matching processing by using the above-described depth image data as the workpiece shape data WSD. In this case, the 3D matching unit 3122 may use depth image data indicating the three-dimensional shape that is the reference of the workpiece W (for example, depth image data indicating the CAD model) as the reference shape data WMD.

The 3D imaging coordinate system is a coordinate system that is defined by an X-axis(3D), a Y-axis(3D), and a Z-axis(3D) that are orthogonal to one another. At least one of the X-axis(3D), the Y-axis(3D), and the Z-axis(3D) may be an axis that is along an optical axis AX22 (see FIG. 2) of an optical system (especially, an terminal optical element such as an objective lens) of the imaging apparatus 22. Incidentally, it can be said that the optical axis AX22 is an optical axis of the imaging apparatus 22. Here, in a case where the imaging apparatus 22 is the stereo camera including the two monocular cameras as described above, the optical axis AX22 may be an optical axis of an optical system of one of the two monocular cameras. Namely, the optical axis AX22 may be an optical axis of one of the two monocular cameras. In the below-described description, an example in which the Z-axis(3D) is the axis along the optical axis of the optical system of the imaging apparatus 22 will be described. The 3D matching unit 3122 may calculate, as the position of the workpiece W in the 3D imaging coordinate system, at least one of a position Tx(3D) of the workpiece W in a X-axis direction(3D) that is parallel to the X-axis(3D), a position Ty(3D) of the workpiece W in a Y-axis direction(3D) that is parallel to the Y-axis(3D), and a position Tz(3D) of the workpiece W in a Z-axis direction(3D) that is parallel to the Z-axis(3D). The 3D matching unit 3122 may calculate, as the position of the workpiece W in the 3D imaging coordinate system, at least one of a rotational amount Rx(3D) of the workpiece W around the X-axis(3D), the rotational amount Ry(3D) of the workpiece W around the Y-axis(3D), and the rotational amount Rz(3D) of the workpiece W around the Z-axis(3D), in addition to or instead of at least one of the positions Tx(3D), Ty(3D), and Tz(3D). The rotational amount Rx(3D) of the workpiece W around the X-axis(3D), the rotational amount Ry(3D) of the workpiece W around the Y-axis(3D), and the rotational amount Rz(3D) of the workpiece W around the Z-axis(3D) may be considered to be equivalent to a parameter representing a pose of the workpiece W around the X-axis(3D), a parameter representing a pose of the workpiece W around the Y-axis(3D), and a parameter representing a pose of the workpiece W around the Z-axis(3D), respectively. In this case, 3D matching unit 3122 may be considered to calculate, as the position of the workpiece W, the pose of the workpiece W around the X-axis(3D), the pose of the workpiece W around the Y-axis(3D), and the pose of the workpiece W around the Z-axis(3D).

Incidentally, in the below-described description, for the purpose of consistency of terms, the rotational amount Rx(3D) of the workpiece W around the X-axis(3D), the rotational amount Ry(3D) of the workpiece W around the Y-axis(3D), and the rotational amount Rz(3D) of the workpiece W around the Z-axis(3D) are referred to as a position Rx(3D) of the workpiece W in the rotational direction around the X-axis(3D), a position Ry(3D) of the workpiece W in the rotational direction around the Y-axis(3D), and a position Rz(3D) of the workpiece W in the rotational direction around the Z-axis(3D), respectively, as with the rotational amounts Rx, Ry, and Rz described above.

The 3D matching unit 3122 may calculate at least one position, whose accuracy is relatively higher than that of the position of the workpiece W calculated by the 2D matching unit 3121, among the position Tx(3D), the position Ty(3D), the position Tz(3D), the position Rx(3D), the position Ry(3D), and the position Rz(3D). On the other hand, the 3D matching unit 3122 may not calculate at least other one position, whose accuracy is relatively lower than that of the position of the workpiece W calculated by the 2D matching unit 3121, among the position Tx(3D), the position Ty(3D), the position Tz(3D), the position Rx(3D), the position Ry(3D), and the position Rz(3D). For example, the 3D matching unit 3122 performs the matching processing using the workpiece shape data WSD and the reference shape data WMD that includes information of the position in the Z-axis direction(3D). In this case, the position Tz(3D), the position Rx(3D), and the position Ry(3D) can be calculated with relatively high accuracy by using the information of the position in the Z-axis direction(3D). In this case, there is a possibility that the accuracies of the position Tz(3D), the position Rx(3D), and the position Ry(3D) calculated by the 3D matching unit 3122 are higher than the accuracies of the position Tz(2D), the position Rx(2D), and the position Ry(2D) calculated by the 2D matching unit 3121, respectively. Therefore, the 3D matching unit 3122 may calculate the position Tz(3D), the position Rx(3D), and the position Ry(3D). On the other hand, the 3D matching unit 3122 may calculate or may not calculate the position Tx(3D), the position Ty(3D), and the position Rz(3D). In the below-described description, an example in which the 3D matching unit 3122 calculates at least the position Tz(3D), the position Rx(3D), and the position Ry(3D) will be described.

As described in detail later, the control apparatus 3 calculates the position of the workpiece W in the global coordinate system by using the position Tz(3D), the position Rx(3D), and the position Ry(3D) whose accuracies are relatively high and which are calculated by 3D matching unit 3122. In this case, the control apparatus 3 can calculate the position of the workpiece W in the global coordinate system with relatively high accuracy, compared to a case where the position of the workpiece W in the global coordinate system is calculated by using the position whose accuracy is relatively low and which is calculated by 3D matching unit 3122.

Each time the position of the workpiece W is calculated, the 3D matching unit 3122 outputs information related to the calculated position of the workpiece W to the coordinate conversion unit 3125. As one example, the 3D matching unit 3122 may calculate all of the 6DOF (Degree Of Freedom) positions (namely, the position Tx(3D), the position Ty(3D), the position Tz(3D), the position Rx(3D), the position Ry(3D), and the position Rz(3D)), and output the information related to some of the calculated 6DOF positions (for example, the above-described position Tz(3D), position Rx(3D), and position Ry(3D) whose accuracies are relatively high) to the coordinate conversion unit 3125. As another example, the 3D matching unit 3122 may calculate some of the 6DOF positions and output the information related to the calculated some of the 6DOF positions to the coordinate conversion unit 3125. For example, the 3D matching unit 3122 may calculate the above-described position Tz(3D), position Rx(3D), and position Ry(3D) whose accuracies are relatively high and output information related to the position Tz(3D), the position Rx(3D), and the position Ry(3D) to the coordinate conversion unit 3125. As another example, the 3D matching unit 3122 may calculate all of the 6DOF positions and output information related to all of the calculated 6DOF positions to the coordinate conversion unit 3125. In this case, the coordinate conversion unit 3125 may calculate the 6DOF positions of the workpiece W by using all of the 6DOF positions outputted from the 3D matching unit 3122. Alternatively, the coordinate conversion unit 3125 may select some of the 6DOF positions outputted from the 3D matching unit 3122 and calculate the 6DOF positions of the workpiece W by using the selected some of the 6DOF positions (for example, the above-described position Tz(3D), position Rx(3D), and position Ry(3D) whose accuracies are relatively high).

Here, the 3D matching unit 3122 may calculate the position of the workpiece W in a predetermined 3D matching cycle. Namely, the 3D matching unit 3122 may calculate the position of the workpiece W each time a period corresponding to the 3D matching cycle elapses. Conversely, it may be considered that the period corresponding to the 3D matching cycle is required for the 3D matching unit 3122 to complete the 3D matching processing after starting it. In this case, the 3D matching unit 3122 may output the information related to the position of the workpiece W to the coordinate conversion unit 3125 in the predetermined 3D matching cycle.

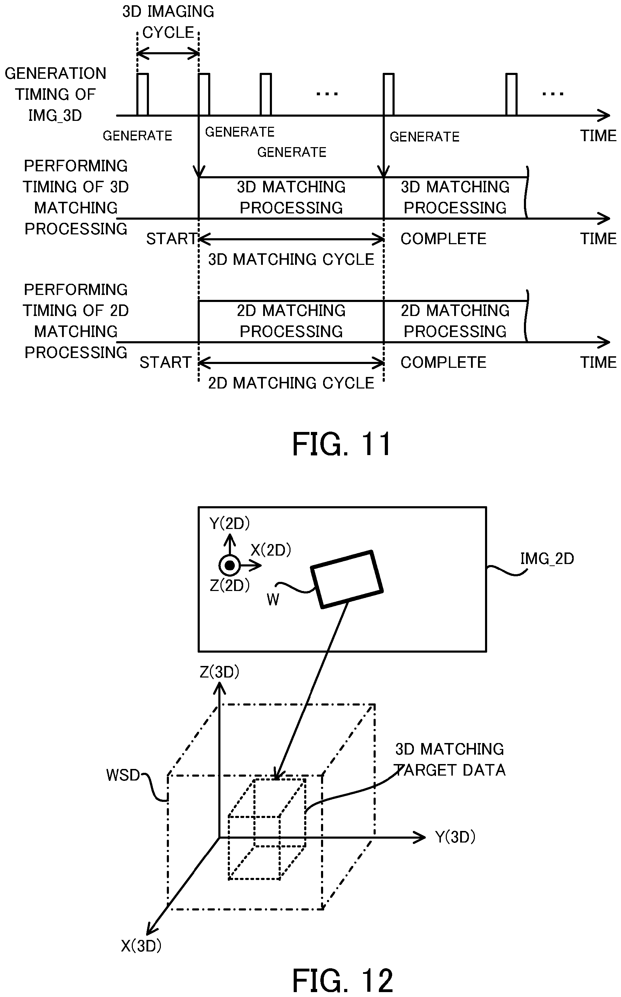

As illustrated in FIG. 11, the 3D matching cycle may be longer than a 3D imaging cycle corresponding to the 3D imaging rate at which the imaging apparatus 22 captures the workpiece W. For example, the 3D matching cycle may be a cycle that allows the 3D matching unit 3122 to perform the 3D matching processing several times to several dozen times (as one example, 1 times to 30 times) per second. In this case, the imaging apparatus 22 generates new workpiece image data IMG_3D before the 3D matching unit 3122 completes the 3D matching processing after starting it. In this case, the 3D matching unit 3122 may not start a new 3D matching processing using the workpiece image data IMG_3D newly generated by the imaging apparatus 22 even when the imaging apparatus 22 generates the new workpiece image data IMG_3D until the 3D matching unit 3122 completes the 3D matching processing that has already been started. The 3D matching unit 3122 may start a new 3D matching processing using the workpiece image data IMG_3D, which is latest at that time, after completing the 3D matching processing that has already been started. Note that a timing at which the workpiece image data IMG_3D is generated illustrated in FIG. 11 may be a timing at which the imaging apparatus 22 captures the workpiece W to generate the workpiece image data IMG_3D.

However, the 3D matching cycle may not be longer than the 3D imaging cycle. For example, the 3D matching cycle may be shorter than the 3D imaging cycle. For example, the 3D matching cycle may be the same as the 3D imaging cycle.

The 3D matching cycle may be the same as the 2D matching cycle. Specifically, a length of the 3D matching cycle may be the same as a length of the 2D matching cycle. Namely, a period required for the 3D matching unit 3122 to complete the 3D matching processing after starting it may be the same as a period required for the 2D matching unit 3121 to complete the 2D matching processing after starting it. Since the 2D matching unit 3121 starts the 2D matching processing after the imaging apparatus 21 captures the workpiece W and the 3D matching unit 3122 starts the 3D matching processing after the imaging apparatus 22 captures the workpiece W, a period from a timing when the imaging apparatus 21 captures the workpiece W to a timing when the 2D matching unit 3121 completes the 2D matching process (namely, calculates the position of the workpiece W) may be the same as a period from a timing when the imaging apparatus 22 captures the workpiece W to a timing when the 3D matching unit 3122 completes the 3D matching process (namely, calculates the position of the workpiece W). However, the 3D matching cycle may not be the same as the 2D matching cycle. For example, the length of the 3D matching cycle may be longer than the length of the 2D matching cycle. For example, the length of the 3D matching cycle may be shorter than the length of the 2D matching cycle.

In a case where the 3D matching cycle is the same as the 2D matching cycle, the 3D matching cycle may temporally overlap with the 2D matching cycle, as illustrated in second and third timing charts from the top in FIG. 11. Namely, a start time of the 3D matching cycle may be the same as a start time of the 2D matching cycle, and an end time of the 3D matching cycle may be the same as an end time of the 2D matching cycle. In other words, a time at which the 3D matching unit 3122 starts the 3D matching processing may be the same as a time at which the 2D matching unit 3121 starts the 2D matching processing, and a time at which the 3D matching unit 3122 completes the 3D matching processing may be the same as a time at which the 2D matching unit 3121 completes the 2D matching processing. However, the 3D matching cycle may not temporally overlap with the 2D matching cycle. The start time of the 3D matching cycle may be different from the start time of the 2D matching cycle by a predetermined period. The end time of the 3D matching cycle may be different from end time of the 2D matching cycle by a predetermined period. The time at which the 3D matching unit 3122 starts the 3D matching processing may be different from the time at which the 2D matching unit 3121 starts the 2D matching processing by a predetermined period. The time at which the 3D matching unit 3122 completes the 3D matching processing may be different from the time at which the 2D matching unit 3121 completes the 2D matching processing by a predetermined period.

Here, a data size of the workpiece shape data WSD and the reference shape data WMD used for the 3D matching processing is usually larger than a data size of the workpiece image data IMG_2D and the reference image data IMG_2M used for the 2D matching processing. Therefore, there is a possibility that the 3D matching cycle, which is the period required for the 3D matching unit 3122 to complete the 3D matching processing, may be longer than the 2D matching cycle, which is the period required for the 2D matching unit 3121 to complete the 2D matching processing. Therefore, the 3D matching unit 3122 may perform a processing for shortening the 3D matching cycle so that the 3D matching cycle is the same as the 2D matching cycle or so that the 3D matching cycle is shorter than the 2D matching cycle.

As one example, the 3D matching unit 3122 may select, based on a result of the 2D matching processing (for example, at least one of the position Tx(2D), the position Ty(2D), the position Tz(2D), the position Rx(2D), the position Ry(2D), and the position Rz(2D) described above), a partial data part of the workpiece shape data WSD data as 3D matching target data on which the 3D matching processing is performed. Specifically, a positional relationship between the 2D imaging coordinate system and the 3D imaging coordinate system depends on a positional relationship between the imaging apparatus 21 and the imaging apparatus 22. Therefore, the control apparatus 3 may store, in the storage apparatus 32, coordinate system information that indicates the positional relationship between the 2D imaging coordinate system and the 3D imaging coordinate system and that is generated based on the positional relationship between the imaging apparatus 21 and the imaging apparatus 22. The coordinate system information may include a conversion matrix for converting a position in one of the 2D imaging coordinate system and the 3D imaging coordinate system to a position in the other one of the 2D imaging coordinate system and the 3D imaging coordinate system. The conversion matrix may be calculated based on the positional relationship between the imaging apparatus 21 and the imaging apparatus 22. In this case, the control apparatus 3 may convert a position in one coordinate system of the 2D imaging coordinate systems and the 3D imaging coordinate system to a position in the other coordinate system of the 2D imaging coordinate system or the 3D imaging coordinate system based on the coordinate system information (especially, the conversion matrix). Therefore, the 3D matching unit 3122 may convert the position Tx(2D), the position Ty(2D), the position Tz(2D), the position Rx(2D), the position Ry(2D), and the position Rz(2D) to the position Tx(3D), the position Ty(3D), the position Tz(3D), the position Rx(3D), the position Ry(3D), and the position Rz(3D). Namely, as illustrated in FIG. 12, the 3D matching unit 3122 may estimate an area in which the workpiece W is estimated to exist in the 3D imaging coordinate system based on the result of the 2D matching processing. Then, the 3D matching unit 3122 may select, as the 3D matching target data, the partial data part of the workpiece shape data WSD that corresponds to the area in which the workpiece W is estimated to exist. Then, the 3D matching unit 3122 may perform the 3D matching processing on the 3D matching target data that is a part of the workpiece shape data WSD.

Here, there is a possibility that the workpiece shape data WSD includes not only a data part indicating the shape of the workpiece W, but also a data part indicating a shape of an object different from the workpiece W. This is because there is a possibility that not only the workpiece W but also the object different from the workpiece W are included in a field of view of the imaging apparatus 22 that generates the workpiece image data IMG_3D used to generate the workpiece shape data WSD. For example, there is a possibility that the workpiece shape data WSD includes not only the data part indicating the shape of the workpiece W but also a data part indicating a shape of the placing apparatus 4, because the workpiece shape data WSD is generated from the workpiece image data IMG_3D generated by the imaging apparatus 22 capturing the workpiece W placed on the placing apparatus 4. In this case, the 3D matching target data may be typically considered to be equivalent to data that is obtained by removing, from the workpiece shape data WSD, the data part indicating the shape of the object different from the workpiece W (namely, the object different from the target object). In other words, the 3D matching target data may be typically considered to be equivalent to data that is obtained by selectively extracting, from the workpiece shape data WSD, the data part indicating the shape of the workpiece W. As a result, the period required to complete the 3D matching processing performed on the 3D matching target data (namely, a part of the workpiece shape data WSD) is shorter than the period required to complete the 3D matching processing performed on the entire workpiece shape data WSD. This is because the period required to complete the 3D matching processing depends on the size of the data on which the 3D matching processing is performed. As a result, the 3D matching cycle is shorter than that in a case where the 3D matching processing is performed on the entire workpiece shape data WSD.

Note that an operation for selecting the 3D matching target data, which is a part of the workpiece shape data WSD, may be considered to be equivalent to an operation for not selecting (alternatively, removing) the data part other than the 3D matching target data in the workpiece shape data WSD. Therefore, the 3D matching unit 3122 may generate the 3D matching target data that is a part of the workpiece shape data WSD by removing, based on the result of the 2D matching processing, the partial data part of the workpiece shape data WSD that correspond to the area in which it is estimated that the workpiece W does not to exist (for example, the data part indicating the shape of the object different from the workpiece W, as described above).

As another example, the 3D matching unit 3122 may select the 3D matching target data based on user's instruction to designate the partial data part of the workpiece shape data WSD. Specifically, the control apparatus 3 may display a GUI (Graphical User Interface) that can be operated by the user to designate the partial data part of the workpiece shape data WSD as the 3D matching target data by using the output apparatus 35 including the display apparatus. For example, the control apparatus 3 may display a plurality of points indicated by the point cloud data that is one example of the workpiece shape data WSD, and display a GUI that can be operated by the user to designate a point corresponding to the workpiece W among the plurality of points by using the output apparatus 35 including the display apparatus. For example, the control apparatus 3 may display the depth image indicated by the depth image data that is one example of the workpiece shape data WSD, and display a GUI that can be operated by the user to designate a pixel corresponding to the workpiece W in the depth image by using the output apparatus 35 including the display apparatus. Even in this case, the 3D matching unit 3122 may perform the 3D matching processing on the 3D matching target data that is the partial data part of the workpiece shape data WSD designated by the user. As a result, the 3D matching cycle is shorter than that in a case where the 3D matching processing is performed on the entire workpiece shape data WSD.

### (2-2-3) 2D Tracking Processing performed by 2D Tracking Unit 3123

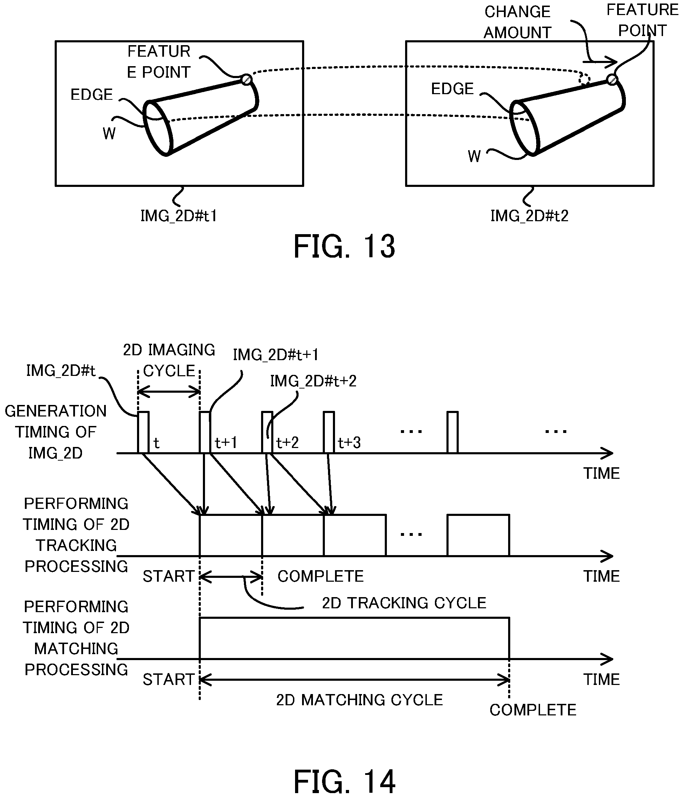

The 2D tracking unit 3123 performs, as the 2D tracking processing, a tracking processing using two workpiece image data IMG_2D#t1 and IMG_2D#t2 generated by the imaging apparatus 21 capturing the workpiece W at times t1 and t2 that are different from each other. The tracking processing using the two workpiece image data IMG_2D#t1 and IMG_2D#t2 is a tracking processing for tracking, in the workpiece image data IMG_2D#t2, at least one feature part that is the same as at least one feature part (for example, at least one of the feature point and the edge) of the workpiece W included in the workpiece image data IMG_2D#t1, as illustrated in FIG. 13. Note that the tracking processing itself may be the same as an existing tracking processing. For this reason, a detailed description of the tracking processing is omitted. The 2D tracking unit 3123 may calculate a change amount of the position of at least one feature part in the 2D imaging coordinate system between the times t1 and t2 by performing the tracking processing. Then, the 2D tracking unit 3123 may calculate a change amount of the position of the workpiece W in the 2D imaging coordinate system between the times t1 and t2 based on the change amount of the position of the at least one feature part in the 2D imaging coordinate system.

Incidentally, a method of calculating the change amount of the position of the workpiece W is not limited to the tracking processing using the two workpiece image data IMG_2D#t1 and IMG_2D#t2, but may be any other well-known method of calculating the change amount of the position of the workpiece W by using the two workpiece image data IMG_2D#t1 and IMG_2D#t2. For example, the method of calculating the change amount of the position of the workpiece W may be a method of calculating the change amount of the position of the workpiece W based on the two workpiece image data IMG_2D#t1 and IMG_2D#t2 by the machine learning or the deep learning. In this case, a prediction model, which outputs the change amount of the position of the workpiece W when the two workpiece image data IMG_2D#t1 and IMG_2D#t2 are inputted thereto, may be built by the machine learning or the deep learning, and the change amount of the position of the workpiece W may be calculated by inputting the two workpiece image data IMG_2D#t1 and IMG_2D#t2 to this prediction model. The 2D tracking unit 3123 may include this prediction model.

The 2D tracking unit 3123 may calculate, as the change amount of the position of the workpiece W in the 2D imaging coordinate system, at least one of a change amount ΔTx(2D) of the position Tx(2D) of the workpiece W in the X-axis direction(2D) that is parallel to the X-axis(2D), a change amount ΔTy(2D) of the position Ty(2D) of the workpiece W in the Y-axis direction(2D) that is parallel to the Y-axis(2D), and a change amount ΔTz(2D) of the position Tz(2D) of the workpiece W in the Z-axis direction(2D) that is parallel to the Z-axis(2D). The 2D tracking unit 3123 may calculate, as the change amount of the position of the workpiece W in the 2D imaging coordinate system, at least one of a change amount ΔRx(2D) of the position Rx(2D) of the workpiece W in the rotational direction around the X-axis(2D), a change amount ΔRy(2D) of the position Ry(2D) of the workpiece W in the rotational direction around the Y-axis(2D), and a change amount ΔRz(2D) of the position Rz(2D) of the workpiece W in the rotational direction around the Z-axis(2D), in addition to or instead of the change amount ΔTx(2D), the change amount ΔTy(2D), and the change amount ΔTz(2D). Namely, the 2D tracking unit 3123 may calculate, as the change amount of the position of the workpiece W, a change amount of the pose of the workpiece W around the X-axis(2D), a change amount of the pose of the workpiece W around the Y-axis(2D), and a change amount of the pose of the workpiece W around the Z-axis(2D).

The 2D tracking unit 3123 may calculate at least one change amount, whose accuracy is relatively higher than that of the change amount of the position of the workpiece W calculated by the 3D tracking unit 3124, among the change amount ΔTx(2D), the change amount ΔTy(2D), the change amount ΔTz(2D), the change amount ΔRx(2D), the change amount ΔRy(2D), and the change amount ΔRz(2D). On the other hand, the 2D tracking unit 3123 may not calculate at least other one change amount, whose accuracy is relatively lower than that of the change amount of the position of the workpiece W calculated by the 3D tracking unit 3124, among the change amount ΔTx(2D), the change amount ΔTy(2D), the change amount ΔTz(2D), the change amount ΔRx(2D), the change amount ΔRy(2D), and the change amount ΔRz(2D). For example, the 2D tracking unit 3123 performs the tracking processing using the workpiece image data IMG_2D that does not include the information of the position in the Z-axis direction(2D). In this case, the change amount ΔTx(2D), the change amount ΔTy(2D), and change amount ΔRz(2D) can be calculated with relatively high accuracy without using the information of the position in the Z-axis direction(2D). In this case, there is a possibility that the accuracies of the change amount ΔTx(2D), the change amount ΔTy(2D), and the change amount ΔRz(2D) calculated by the 2D tracking unit 3123 are higher than the accuracies of below-described change amount ΔTx(3D), change amount ΔTy(3D), and change amount ΔRz(3D) calculated by the 3D tracking unit 3124, respectively. On the other hand, there is a possibility that it is not easy to calculate the change amount ΔTz(2D), the change amount ΔRx(2D), and the change amount ΔRy(2D) with high accuracy without using the information of the position in the Z-axis direction(2D). In this case, there is a possibility that the accuracies of the change amount ΔTz(2D), the change amount ΔRx(2D), and the change amount ΔRy(2D) calculated by the 2D tracking unit 3123 are higher than the accuracies of below-described change amount ΔTz(3D), change amount ΔRx(3D), and change amount ΔRy(3D) calculated by the 3D tracking unit 3124, respectively. Therefore, the 2D tracking unit 3123 may calculate the change amount ΔTx(2D), the change amount ΔTy(2D), and the change amount ΔRz(2D). On the other hand, the 2D tracking unit 3123 may calculate or may not calculate the change amount ΔTz(2D), the change amount ΔRx(2D) and the change amount ΔRy(2D). In the below-described description, an example in which the 2D tracking unit 3123 calculates at least the change amount ΔTx(2D), the change amount ΔTy(2D) and the change amount ΔRz(2D) will be described.

As described in detail later, the control apparatus 3 calculates the position of the workpiece W in the global coordinate system by using the change amount ΔTx(2D), the change amount ΔTy(2D), and the change amount ΔRz(2D) whose accuracies are relatively high and which are calculated by 2D tracking unit 3123. In this case, the control apparatus 3 can calculate the position of the workpiece W in the global coordinate system with relatively high accuracy, compared to a case where the position of the workpiece W in the global coordinate system is calculated by using the change amount whose accuracy is relatively low and which is calculated by the 2D tracking unit 3123.

Each time the change amount of the position of the workpiece W is calculated, the 2D tracking unit 3123 outputs information related to the calculated change amount of the position of the workpiece W to the coordinate conversion unit 3125. As one example, the 2D tracking unit 3123 may calculate all of the change amounts of the 6DOF positions (namely, the change amount ΔTx(2D), the change amount ΔTy(2D), the change amount ΔTz(2D), the change amount ΔRx(2D), the change amount ΔRy(2D), and the change amount ΔRz(2D)), and output the information related to some of the calculated change amounts of the 6DOF positions to the coordinate conversion unit 3125. As another example, the 2D tracking unit 3123 may calculate some of the change amounts of the 6DOF positions and output the information related to the calculated some of the change amounts of the 6DOF positions to the coordinate conversion unit 3125. For example, the 2D tracking unit 3123 may calculate the above-described change amount ΔTx(2D), change amount ΔTy(2D), and change amount ΔRz(2D) whose accuracies are relatively high and output the information related to the change amount ΔTx(2D), the change amount ΔTy(2D), and the change amount ΔRz(2D) to the coordinate conversion unit 3125. As another example, the 2D tracking unit 3123 may calculate all of the change amounts of the 6DOF positions and output the information related to all of the calculated change amounts of the 6DOF positions to the coordinate conversion unit 3125. In this case, the coordinate conversion unit 3125 may calculate the change amounts of the 6DOF positions of the workpiece W by using all of the change amounts of the 6DOF positions outputted from the 2D tracking unit 3123. Alternatively, the coordinate conversion unit 3125 may select some of the change amounts of the 6DOF positions outputted from the 2D tracking unit 3123 and calculate the change amounts of the 6DOF positions of the workpiece W by using the selected some of the change amounts of the 6DOF positions.

Here, the 2D tracking unit 3123 may calculate the change amount of the position of the workpiece W in a predetermined 2D tracking cycle. Namely, the 2D tracking unit 3123 may calculate the change amount of the position of the workpiece W each time a period corresponding to the 2D tracking cycle elapses. Conversely, it may be considered that the period corresponding to the 2D tracking cycle is required for the 2D tracking unit 3123 to complete the 2D tracking processing after starting it. In this case, the 2D tracking unit 3123 may output the information related to the change amount of the position of the workpiece W to the coordinate conversion unit 3125 in the predetermined 2D tracking cycle.

As illustrated in FIG. 14, the 2D tracking cycle may be the same as the 2D imaging cycle corresponding to the 2D imaging rate at which the imaging apparatus 21 captures the workpiece W. For example, the 2D tracking cycle may be a cycle that allows the 2D tracking unit 3123 to perform the 2D tracking processing tens of times to hundreds of times (as one example, 500 times) per second. In this case, for example, as illustrated in FIG. 14, the 2D tracking unit 3123 may perform the 2D tracking processing using the workpiece image data IMG_2D#t and IMG_2D#t+1 generated at times t and t+1 at the same time as or after the workpiece image data IMG_2D#t+1 is generated at the time t+1. As a result, the change amount of the position of the workpiece W between the times t and t+1 is calculated. Similarly, for example, as illustrated in FIG. 14, the 2D tracking unit 3123 may perform the 2D tracking processing using the workpiece image data IMG_2D#t+1 and IMG_2D#t+2 generated at time t+1 and t+2 at the same time as or after the workpiece image data IMG_2D#t+2 is generated at the time t+2. As a result, the change amount of the position of the workpiece W between the times t+1 and t+2 is calculated.

However, the 2D tracking cycle may not be the same as the 2D imaging cycle. For example, the 2D tracking cycle may be shorter than the 2D imaging cycle. For example, the 2D tracking cycle may be longer than the 2D imaging cycle.

Note that the 2D tracking unit 3123 may not calculate the change amount of the position of the workpiece W in the 2D imaging coordinate system between the times t1 and t2. For example, the 2D tracking unit 3123 may calculate the position of the workpiece W in the 2D imaging coordinate system at each of the times t1 and t2 by performing the above-described matching processing for each of the two workpiece image data IMG_2D#t1 and IMG_2D#t2. Incidentally, since the position of the workpiece W is calculated at each of different times (for example, the time t1 and t2), it can be said that the processing performed by the 2D tracking unit 3123 here is the tracking processing. Here, the 2D tracking unit 3123 may perform the matching processing for each of the two workpiece image data IMG_2D #t1 and IMG_2D #t2 by using the feature parts that is fewer than the feature parts of the workpiece W included in the image indicated by the workpiece image data IMG_2D used for the matching processing by the 2D matching unit 3121 described above. In this case, the 2D tracking unit 3123 can perform the tracking processing in a shorter cycle than that of the matching processing by the 2D matching unit 3121 because a calculation time required for the matching processing can be reduced.

Furthermore, as illustrated in FIG. 14, the 2D tracking cycle is shorter than the 2D matching cycle in which the above-described 2D matching unit 3121 performs the 2D matching processing. Specifically, in the tracking processing, it is enough for the calculation apparatus 31 to perform a calculations focusing on the data part of the workpiece image data IMG_2D and the workpiece shape data WSD that is related to the feature part of the workpiece W, however, in the matching processing, it is necessary for the calculation apparatus 31 to searches for the workpiece W from the entire workpiece image data IMG_2D and workpiece shape data WSD. As a result, a calculation amount required to perform the tracking processing is smaller than a calculation amount required to perform the matching processing. Therefore, the 2D tracking cycle is usually shorter than the 2D matching cycle. Therefore, the 2D tracking unit 3123 may perform the 2D tracking processing a plurality of number of times between a start and an end of one 2D matching cycle. Namely, the 2D tracking unit 3123 may perform the 2D tracking processing a plurality of number of times before the 2D matching unit 3121 completes the 2D matching processing after starting it. However, the 2D tracking cycle may not be shorter than the 2D matching cycle. For example, the 2D tracking cycle may be the same as the 2D matching cycle. For example, the 2D tracking cycle may be longer than the 2D matching cycle. Note that a timing at which the workpiece image data IMG_2D is generated illustrated in FIG. 14 may be the timing at which the imaging apparatus 21 captures the workpiece W to generate the workpiece image data IMG_2D.

### (2-2-4) 3D Tracking Processing performed by 3D Tracking Unit 3124

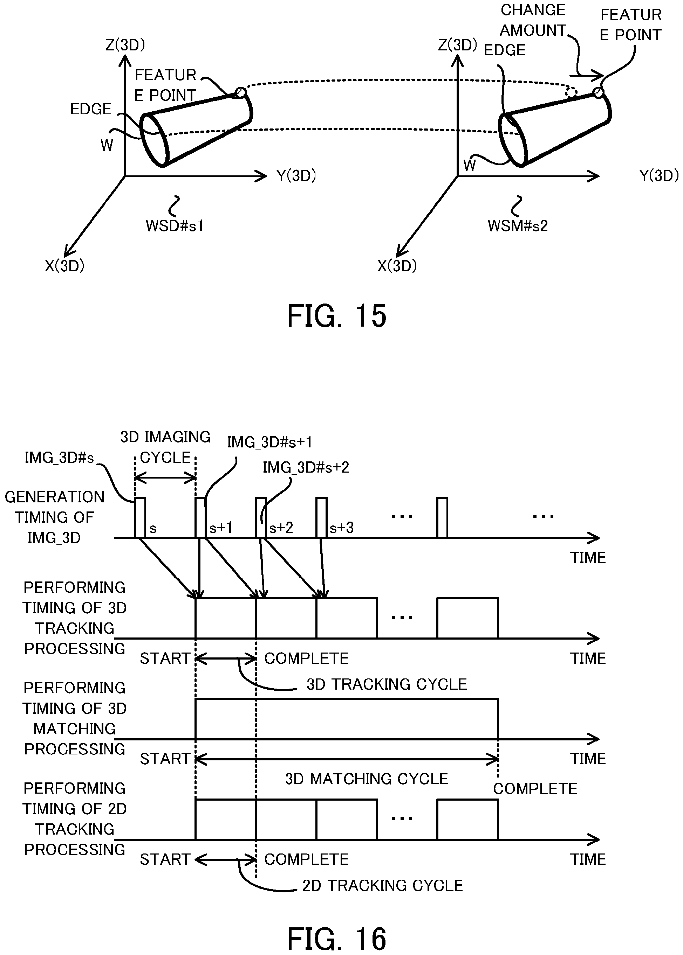

The 3D tracking unit 3124 performs, as the 3D tracking processing, a tracking processing using two workpiece shape data WSD#sl and WSD#s2. The two workpiece shape data WSD#sl and WSD#s2 are generated from two workpiece image data IMG_3D#s1 and IMG_3D#s2 by the imaging apparatus 22 capturing the workpiece W at times s1 and s2 that are different from each other, respectively. The tracking processing using the two workpiece shape data WSD#sl and WSD#s2 is a tracking processing for tracking, in the workpiece shape data WSD#s2, at least one feature part that is the same as at least one feature part (for example, at least one of the feature point and the edge) of the workpiece W indicated by the workpiece shape data WSD#s1, as illustrated in FIG. 15. Note that the tracking processing itself may be the same as an existing tracking processing. For this reason, a detailed description of the tracking processing is omitted. The 3D tracking unit 3124 may calculate a change amount of the position of at least one feature part in the 3D imaging coordinate system between the times s1 and s2 by performing the tracking processing. Then, the 3D tracking unit 3124 may calculate a change amount of the position of the workpiece W in the 3D imaging coordinate system between the times s1 and s2 based on the change amount of the position of the at least one feature part in the 3D imaging coordinate system. Incidentally, as the tracking processing using the two workpiece shape data WSD#sl and WSD#s2, at least one of a RANSAC (Random Sample Consensus), a SIFT (Scale-Invariant Feature Transform), a ICP (Iterative Closest Point), and a DSO (Direct Sparse Odometry) may be used, for example.

Incidentally, a method of calculating the change amount of the position of the workpiece W is not limited to the tracking processing using the two workpiece shape data WSD#sl and WSD#s2, but may be any other well-known method of calculating the change amount of the position of the workpiece W by using the two workpiece shape data WSD#sl and WSD#s2. For example, the method of calculating the change amount of the position of the workpiece W may be a method of calculating the change amount of the position of the workpiece W based on the two workpiece shape data WSD#sl and WSD#s2 by the machine learning or the deep learning. In this case, a prediction model, which outputs the change amount of the position of the workpiece W when the two workpiece shape data WSD#sl and WSD#s2 are inputted thereto, may be built by the machine learning or the deep learning, and the change amount of the position of the workpiece W may be calculated by inputting the two workpiece shape data WSD#sl and WSD#s2 to this prediction model. This prediction model may be stored in the 3D tracking unit 3124. Note that the 3D tracking unit 3124 may read out this prediction model stored in the storage apparatus 32.

The 3D tracking unit 3124 may calculate, as the change amount of the position of the workpiece W in the 3D imaging coordinate system, at least one of a change amount ΔTx(3D) of the position Tx(3D) of the workpiece W in the X-axis direction(3D) that is parallel to the X-axis(3D), a change amount ΔTy(3D) of the position Ty(3D) of the workpiece W in the Y-axis direction(3D) that is parallel to the Y-axis(3D), and a change amount ΔTz(3D) of the position Tz(3D) of the workpiece W in the Z-axis direction(3D) that is parallel to the Z-axis(3D). The 3D tracking unit 3124 may calculate, as the change amount of the position of the workpiece W in the 3D imaging coordinate system, at least one of a change amount ΔRx(3D) of the position Rx(3D) of the workpiece W in the rotational direction around the X-axis(3D), a change amount ΔRy(3D) of the position Ry(3D) of the workpiece W in the rotational direction around the Y-axis(3D), and a change amount ΔRz(3D) of the position Rz(3D) of the workpiece W in the rotational direction around the Z-axis(3D), in addition to or instead of the change amount ΔTx(3D), the change amount ΔTy(3D), and the change amount ΔTz(3D). Namely, the 3D tracking unit 3124 may calculate, as the change amount of the position of the workpiece W, a change amount of the pose of the workpiece W around the X-axis(3D), a change amount of the pose of the workpiece W around the Y-axis(3D), and a change amount of the pose of the workpiece W around the Z-axis(3D).

The 3D tracking unit 3124 may calculate at least one change amount, whose accuracy is relatively higher than that of the change amount of the position of the workpiece W calculated by the 2D tracking unit 3123, among the change amount ΔTx(3D), the change amount ΔTy(3D), the change amount ΔTz(3D), the change amount ΔRx(3D), the change amount ΔRy(3D), and the change amount ΔRz(3D). On the other hand, the 3D tracking unit 3124 may not calculate at least other one change amount, whose accuracy is relatively lower than that of the change amount of the position of the workpiece W calculated by the 2D tracking unit 3123, among the change amount ΔTx(3D), the change amount ΔTy(3D), the change amount ΔTz(3D), the change amount ΔRx(3D), the change amount ΔRy(3D), and the change amount ΔRz(3D). For example, the 3D tracking unit 3124 performs the tracking processing using the workpiece shape data WSD that includes the information of the position in the Z-axis direction(3D). In this case, the change amount ΔTz(3D), the change amount ΔRx(3D), and the change amount ΔRy(3D) can be calculated with relatively high accuracy by using the information of the position in the Z-axis direction(3D). In this case, there is a possibility that the accuracies of the change amount ΔTz(3D), the change amount ΔRx(3D), and the change amount ΔRy(3D) calculated by the 3D tracking unit 3124 are higher than the accuracies of below-described change amount ΔTz(2D), change amount ΔRx(2D), and change amount ΔRy(2D) calculated by the 2D tracking unit 3123, respectively. Therefore, the 3D tracking unit 3124 may calculate the change amount ΔTz(3D), the change amount ΔRX(3D), and the change amount ΔRy(3D). On the other hand, the 3D tracking unit 3124 may calculate or may not calculate the change amount ΔTx(3D), the change amount ΔTy(3D) and the change amount ΔRz(3D). In the below-described description, an example in which the 3D tracking unit 3124 calculates at least the change amount ΔTz(3D), the change amount ΔRx(3D) and the change amount ΔRy(3D) will be described.

As described in detail later, the control apparatus 3 calculates the position of the workpiece W in the global coordinate system by using the change amount ΔTz(3D), the change amount ΔRx(3D), and the change amount ΔRy(3D) whose accuracies are relatively high and which are calculated by 3D tracking unit 3124. In this case, the control apparatus 3 can calculate the position of the workpiece W in the global coordinate system with relatively high accuracy, compared to a case where the position of the workpiece W in the global coordinate system is calculated by using the change amount whose accuracy is relatively low and which is calculated by the 3D tracking unit 3124.

Each time the change amount of the position of the workpiece W is calculated, the 3D tracking unit 3124 outputs information related to the calculated change amount of the position of the workpiece W to the coordinate conversion unit 3125. As one example, the 3D tracking unit 3124 may calculate all of the 6DOF change amounts (namely, the change amount ΔTx(3D), the change amount ΔTy(3D), the change amount ΔTz(3D), the change amount ΔRx(3D), the change amount ΔRy(3D), and the change amount ΔRz(3D)), and output the information related to some of the calculated 6DOF change amounts to the coordinate conversion unit 3125. As another example, the 3D tracking unit 3124 may calculate some of the 6DOF change amounts and output the information related to the calculated some of the 6DOF change amounts to the coordinate conversion unit 3125. For example, the 3D tracking unit 3124 may calculate the above-described change amount ΔTz(3D), change amount ΔRx(3D), and change amount ΔRy(3D) whose accuracies are relatively high and output the information related to the change amount ΔTz(3D), the change amount ΔRx(3D), and the change amount ΔRy(3D) to the coordinate conversion unit 3125. As another example, the 3D tracking unit 3124 may calculate all of the 6DOF change amounts and output the information related to all of the calculated 6DOF change amounts to the coordinate conversion unit 3125. In this case, the coordinate conversion unit 3125 may calculate the 6DOF change amounts of the workpiece W by using all of the 6DOF change amounts outputted from the 3D tracking unit 3124. Alternatively, the coordinate conversion unit 3125 may select some of the 6DOF change amounts outputted from the 3D tracking unit 3124 and calculate the 6DOF change amounts of the workpiece W by using the selected some of the 6DOF change amounts.

Here, the 3D tracking unit 3124 may calculate the change amount of the position of the workpiece W in a predetermined 3D tracking cycle. Namely, the 3D tracking unit 3124 may calculate the change amount of the position of the workpiece W each time a period corresponding to the 3D tracking cycle elapses. Conversely, it may be considered that the period corresponding to the 3D tracking cycle is required for the 3D tracking unit 3124 to complete the 3D tracking processing after starting it. In this case, the 3D tracking unit 3124 may output the information related to the change amount of the position of the workpiece W to the coordinate conversion unit 3125 in the predetermined 3D tracking cycle.

As illustrated in FIG. 16, the 3D tracking cycle may be the same as the 3D imaging cycle corresponding to the 3D imaging rate at which the imaging apparatus 22 captures the workpiece W. For example, the 3D tracking cycle may be a cycle that allows the 3D tracking unit 3124 to perform the 3D tracking processing tens of times to hundreds of times (as one example, 500 times) per second. In this case, for example, as illustrated in FIG. 16, the 3D tracking unit 3124 may perform the 3D tracking processing using the workpiece shape data WSD#s and WSD#s+1, which are generated from the workpiece image data IMG_3D#s and IMG_3D#s+1 generated at times s and s+1, respectively, at the same time as or after the workpiece image data IMG_3D#s+1 is generated at the time s+1. As a result, the change amount of the position of the workpiece W between the times s and s+1 is calculated. Similarly, for example, as illustrated in FIG. 16, the 3D tracking unit 3124 may perform the 3D tracking processing using the workpiece shape data WSD#s+1 and WSD#s+2, which are generated from the workpiece image data IMG_3D#s+1 and IMG_3D#s+2 generated at times s+1 and s+2, respectively, at the same time as or after the workpiece image data IMG_3D#s+2 is generated at the time s+2. As a result, the change amount of the position of the workpiece W between the times s+1 and s+2 is calculated. Note that a timing at which the workpiece image data IMG_3D is generated illustrated in FIG. 16 may be the timing at which the imaging apparatus 22 captures the workpiece W to generate the workpiece image data IMG_3D.

However, the 3D tracking cycle may not be the same as the 3D imaging cycle. For example, the 3D tracking cycle may be shorter than the 3D imaging cycle. For example, the 3D tracking cycle may be longer than the 3D imaging cycle.

Note that the 3D tracking unit 3124 may not calculate the change amount of the position of the workpiece W in the 3D imaging coordinate system between the times s1 and s2. For example, the 3D tracking unit 3124 may calculate the position of the workpiece W in the 3D imaging coordinate system at each of the times s1 and s2 by performing the above-described 3D matching processing for each of the two workpiece shape data WSD#sl and WSD#s2. Incidentally, since the position of the workpiece W is calculated at each of different times (for example, the time s1 and s2), it can be said that the processing performed by the 3D tracking unit 3124 here is the tracking processing. Here, the 3D tracking unit 3124 may perform the 3 matching processing for each of the two workpiece shape data WSD#sl and WSD#s2 by using the feature parts that is fewer than the feature parts of the workpiece W indicated by the workpiece shape data WSD used for the matching processing by the 3D matching unit 3122 described above. In this case, the 3D tracking unit 3124 can perform the tracking processing in a shorter cycle than that of the matching processing by the 3D matching unit 3122 because a calculation time required for the matching processing can be reduced.

Furthermore, as illustrated in FIG. 16, the 3D tracking cycle is shorter than the 3D matching cycle in which the above-described 3D matching unit 3122 performs the 3D matching processing. This is because the calculation amount required to perform the tracking processing is smaller than the calculation amount required to perform the matching processing, as described above. Therefore, the 3D tracking unit 3124 may perform the 3D tracking processing a plurality of number of times between a start and an end of one 3D matching cycle. Namely, the 3D tracking unit 3124 may perform the 3D tracking processing a plurality of number of times before the 3D matching unit 3122 completes the 3D matching processing after starting it. However, the 3D tracking cycle may not be shorter than the 3D matching cycle. For example, the 3D tracking cycle may be the same as the 3D matching cycle. For example, the 3D tracking cycle may be longer than the 3D matching cycle.

Furthermore, as illustrated in FIG. 16, the 3D tracking cycle may be the same as the 2D tracking cycle. Specifically, a length of the 3D tracking cycle may be the same as a length of the 2D tracking cycle. Namely, a period required for the 3D tracking unit 3124 to complete the 3D tracking processing after starting it may be the same as a period required for the 2D tracking unit 3123 to complete the 2D tracking processing after starting it. Since the 2D tracking unit 3123 starts the 2D tracking processing after the imaging apparatus 21 captures the workpiece W and the 3D tracking unit 3124 starts the 3D tracking processing after the imaging apparatus 22 captures the workpiece W, a period from a timing when the imaging apparatus 21 captures the workpiece W to a timing when the 2D tracking unit 3123 completes the 2D tracking process (namely, calculates the change amount of the position of the workpiece W) may be the same as a period from a timing when the imaging apparatus 22 captures the workpiece W to a timing when the 3D tracking unit 3124 completes the 3D tracking process (namely, calculates the change amount of the position of the workpiece W). However, the 3D tracking cycle may not be the same as the 2D tracking cycle. For example, the length of the 3D tracking cycle may be longer than the length of the 2D tracking cycle. For example, the length of the 3D tracking cycle may be shorter than the length of the 2D tracking cycle.

In a case where the 3D tracking cycle is the same as the 2D tracking cycle, the 3D tracking cycle may temporally overlap with the 2D tracking cycle, as illustrated in second and fourth timing charts from the top in FIG. 16. Namely, a start time of the 3D tracking cycle may be the same as a start time of the 2D tracking cycle, and an end time of the 3D tracking cycle may be the same as an end time of the 2D tracking cycle. In other words, a time at which the 3D tracking unit 3124 starts the 3D tracking processing may be the same as a time at which the 2D tracking unit 3123 starts the 2D tracking processing, and a time at which the 3D tracking unit 3124 completes the 3D tracking processing may be the same as a time at which the 2D tracking unit 3123 completes the 2D tracking processing. In this case, the times t1 and t2 at which the imaging apparatus 21 captures the workpiece W to generate the two workpiece image data IMG_2D#t1 and IMG_2D#t2 used for the 2D tracking processing may be the same as the times S1 and s2 at which the imaging apparatus 22 captures the workpiece W to generate the two workpiece image data IMG_3D#s1 and IMG_3D#s2 used for the 3D tracking processing, respectively. However, the 3D tracking cycle may not temporally overlap with the 2D tracking cycle. The start time of the 3D tracking cycle may be different from the start time of the 2D tracking cycle by a predetermined period. The end time of the 3D tracking cycle may be different from end time of the 2D tracking cycle by a predetermined period. The time at which the 3D tracking unit 3124 starts the 3D tracking processing may be different from the time at which the 2D tracking unit 3123 starts the 2D tracking processing by a predetermined period. The time at which the 3D tracking unit 3124 completes the 3D tracking processing may be different from the time at which the 2D tracking unit 3123 completes the 2D tracking processing by a predetermined period. The time t1 at which the imaging apparatus 21 captures the workpiece W to generate the two workpiece image data IMG_2D#t1 used for the 2D tracking processing may be different from the time s1 at which the imaging apparatus 22 captures the workpiece W to generate the workpiece image data IMG_3D#s1 used for the 3D tracking processing. The time t2 at which the imaging apparatus 21 captures the workpiece W to generate the two workpiece image data IMG_2D#t2 used for the 2D tracking processing may be different from the time s2 at which the imaging apparatus 22 captures the workpiece W to generate the workpiece image data IMG_3D#s2 used for the 3D tracking processing.

Here, the 2D matching cycle, the 3D matching cycle, the 2D tracking cycle, and the 3D tracking cycle described so far will be summarized. As described above, the 2D matching cycle may be the same as the 3D matching cycle and is longer than the 2D tracking cycle. The 3D matching cycle may be the same as the 2D matching cycle and is longer than the 3D tracking cycle. The 2D tracking cycle may be the same as the 3D tracking cycle and is shorter than the 2D matching cycle. The 3D tracking cycle may be the same as the 2D tracking cycle and is shorter than the 3D matching cycle. In this case, a relationship that a shorter one of the 2D matching cycle and the 3D matching cycle is longer than a longer one of the 2D tracking cycle and the 3D tracking cycle may be established among the 2D matching cycle, the 3D matching cycle, the 2D tracking cycle and the 3D tracking cycle. This is because the calculation amount required to perform the tracking processing is smaller than the calculation amount required to perform the matching processing, as described above.

Here, as described above, the data size of the workpiece shape data WSD used for the 3D tracking processing is usually larger than the data size of the workpiece image data IMG_2D used for the 2D tracking processing. Especially in a case where the workpiece shape data WSD is the point cloud data, there is a higher possibility that the data size of the workpiece shape data WSD is larger than the data size of the workpiece image data IMG_2D. Therefore, there is a possibility that the 3D tracking cycle, which is the period required for the 3D tracking unit 3124 to complete the 3D tracking processing, may be longer than the 2D tracking cycle, which is the period required for the 2D tracking unit 3123 to complete the 2D tracking processing. Therefore, the 3D tracking unit 3124 may perform the 3D tracking processing so that the 3D tracking cycle is the same as the 2D tracking cycle or so that the 3D tracking cycle is shorter than the 2D tracking cycle.

As one example, the 3D tracking unit 3124 may perform the 3D tracking processing by using the above-described depth image data as the workpiece shape data WSD. In this case, the calculation amount required to perform the tracking processing is smaller, compared to a case where the 3D tracking processing is performed by using the above-described point cloud data as the workpiece shape data WSD. Typically, the calculation amount required to perform the tracking processing so small that the 3D tracking cycle is the same as the 2D tracking cycle. This is because the data size of the depth image data, in which the depth information is associated with each pixel of the two-dimensional image, is not that different from the data size of the workpiece image data IMG_2D that is the two-dimensional image. However, the 3D tracking unit 3124 may perform the 3D tracking processing by using the above-described point cloud data as the workpiece shape data WSD.

### (2-2-5) Position Calculation Processing performed by Coordinate Conversion Unit 3125

The coordinate conversion unit 3125 calculates the position of the workpiece W in the global coordinate system based on the result of the 2D matching processing, a result of the 3D matching processing, a result of the 2D tracking processing, and a result of the 3D tracking processing. Namely, the coordinate conversion unit 3125 calculates the position Tx, the position Ty, the position Tz, the position Rx, the position Ry, and the position Rz as the position of the workpiece W in the global coordinate system.

In order to calculate the position of the workpiece W in the global coordinate system, the coordinate conversion unit 3125 corrects the result of the 2D matching processing based on the result of the 2D tracking processing and corrects the result of the 3D matching processing based on the result of the 3D tracking processing. Specifically, as illustrated in FIG. 7, the coordinate conversion unit 3125 acquires information related to the change amount ΔTx(2D), the change amount ΔTy(2D), and the change amount ΔRz(2D) as the result of the 2D tracking processing. The coordinate conversion unit 3125 acquires information related to the change amount ΔTz(3D), the change amount ΔRx(3D), and the change amount ΔRy(3D) as the result of the 3D tracking processing. The coordinate conversion unit 3125 acquires information related to the position Tx(2D), the position Ty(2D) and the position Rz(2D) as the result of the 2D matching processing. The coordinate conversion unit 3125 acquires information related to the position Tz(3D), the position Rx(3D), and the position Ry(3D) as the result of the 3D matching processing. In this case, the coordinate conversion unit 3125 may calculate a position Tx'(2D) of the workpiece W in the X-axis direction(2D) of the 2D imaging coordinate system by correcting the position Tx(2D) based on the change amount ΔTx(2D). The coordinate conversion unit 3125 may calculate a position Ty'(2D) of the workpiece W in the Y-axis direction(2D) of the 2D imaging coordinate system by correcting the position Ty(2D) based on the change amount ΔTy(2D). The coordinate conversion unit 3125 may calculate a position Tz'(3D) of the workpiece W in the Z-axis direction(3D) of the 3D imaging coordinate system by correcting the position Tz(3D) based on the change amount ΔTz(3D). The coordinate conversion unit 3125 may calculate a position Rx'(3D) of the workpiece W in the rotational direction around the X-axis(3D) of the 3D imaging coordinate system by correcting the position Rx(3D) based on the change amount ΔRx(3D). The coordinate conversion unit 3125 may calculate a position Ry'(3D) of the workpiece W in the rotational direction around the Y-axis(3D) of the 3D imaging coordinate system by correcting the position Ry(3D) based on the change amount ΔRy(3D). The coordinate conversion unit 3125 may calculate a position Rz'(2D) of the workpiece W in the rotational direction around the Z-axis(2D) of the 2D imaging coordinate system by correcting the position Rz(2D) based on the change amount ΔRz(2D).

A processing for correcting the result of the 2D matching processing based on the result of the 2D tracking processing may include a processing for adding the result of the 2D tracking processing to the result of the 2D matching processing. The processing for correcting the result of the 3D matching processing based on the result of the 3D tracking processing may include a processing for adding the result of the 3D tracking processing to the result of the 3D matching processing. For example, the coordinate conversion unit 3125 may calculate the position Tx'(2D) by adding the change amount ΔTx(2D) to the position Tx(2D). The coordinate conversion unit 3125 may calculate the position Ty'(2D) by adding the change amount ΔTy(2D) to the position Ty(2D). The coordinate conversion unit 3125 may calculate the position Tz'(3D) by adding the change amount ΔTz(3D) to the position Tz(3D). The coordinate conversion unit 3125 may calculate the position Rx'(3D) by adding the change amount ΔRx(3D) to the position Rx(3D). The coordinate conversion unit 3125 may calculate the position Ry'(3D) by adding the change amount ΔRy(3D) to the position Ry(3D). The coordinate conversion unit 3125 may calculate the position Rz'(2D) by adding the change amount ΔRz(2D) to the position Rz(2D).

As described above, the 2D tracking cycle, which is the cycle in which the change amount ΔTx(2D) is generated, is shorter than the 2D matching cycle, which is the cycle in which the position Tx(2D) is generated. In this case, the 2D tracking unit 3123 calculates the change amount ΔTx(2D) a plurality of number of times after a new position Tx(2D) is generated and before the position Tx(2D) is generated next. In this case, the coordinate conversion unit 3125 may calculate the position Tx'(2D) based on the newly calculated position Tx(2D) and the newly calculated change amount ΔTx(2D) each time the change amount ΔTx(2D) is newly calculated. Specifically, the coordinate conversion unit 3125 may calculate the position Tx'(2D) by adding a total sum of the change amount(s) ΔTx(2D), which has been calculated since the position Tx(2D) is calculated, to the position Tx(2D) each time the change amount ΔTx(2D) is newly calculated. Alternatively, the coordinate conversion unit 3125 may calculate new position Tx'(2D) by adding the newly calculated change amount ΔTx(2D) to the position Tx'(2D) at that time (namely, the position Tx(2D) to which the calculated change amount(s) ΔTx(2D) has been added) each time the change amount ΔTx(2D) is newly calculated. Therefore, , the sum of the change amount(s) ΔTx(2D) added to the position Tx(2D) increases each time the change amount ΔTx(2D) is calculated.

In this case, an update frequency of the position Tx'(2D) is higher, compared to a comparison case in which the position Tx(2D) is used as it is as the position Tx'(2D). Specifically, in a case where the position Tx(2D) is used as it is as the position Tx'(2D), the update frequency of the position Tx'(2D) depends on the 2D matching cycle, which is the cycle in which the position Tx(2D) is calculated. On the other hand, in a case where the position Tx'(2D) is calculated by correcting the position Tx(2D) based on the change amount ΔTx(2D), the update frequency of the position Tx'(2D) depends on the 2D tracking cycle, which is the cycle in which the change amount ΔTx(2D) is calculated. As a result, the update frequency of the position Tx'(2D) is higher because the 2D tracking cycle is shorter than the 2D matching cycle. Since the position of the workpiece W in the global coordinate system is calculated based on the position Tx'(2D) of the workpiece W in the 2D imaging coordinate system as described below, the coordinate conversion unit 3125 can calculate the position of the workpiece W in the global coordinate system in a cycle that is the same as the 2D tracking cycle. Therefore, the position calculation unit 312 can calculate the position of the workpiece W in the global coordinate system in a shorter cycle. Namely, the position calculation unit 312 can calculate the position of the workpiece W in the global coordinate system at a higher frequency (in other words, at a higher speed).

By the way, there is a possibility that the change amount ΔTx(2D) calculated by the 2D tracking processing includes an error corresponding to a deviation amount from the actual position of the workpiece W. As a result, there is a possibility that the error included in the total sum of the change amount(s) ΔTx(2D), which keeps increasing each time the change amount ΔTx(2D) is calculated, becomes larger. As a result, there is a possibility that a difference between the position Tx'(2D) of the workpiece W calculated by the control apparatus 3 and the actual position of the workpiece W becomes larger each time the change amount ΔTx(2D) is added. On the other hand, the accuracy of the position calculated by the matching processing is higher than the accuracy of the position calculated by the tracking processing. Therefore, when the position Tx(2D) is newly calculated, the coordinate conversion unit 3125 may reset the total sum of the change amount(s) ΔTx(2D) added to the position Tx(2D) to calculate the position Tx'(2D). In this case, the coordinate conversion unit 3125 may calculate the position Tx'(2D) by adding the total sum of the change amount(s) ΔTx(2D), which has been newly calculated since the position Tx(2D) is newly calculated, , to the newly calculated position Tx(2D). As a result, the position calculation unit 312 can calculate the position Tx'(2D) with high accuracy. Incidentally, it can be said that the coordinate conversion unit 3125 corrects the position Tx'(2D), to which the total sum of the change amount(s) Tx(2D) has been added, by the newly calculated position Tx(2D), in a case where the position Tx(2D) is newly calculated,.

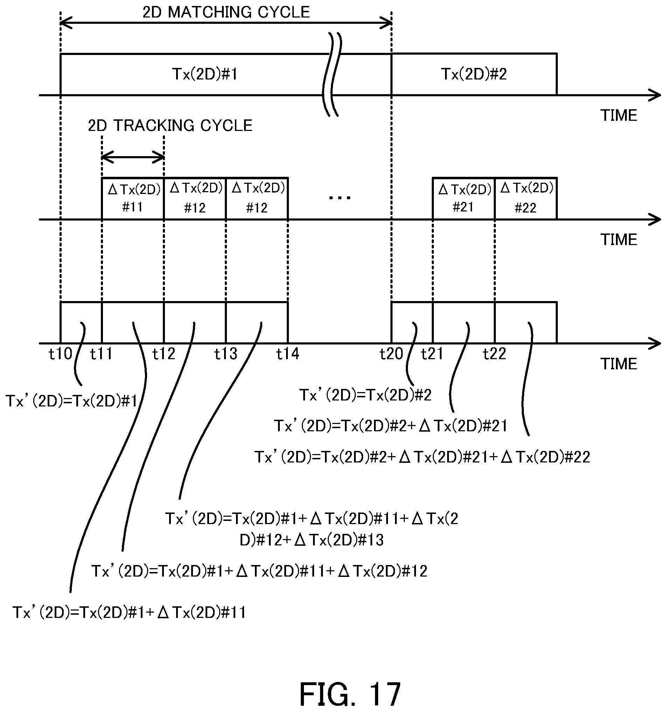

One example of a flow for calculating the position Tx'(2D) is illustrated in FIG. 17. FIG. 17 illustrates an example in which a position Tx(2D)#1 is newly calculated at a time t10, and then a position Tx(2D)#2 is newly calculated at a time t20 at which the 2D matching cycle has elapsed from the time t10. In this case, at the time t10, since the position Tx(2D)#1 is newly calculated, the change amount ΔTx(2D) that is added to the position Tx(2D)#1 is not yet calculated. Therefore, from the time t10 to the time t11, the position Tx(2D)#1 is used as the position Tx'(2D). Then, when a change amount ΔTx(2D)#11 is calculated at a time t11, the coordinate conversion unit 3125 adds the change amount ΔTx(2D)#11 to the position Tx(2D)#1. As a result, from the time t11 to a time t12, the position Tx(2D)#1 + the change amount ΔTx(2D)#11 is used as the position Tx'(2D). Then, when a change amount ΔTx(2D)#12 is calculated at the time t12, the coordinate conversion unit 3125 adds the change amounts ΔTx(2D)#11 to ΔTx(2D)#12 to the position Tx(2D)#1. Alternatively, the coordinate conversion unit 3125 adds the newly calculated change amount ΔTx(2D)#12 to the position Tx(2D)#1 to which the change amount ΔTx(2D)#11 has already been added. As a result, from the time t12 to a time t13, the position Tx(2D)#1 + the change amount ΔTx(2D)#11 + the change amount ΔTx(2D)#12 is used as the position Tx'(2D). Then, when a change amount ΔTx(2D)#13 is calculated at the time t13, the coordinate conversion unit 3125 adds the change amounts ΔTx(2D)#11 to ΔTx(2D)#13 to the position Tx(2D)#1. Alternatively, the coordinate conversion unit 3125 adds the newly calculated ΔTx(2D)#13 to the position Tx(2D)#1 to which the change amounts ΔTx(2D)#11 to ΔTx(2D)#12 have already been added. As a result, from the time 113 to a time t14, the position Tx(2D)#1 + the change amount ΔTx(2D)#11 + the change amount ΔTx(2D)#12 + the change amount ΔTx(2D)#13 is used as the position Tx'(2D). Then, when the position Tx(2D)#2 is newly calculated at the time t20, the total sum of the change amount(s) ΔTx(2D) that is added to the position Tx(2D) to calculate the position Tx'(2D) is reset to be zero. Therefore, from the time t20 to a time t21, the position Tx(2D)#2 is used as the position Tx'(2D). Then, when a change amount ΔTx(2D)#21 is calculated at a time t21, the coordinate conversion unit 3125 adds the change amount ΔTx(2D)#21 to the position Tx(2D)#2. As a result, from the time t21 to a time t22, the position Tx(2D)#2 + the change amount ΔTx(2D)#21 is used as the position Tx'(2D). Then, when a change amount ΔTx(2D)#22 is calculated at a time t22, the coordinate conversion unit 3125 adds the change amounts ΔTx(2D)#21 to ΔTx(2D)#22 to the position Tx(2D)#2. Alternatively, the coordinate conversion unit 3125 adds the newly calculated ΔTx(2D)#22 to the position Tx(2D)#2 to which the change amount ΔTx(2D)#21 has already been added. As a result, from the time t22 to a time t23, the position Tx(2D)#2 + the change amount ΔTx(2D)#21 + the change amount ΔTx(2D)#22 is used as the position Tx'(2D).

Incidentally, although it is not illustrated in the drawings to omit a redundant description, the coordinate conversion unit 3125 calculates the position Ty'(2D), the position Tz'(3D), the position Rx'(3D), the position Ry'(3D), and the position Rz'(2D) in the same manner as in a case where the positions Tx'(2D) is calculated. Namely, the coordinate conversion unit 3125 may calculate the position Ty'(2D) by adding a total sum of the change amount(s) ΔTy(2D), which has been calculated since the position Ty(2D) is calculated, to the position Ty(2D) each time the change amount ΔTy(2D) is newly calculated. Alternatively, the coordinate conversion unit 3125 may calculate new position Ty'(2D) by adding the newly calculated change amount ΔTy(2D) to the position Ty'(2D) at that time (namely, the position Ty(2D) to which the calculated change amount(s) ΔTy(2D) has been added) each time the change amount ΔTy(2D) is newly calculated. Then, when the position Ty(2D) is newly calculated, the coordinate conversion unit 3125 may reset the total sum of the change amount(s) ΔTy(2D) added to the position Ty(2D) to calculate the position Ty'(2D), and calculate the position Ty'(2D) by sequentially adding the change amount(s) ΔTy(2D), which has been newly calculated since the position Ty(2D) is newly calculated, to the newly calculated position Ty(2D). The coordinate conversion unit 3125 may calculate the position Tz'(3D) by adding a total sum of the change amount(s) ΔTz(3D), which has been calculated since the position Tz(3D) is calculated, to the position Tz(3D) each time the change amount ΔTz(3D) is newly calculated. Alternatively, the coordinate conversion unit 3125 may calculate new position Tz'(3D) by adding the newly calculated change amount ΔTz(3D) to the position Tz'(3D) at that time (namely, the position Tz(3D) to which the calculated change amount(s) ΔTz(3D) has been added) each time the change amount ΔTz(3D) is newly calculated. Then, when the position Tz(3D) is newly calculated, the coordinate conversion unit 3125 may reset the total sum of the change amount(s) ΔTz(3D) added to the position Tz(3D) to calculate the position Tz'(3D), and calculate the position Tz'(3D) by sequentially adding the change amount(s) ΔTz(3D), which has been newly calculated since the position Tz(3D) is newly calculated, to the newly calculated position Tz(3D). The coordinate conversion unit 3125 may calculate the position Rx'(3D) by adding a total sum of the change amount(s) ΔRx(3D), which has been calculated since the position Rx(3D) is calculated, to the position Rx(3D) each time the change amount ΔRx(3D) is newly calculated. Alternatively, the coordinate conversion unit 3125 may calculate new position Rx' (3D) by adding the newly calculated change amount ΔRx(3D) to the position Rx'(3D) at that time (namely, the position Rx(3D) to which the calculated change amount(s) ΔRx(3D) has been added) each time the change amount ΔRx(3D) is newly calculated. Then, when the position Rx(3D) is newly calculated, the coordinate conversion unit 3125 may reset the total sum of the change amount(s) ΔRx(3D) added to the position Rx(3D) to calculate the position Rx'(3D), and calculate the position Rx'(3D) by sequentially adding the change amount(s) ΔRx(3D), which has been newly calculated since the position Rx(3D) is newly calculated, to the newly calculated position Rx(3D). The coordinate conversion unit 3125 may calculate the position Ry'(3D) by adding a total sum of the change amount(s) ΔRy(3D), which has been calculated since the position Ry(3D) is calculated, to the position Ry(3D) each time the change amount ΔRy(3D) is newly calculated. Alternatively, the coordinate conversion unit 3125 may calculate new position Ry'(3D) by adding the newly calculated change amount ΔRy(3D) to the position Ry'(3D) at that time (namely, the position Ry(3D) to which the calculated change amount(s) ΔRy(3D) has been added) each time the change amount ΔRy(3D) is newly calculated. Then, when the position Ry(3D) is newly calculated, the coordinate conversion unit 3125 may reset the total sum of the change amount(s) ΔRy(3D) added to the position Ry(3D) to calculate the position Ry'(3D), and calculate the position Ry'(3D) by sequentially adding the change amount(s) ΔRy(3D), which has been newly calculated since the position Ry(3D) is newly calculated, to the newly calculated position Ry(3D). The coordinate conversion unit 3125 may calculate the position Rz'(2D) by adding a total sum of the change amount(s) ΔRz(2D), which has been calculated since the position Rz(2D) is calculated, to the position Rz(2D) each time the change amount ΔRz(2D) is newly calculated. Alternatively, the coordinate conversion unit 3125 may calculate new position Rz'(2D) by adding the newly calculated change amount ΔRz(2D) to the position Rz'(2D) at that time (namely, the position Rz(2D) to which the calculated change amount(s) ΔRz(2D) has been added) each time the change amount ΔRz(2D) is newly calculated. Then, when the position Rz(2D) is newly calculated, the coordinate conversion unit 3125 may reset the total sum of the change amount(s) ΔRz(2D) added to the position Rz(2D) to calculate the position Rz'(2D), and calculate the position Rz'(2D) by sequentially adding the change amount(s) ΔRz(2D), which has been newly calculated since the position Rz(2D) is newly calculated, to the newly calculated position Rz(2D).

Then, the coordinate conversion unit 3125 calculates the position Tx, the position Ty, the position Tz, the position Rx, the position Ry, and the position Rz of the workpiece W in the global coordinate system based on the position Tx'(2D), the position Ty'(2D), the position Tz'(3D), the position Rx'(3D), the position Ry'(3D), and the position Rz'(2D). Specifically, the coordinate conversion unit 3125 firstly converts the position Tx'(2D), the position Ty'(2D), the position Tz'(3D), the position Rx'(3D), the position Ry'(3D), and the position Rz'(2D) to positions in the common coordinate system that is either one of the 2D imaging coordinate system and the 3D imaging coordinate system. However, any coordinate system that is different from the 2D imaging coordinate system and the 3D imaging coordinate system may be used as the common coordinate system.

As one example, in a case where the 2D imaging coordinate system is used as the common coordinate system, the position Tx'(2D), the position Ty'(2D), and the position Rz'(2D) already indicate positions in the 2D imaging coordinate system. Therefore, the coordinate conversion unit 3125 may not convert the position Tx'(2D), the position Ty'(2D), and the position Rz'(2D). On the other hand, the coordinate conversion unit 3125 converts the position Tz'(3D), the position Rx'(3D), and the position Ry'(3D) to the position Tz'(2D) in the Z-axis direction(2D) of the 2D imaging coordinate system, the position Rx'(2D) in the rotational direction around the Y-axis(2D) of the 2D imaging coordinate system, and the position Ry'(2D) in the rotational direction around the Y-axis(2D) of the 2D imaging coordinate system. For example, the coordinate conversion unit 3125 may convert the position Tz'(3D), the position Rx'(3D), and the position Ry'(3D) to the position Tz'(2D), the position Rx'(2D), and the position Ry'(2D) by using a conversion matrix M32 that is for converting the position in the 3D imaging coordinate system to the position in the 2D imaging coordinate system. Specifically, the coordinate conversion unit 3125 may calculate the position Tz'(2D), the position Rx'(2D), and the position Ry'(2D) by using equations such as the position Tz'(2D) = M32 × the position Tz'(3D), the position Rx'(2D) = M32 × the position Rx'(3D), and the position Ry(2D) = M32 × the position Ry'(3D). Note that the conversion matrix M32 can be calculated from the positional relationship between the imaging apparatus 21 and the imaging apparatus 22, as described above.

In this case, the accuracy of the position Tx'(2D), the position Ty'(2D), and the position Rz'(2D) is relatively high, as already described above. Furthermore, the accuracy of the position Tz'(3D), the position Rx'(3D), and the position Ry'(3D) is relatively high, as already described above. As a result, the accuracy of the position Tz'(2D), the position Rx'(2D), and the position Ry'(2D), which are converted from the position Tz'(3D), the position Rx'(3D), and the position Ry'(3D), is also relatively high. Therefore, the accuracy of the 6DOF (Degree of Freedom) positions of the workpiece W in the 2D imaging coordinate system (in the common coordinate system),which is used by the coordinate conversion unit 3125 to calculate the position of the workpiece W in the global coordinate system, is relatively high. Specifically, the accuracy of the 6DOF positions of the workpiece W in the 2D imaging coordinate system (in the common coordinate system), which are calculated based on the position Tx(2D) and the change amount ΔTx(2D), the position Ty(2D) and the change amount ΔTy(2D), the position Tz(3D) and the change amount ΔTz(3D), the position Rx(3D) and the change amount ΔRx(3D), the position Ry(3D) and the change amount ΔRy(3D), and the position Rz(2D) and the change amount ΔRz(2D), is higher than the accuracy of the 6DOF positions of the workpiece W in the 2D imaging coordinate system (in the common coordinate system), which are calculated without using at least one of the position Tx(2D) and the change amount ΔTx(2D), the position Ty(2D) and the change amount ΔTy(2D), the position Tz(3D) and the change amount ΔTz(3D), the position Rx(3D) and the change amount ΔRx(3D), the position Ry(3D) and the change amount ΔRy(3D), and the position Rz(2D) and the change amount ΔRz(2D). Therefore, the control apparatus 3 can calculate the position of the workpiece W in the global coordinate system with high accuracy by using the 6DOF positions of the workpiece W in the 2D imaging coordinate system whose accuracy is relatively high as described above. Specifically, the control apparatus 3 can calculate the position of the workpiece W in the global coordinate system, whose accuracy is higher than the accuracy of the position of the workpiece W in the global coordinate system which are calculated without using at least one of the position Tx(2D) and the change amount ΔTx(2D), the position Ty(2D) and the change amount ΔTy(2D), the position Tz(3D) and the change amount ΔTz(3D), the position Rx(3D) and the change amount ΔRx(3D), the position Ry(3D) and the change amount ΔRy(3D), and the position Rz(2D) and the change amount ΔRz(2D), by calculating the position of the workpiece W in the global coordinate system based on the position Tx(2D) and the change amount ΔTx(2D), the position Ty(2D) and the change amount ΔTy(2D), the position Tz(3D) and the change amount ΔTz(3D), the position Rx(3D) and the change amount ΔRx(3D), the position Ry(3D) and the change amount ΔRy(3D), and the position Rz(2D) and the change amount ΔRz(2D).

As another example, in a case where the 3D imaging coordinate system is used as the common coordinate system, the position Tz'(3D), the position Rx'(3D), and the position Ry'(3D) already indicate positions in the 3D imaging coordinate system. Therefore, the coordinate conversion unit 3125 may not convert the position Tz'(3D), the position Rx'(3D), and the position Ry'(3D). On the other hand, the coordinate conversion unit 3125 converts the position Tx'(2D), the position Ty'(2D), and the position Rz'(2D) to the position Tx'(3D) in the X-axis direction(3D) of the 3D imaging coordinate system, the position Ty' (3D) in the Y-axis direction(3D) of the 3D imaging coordinate system, and the position Rz'(3D) in the rotational direction around the Z-axis(3D) of the 3D imaging coordinate system. For example, the coordinate conversion unit 3125 may convert the position Tx'(2D), the position Ty'(2D), and the position Rz'(2D) to the position Tx'(3D), the position Ty'(3D), and the position Rz'(3D)by using a conversion matrix M23 that is for converting the position in the 2D imaging coordinate system to the position in the 3D imaging coordinate system. Specifically, the coordinate conversion unit 3125 may calculate the position Tx'(3D), the position Ty'(3D), and the position Rz'(3D) by using equations such as the position Tx'(3D) = M23 × the position Tx'(2D), the position Ty'(3D) = M23 × the position Ty'(2D), and the position Rz(3D) = M23 × the position Rz'(2D). Note that the conversion matrix M23 can be calculated from the positional relationship between the imaging apparatus 21 and the imaging apparatus 22, as described above. The conversion matrix M23 may be an inverse matrix of the above-described conversion matrix M32.

In this case, the accuracy of the position Tz'(3D), the position Rx'(3D), and the position Ry'(3D) is relatively high, as already described above. Furthermore, the accuracy of the position Tx'(2D), the position Ty'(2D), and the position Rz'(2D) is relatively high, as already described above. As a result, the accuracy of the position Tx'(3D), the position Ty'(3D), and the position Rz'(3D), which are converted from the position Tx'(2D), the position Ty'(2D), and the position Rz'(2D), is also relatively high. Therefore, the accuracy of the 6DOF positions of the workpiece W in the 3D imaging coordinate system (in the common coordinate system),which is used by the coordinate conversion unit 3125 to calculate the position of the workpiece W in the global coordinate system, is relatively high. Specifically, the accuracy of the 6DOF positions of the workpiece W in the 3D imaging coordinate system (in the common coordinate system), which are calculated based on the position Tx(2D) and the change amount ΔTx(2D), the position Ty(2D) and the change amount ΔTy(2D), the position Tz(3D) and the change amount ΔTz(3D), the position Rx(3D) and the change amount ΔRx(3D), the position Ry(3D) and the change amount ΔRy(3D), and the position Rz(2D) and the change amount ΔRz(2D), is higher than the accuracy of the 6DOF positions of the workpiece W in the 3D imaging coordinate system (in the common coordinate system), which are calculated without using at least one of the position Tx(2D) and the change amount ΔTx(2D), the position Ty(2D) and the change amount ΔTy(2D), the position Tz(3D) and the change amount ΔTz(3D), the position Rx(3D) and the change amount ΔRx(3D), the position Ry(3D) and the change amount ΔRy(3D), and the position Rz(2D) and the change amount ΔRz(2D). Therefore, the control apparatus 3 can calculate the position of the workpiece W in the global coordinate system with high accuracy by using the 6DOF positions of the workpiece W in the 3D imaging coordinate system whose accuracy is relatively high as described above. Specifically, the control apparatus 3 can calculate the position of the workpiece W in the global coordinate system, whose accuracy is higher than the accuracy of the position of the workpiece W in the global coordinate system which are calculated without using at least one of the position Tx(2D) and the change amount ΔTx(2D), the position Ty(2D) and the change amount ΔTy(2D), the position Tz(3D) and the change amount ΔTz(3D), the position Rx(3D) and the change amount ΔRx(3D), the position Ry(3D) and the change amount ΔRy(3D), and the position Rz(2D) and the change amount ΔRz(2D), by calculating the position of the workpiece W in the global coordinate system based on the position Tx(2D) and the change amount ΔTx(2D), the position Ty(2D) and the change amount ΔTy(2D), the position Tz(3D) and the change amount ΔTz(3D), the position Rx(3D) and the change amount ΔRx(3D), the position Ry(3D) and the change amount ΔRy(3D), and the position Rz(2D) and the change amount ΔRz(2D).

The imaging apparatuses 21 and 22 may be arranged so that an origin of the 2D imaging coordinate system is as close as possible to an origin of the 3D imaging coordinate system. The imaging apparatuses 21 and 22 may be arranged so that the X-axis(2D) of the 2D imaging coordinate system is as close as possible to the X-axis(3D) of the 3D imaging coordinate system. The imaging apparatuses 21 and 22 may be arranged so that the Y-axis(2D) of the 2D imaging coordinate system is as close as possible to the Y-axis(3D) of the 3D image capture coordinate system. The imaging apparatuses 21 and 22 may be arranged so that the Z-axis(2D) of the 2D imaging coordinate system is as close as possible to the Z-axis(3D) of the 3D image capture coordinate system. In this case, in a case where the 2D imaging coordinate system is used as the common coordinate system, there is a high possibility that the accuracy of the position Tz'(2D), the position Rx'(2D), and the position Ry'(2D), which are converted from the position Tz'(3D), the position Rx'(3D), and the position Ry'(3D), keeps being high. Similarly, in a case where the 3D imaging coordinate system is used as the common coordinate system, there is a high possibility that the accuracy of the position Tx'(3D), the position Ty'(3D), and the position Rz'(3D), which are converted from the position Tx'(2D), the position Ty'(2D), and the position Rz'(2D), keep being high.

Incidentally, in the above-described description, the coordinate conversion unit 3125 calculates the position Tx'(2D), the position Ty'(2D), the position Tz'(3D), the position Rx'(3D), the position Ry'(3D), and the position Rz'(2D), and then converts the position Tx'(2D), the position Ty'(2D), the position Tz'(3D), the position Rx'(3D), the position Ry'(3D), and the position Rz'(2D) to the positions in the common coordinate system. However, the coordinate conversion unit 3125 may convert the position Tx(2D), the position Ty(2D), the position Tz(3D), the position Rx(3D), the position Ry(3D), and the position Rz(2D) to the positions in the common coordinate system. Similarly, the coordinate conversion unit 3125 may converts the change amount ΔTx(2D), the change amount ΔTy(2D), the change amount ΔTz(3D), the change amount ΔRx(3D), the change amount ΔRy(3D), and the change amount ΔRz(2D) to the change amount in the common coordinate system.

As one example, in a case where the 2D imaging coordinate system is used as the common coordinate system, the position Tx(2D), the position Ty(2D), and the position Rz(2D) already indicate the position in the 2D imaging coordinate system. Similarly, the change amount ΔTx(2D), the change amount ΔTy(2D), and the change amount ΔRz(2D) already indicate the change amount in the 2D imaging coordinate system. Therefore, the coordinate conversion unit 3125 may not convert the position Tx(2D), the position Ty(2D), the position Rz(2D), the change amounts ΔTx(2D), the change amount ΔTy(2D), and the change amount ΔRz(2D). On the other hand, the coordinate conversion unit 3125 may convert the position Tz(3D), the position Rx(3D), and the position Ry(3D) to a position Tz(2D_conv), a position Rx(2D_conv), and a position Ry(2D_conv) in the 2D imaging coordinate system that is the common coordinate system. Similarly, the coordinate conversion unit 3125 may convert the change amount ΔTz(3D), the change amount ΔRx(3D), and the change amount ΔRy(3D) to a change amount ΔTz(2D_conv), a change amount ΔRx(2D_conv), and a change amount ΔRy(2D_conv) in the 2D imaging coordinate system that is the common coordinate system. For example, the coordinate conversion unit 3125 may perform the above-described conversion by using the conversion matrix M32 that is for converting the position in the 3D imaging coordinate system to the position in the 2D imaging coordinate system. Then, the coordinate conversion unit 3125 may calculate the position Tx'(2D), the position Ty'(2D), the position Tz'(2D), the position Rx' (2D), the position Ry'(2D), and the position Rz'(2D) based on the position Tx(2D), the position Ty(2D), the position Tz(2D_conv), the position Rx(2D_conv), the position Ry(2D_conv), and the position Rz(2D) and the change amount ΔTx(2D), the change amount ΔTy(2D), the change amount ΔTz(2D_conv), the change amount ΔRx(2D_conv), the change amount ΔRy(2D_conv), and the change amount ΔRz(2D). Specifically, the coordinate conversion unit 3125 may calculate the position Tx'(2D) by correcting the position Tx(2D) based on the change amount ΔTx(2D). The coordinate conversion unit 3125 may calculate the position Ty'(2D) by correcting the position Ty(2D) based on the change amount ΔTy(2D). The coordinate conversion unit 3125 may calculate the position Tz'(2D) by correcting the position Tz(2D_conv) based on the change amount ΔTz(2D_conv). The coordinate conversion unit 3125 may calculate the position Rx'(2D) by correcting the position Rx(2D_conv) based on the change amount ΔRx(2D_conv). The coordinate conversion unit 3125 may calculate the position Ry'(2D) by correcting the position Ry(2D_conv) based on the change amount ΔRy(2D_conv). The coordinate conversion unit 3125 may calculate the position Rz'(2D) by correcting the position Rz(2D) based on the change amount ΔRz(2D).

As another example, in a case where the 3D imaging coordinate system is used as the common coordinate system, the position Tz(3D), the position Rx(3D), and the position Ry(3D) already indicate the positions in the 3D imaging coordinate system. Similarly, the change amount ΔTz(3D), the change amount ΔRx(3D), and the change amount ΔRy(3D) already indicate the change amount in the 3D imaging coordinate system. Therefore, the coordinate conversion unit 3125 may not convert the position Tz(3D), the position Rx(3D), the position Ry(3D), the change amount ΔTz(3D), the change amount ΔRx(3D), and the change amount ΔRy(3D). On the other hand, the coordinate conversion unit 3125 may convert the position Tx(2D), the position Ty(2D), and position Rz(2D) to a position Tx(3D_conv), a position Ty(3D_conv), and a position Rz(3D_conv) in the 3D imaging coordinate system that is the common coordinate system. Similarly, the coordinate conversion unit 3125 may convert the change amount ΔTx(2D), the change amount ΔTy(2D), and the change amount ΔRz(2D) to a change amount ΔTx(3D_conv), a change amount ΔTy(3D_conv), and a change amount ΔRz(3D_conv) in the 3D imaging coordinate system that is the common coordinate system. For example, the coordinate conversion unit 3125 may perform the above-described conversion by using the conversion matrix M32 that is for converting the position in the 2D imaging coordinate system to the position in the 3D imaging coordinate system. Then, the coordinate conversion unit 3125 may calculate the position Tx'(3D), the position Ty'(3D), the position Tz'(3D), the position Rx'(3D), the position Ry'(3D), and the position Rz'(3D) based on the position Tx(3D_conv), the position Ty(3D_conv), the position Tz(3D), the position Rx(3D), the position Ry(3D), and the position Rz(3D_conv) and the change amount ΔTx(3D_conv), the change amount ΔTy(3D_conv), the change amount ΔTz(3D), the change amount ΔRx(3D), the change amount ΔRy(3D), and the change amount ΔRz(3D_conv). Specifically, the coordinate conversion unit 3125 may calculate the position Tx'(3D) by correcting the position Tx(3D_conv) based on the change amount ΔTx(3D_conv). The coordinate conversion unit 3125 may calculate the position Ty'(3D) by correcting the position Ty(3D_conv) based on the change amount ΔTy(3D_conv). The coordinate conversion unit 3125 may calculate the position Tz'(3D) by correcting the position Tz(3D) based on the change amount ΔTz(3D). The coordinate conversion unit 3125 may calculate the position Rx'(3D) by correcting the position Rx(3D) based on the change amount ΔRx(3D). The coordinate conversion unit 3125 may calculate the position Ry'(3D) by correcting the position Ry(3D) based on the change amount ΔRy(3D). The coordinate conversion unit 3125 may calculate the position Rz'(3D) by correcting the position Rz(3D_conv) based on the change amount ΔRz(3D_conv).

Then, the coordinate conversion unit 3125 calculates the 6DOF positions of the workpiece W in the global coordinate system based on the 6DOF positions of the workpiece W in the 2D imaging coordinate system or the 6DOF positions of the workpiece W in the 3D imaging coordinate system. Namely, the coordinate conversion unit 3125 calculates the position Tx, the position Ty, the position Tz, the position Rx, the position Ry, and the position Rz of the workpiece W in the global coordinate system based on the 6DOF positions of the workpiece W in the 2D imaging coordinate system or the 6DOF positions of the workpiece W in the 3D imaging coordinate system.

For example, the coordinate conversion unit 3125 may converts the 6DOF positions of the workpiece W in the 2D imaging coordinate system or the 6DOF positions of the workpiece W in the 3D imaging coordinate system to the 6DOF positions of the workpiece W in the global coordinate system by using a conversion matrix M that is for converting a position in the 2D imaging coordinate system or the 3D imaging coordinate system to a position in the global coordinate system. The conversion matrix M may include a product of conversion matrices each of which reflects changes of the position coordinate of the imaging apparatus 21 or 22 due to the rotation of the link 121 around the axis defined by each joint 122 of the robotic arm 12, for example. The conversion matrix may be a so-called rotation matrix, a matrix of the rotation matrix with a translation component, or a matrix based on Euler angle. Incidentally, the conversion of the coordinate of the robotic arm using the conversion matrix itself may be performed using an existing conversion method, so a detailed description thereof is omitted.

### (3) Technical Effect of Robot System SYS

As described above, the control apparatus 3 calculate the position of the workpiece W in the global coordinate system by using the position Tx(2D), the position Ty(2D), and the position Rz(2D), whose accuracy is relatively high, among the 6DOF positions calculated by the 2D matching unit 3121, the change amount ΔTx(2D), the change amount ΔTy(2D), and the change amount ΔRz(2D) , whose accuracy is relatively high, among the 6DOF change amounts calculated by the 2D tracking unit 3123, the position Tz(3D), the position Rx(3D), and the position Ry(3D), whose accuracy is relatively high, among the 6DOF positions calculated by the 3D matching unit 3122, and the change amount ΔTz(3D), the change amount ΔRx(3D), and the change amount ΔRy(3D), whose accuracy is relatively high, among the 6DOF change amounts calculated by the 3D tracking unit 3124. Therefore, the control apparatus 3 can calculate the position of the workpiece W in the global coordinate system with higher accuracy, compared to a case where the position of the workpiece W in the global coordinate system is calculated without considering a difference in accuracy of the 6DOF positions calculated by each of the 2D matching unit 3121 and the 3D matching unit 3122 and without considering a difference in accuracy of the 6DOF change amounts calculated by each of the 2D tracking unit 3123 and the 3D tracking unit 3124.

Moreover, the control apparatus 3 calculates the position of the workpiece W in the global coordinate system by correcting the result of the 2D matching processing based on the result of the 2D tracking processing and by correcting the result of the 3D matching processing based on the result of the 3D tracking processing. Therefore, the control apparatus 3 can calculate the position of the workpiece W in the global coordinate system in a shorter cycle (namely, at a higher frequency), compared to a case where the position of the workpiece W in the global coordinate system is calculated based on the result of the 2D matching processing and the 3D matching processing without using the result of the 2D tracking processing and the 3D tracking processing, as described above. Namely, the position calculation unit 312 can calculate the position of the workpiece W in the global coordinate system at a high speed. As a result, the control apparatus 3 can generate (namely, update) and output the control signal to the robot 1 at a high frequency. Incidentally, it can be said that the control apparatus 3 can generate (update) and output the control signal to the robot 1 at a high speed.

For example, the control apparatus 3 may generate the control signal each time the position of the workpiece W is calculated. In this case, the control apparatus 3 can generate the control signal in a cycle that is the same as the cycle in which the position of the workpiece W is calculated (for example, the 2D tracking cycle or the 3D tracking cycle described above). As a result, the control apparatus 3 can output the control signal to the robot 1 in a cycle that is the same as the cycle in which the position of the workpiece W is calculated (for example, the 2D tracking cycle or the 3D tracking cycle described above). If the position of the workpiece W in the global coordinate system is calculated based on the result of the 2D matching processing and the 3D matching processing without using the result of the 2D tracking processing and the 3D tracking processing, the control apparatus 3 generates and outputs the control signal in a cycle (typically, a cycle that is shorter than 2D tracking cycle or the 3D tracking cycle) that is the same as the 2D matching cycle or the 3D matching cycle, which is the cycle in which the position of the workpiece W is calculated. Therefore, in the present example embodiment, the control apparatus 3 can generate (namely, update) and output the control signal to the robot 1 at a higher frequency (namely, at a higher speed), compared to this case. Incidentally, the control apparatus 3 may generate and output the control signal in a cycle that is different from the cycle in which the position of the workpiece W is calculated (for example, a cycle that is different from the 2D tracking cycle or the 3D tracking cycle described above).

This effect is especially beneficial in a case where at least one of the robot 1 and the workpiece W is moving. This is because a period during which the difference between the position of the workpiece W calculated by the control apparatus 3 and the actual position of the workpiece W is large is longer as the frequency at which the position of the workpiece W is calculated is lower in a situation where at least one of the robot 1 and the workpiece W is moving. In the present example embodiment, since the control apparatus 3 calculates the position of the workpiece W in the global coordinate system at a high frequency (at a high speed), the difference between the position of the workpiece W calculated by the control apparatus 3 and the actual position of the workpiece W is relatively small. Therefore, the control apparatus 3 can, in effect, calculate the position of the workpiece W with high accuracy by calculating the position of the workpiece W at a high frequency. As a result, the control apparatus 3 can appropriately generate (namely, update) and output the control signal for controlling the robot 1 to perform the desired process on the workpiece W whose position is calculated with high accuracy at a high frequency. As a result, there is a lower the possibility that the movement of the robot 1 is different from an expected movement.

For example, in a case where the robot 1 picks the moving workpiece W as illustrated in FIG. 5, the control apparatus 3 can control the movement of robot 1 to follow the moving workpiece W (namely, generate and output the robot control signal) in accordance with the calculation cycle of the position of the workpiece W. Therefore, even if the movement of the robot 1 is different from a desired movement for following the moving workpiece, the movement of the robot 1 is corrected at a high frequency (high speed) in accordance with the calculation cycle of the position of the workpiece W. As one example, even if the movement of the moving workpiece W is irregular, the movement of the robot 1 is corrected at a high frequency (high speed) in accordance with the irregular movement of the workpiece W. As another example, even if the workpiece W moves at high speed, the movement of the robot 1 is corrected at a high frequency (high speed) in accordance with the high speed movement of the workpiece. Therefore, the robot 1 can follow the moving workpiece W while minimizing an unnecessary movement. As a result, the robot 1 can pick the moving workpiece W while minimizing the unnecessary movement. Not limited to the example illustrated in FIG. 5, the robot 1 can move relative to the target object such as the workpiece W while minimizing the unnecessary movement. Furthermore, since the position of the target object such as the workpiece W is calculated at a high frequency, there is a lower possibility that the target object such as the workpiece W is deviated from the field of view of the imaging unit 2. Therefore, the robot 1 can move accurately and at high speed relative to the target object such as the workpiece W (for example, follow the target object such as the workpiece W accurately and at high speed) without losing sight of the target object, and can perform the desired process on the target object such as the workpiece W with the end effector 13. Incidentally, in a case where the target object such as the workpiece W is stationary, the robot 1 can move closer to the target object such as the workpiece W accurately and at a high speed, and perform the desired process on the target object such as the workpiece W with the end effector 13.

Thus, in order to achieve the effect of being able to calculate the position of the workpiece W with high accuracy, the control apparatus 3 uses a first method of considering the difference in accuracy of each of the 6DOF positions and change amounts of the workpiece W, which are calculated intermediately in the process of calculating the position of the workpiece W in the global coordinate system, and a second method of correcting the result of the 2D matching processing and the 3D matching processing based on the result of the 2D tracking processing and the 3D tracking processing, respectively. Therefore, the control apparatus 3 can calculate the position of the workpiece W with higher accuracy, compared to a case where only one of the first and second methods is used. However, the control apparatus 3 may use only one of the first and second methods. Even in this case, the control apparatus 3 can calculate the position of the workpiece W with higher accuracy, compared to a case where both of the first and second methods are not used.

Moreover, as described above, the control apparatus 3 considers that the change amount ΔTx(2D) calculated by the 2D tracking processing includes the error, and may reset the total sum of the change amount(s) TX(2D) added to the position Tx(2D) to calculate the position Tx'(2D) in a case where the position Tx(2D) is newly calculated. As a result, the control apparatus 3 can calculate the position Tx'(2D) with higher accuracy, compared to a case where the total sum of the change amount(s) Tx(2D) added to the position Tx(2D) is not reset. For the same reason, the control apparatus 3 can calculate the position Ty'(2D), the position Tz'(3D), the position Rx'(3D), the position Ry'(3D), and the position Rz'(2D) with higher accurately. As a result, the control apparatus 3 can calculate the position of the workpiece W with higher accuracy.

Moreover, in the present example embodiment, the 2D matching cycle may temporally overlap with the 3D matching cycle, and the 2D tracking cycle may temporally overlap with the 3D tracking cycle, as described in FIG. 11 and FIG. 16. In this case, a time at which the imaging apparatus 21 captures the workpiece W for the 2D matching processing may be the same as a time at which the imaging apparatus 22 captures the workpiece W for the 3D matching processing, and the times t1 and t2 at which the imaging apparatus 21 captures the workpiece W for the 2D tracking processing may be the same as the times s1 and s2 at which the imaging apparatus 22 captures the workpiece W for the 3D tracking processing. In this case, the position Tx'(2D), the position Ty'(2D), and the position Rz'(2D) calculated from the result of the 2D matching and the 2D tracking processing and the position Tx'(3D), the position Ty'(3D), and the position Rz'(3D) calculated from the result of the 3D matching and the 3D tracking processing indicate the position of the workpiece W at the same time. Namely, in a case where the position Tx'(2D), the position Ty'(2D), and the position Rz'(2D) of the workpiece W at one time are calculated from the result of the 2D matching and the 2D tracking processing, the position Tz'(3D), the position Rx'(3D), and the position Ry'(3D) of the workpiece W at the same one time are calculated from the result of the 3D matching processing and the 3D tracking processing. As a result, the control apparatus 3 can calculate the position of the workpiece W at one time in the global coordinate system with higher accuracy based on the position Tx'(2D), the position Ty'(2D), and the position Rz'(2D) of the workpiece W at the one time and the position Tz'(3D), the position Rx'(3D), and the position Ry'(3D) of the workpiece W at the one time.

If the 2D matching cycle does not temporally overlap with the 3D matching cycle and the 2D tracking cycle does not temporally overlap with the 3D tracking cycle, there is a possibility that the control apparatus 3 the position of the workpiece W at one time or another time based on the position Tx'(2D), the position Ty'(2D), and the position Rz'(2D) of the workpiece W at the one time and the position Tz'(3D), the position Rx'(3D), and the position Ry'(3D) of the workpiece W at the another time in some cases. Here, especially in a case where the imaging apparatuses 21 and 22 and the workpiece W are moving relative to each other, there is a possibility that the position of the workpiece W at one time is different from the position of the workpiece W at another time. Therefore, a technical problem occurs that the accuracy of the position of the workpiece W, which is calculated based on the position Tx'(2D), the position Ty'(2D), and the position Rz'(2D) of the workpiece W at one time and the position Tz'(3D), the position Rx'(3D), and the position Ry'(3D) of the workpiece W at another time, deteriorates. However, in a case where the 2D matching cycle temporally overlaps the 3D matching cycle and the 2D tracking cycle temporally overlaps the 3D tracking cycle, this technical problem does not occur. However, as described above, the 2D matching cycle may not temporally overlap with the 3D matching cycle, and the 2D tracking cycle may not temporally overlap with the 3D tracking cycle.

Moreover, since the imaging apparatus 21 for generating the workpiece image data IMG_2D and the imaging apparatus 22 for generating the workpiece image data IMG_3D are provided separately, the control apparatus 3 can acquire the workpiece image data IMG_2D from the imaging apparatus 21 and acquire the workpiece image data IMG_3D from the imaging apparatus 22 at the same time. Therefore, compared to a case where the imaging apparatus 21 for generating the workpiece image data IMG_2D and the imaging apparatus 22 for generating the workpiece image data IMG_3D are not provided separately (for example, a single imaging apparatus for generating the workpiece image data IMG_2D and IMG_3D is provided), an acquisition frequency of the workpiece image data IMG_2D and IMG_3D is higher. As a result, a calculation frequency of the position of the workpiece W is also higher. Therefore, as described above, the control apparatus 3 can appropriately generate (namely, update) and output the control signal for controlling the robot 1 to perform the desired process on the workpiece W whose position is calculated at high frequency.

### (4) Modified Example

Next, a modified example of the robot system SYS will be described. In the below-described modified example, an example in which the target object whose position is calculated by the position calculation unit 312 is the workpiece W will be described. However, the below-described modified example may also be applied in a case where the target object is different from the workpiece W.

### (4-1) First Modified Example

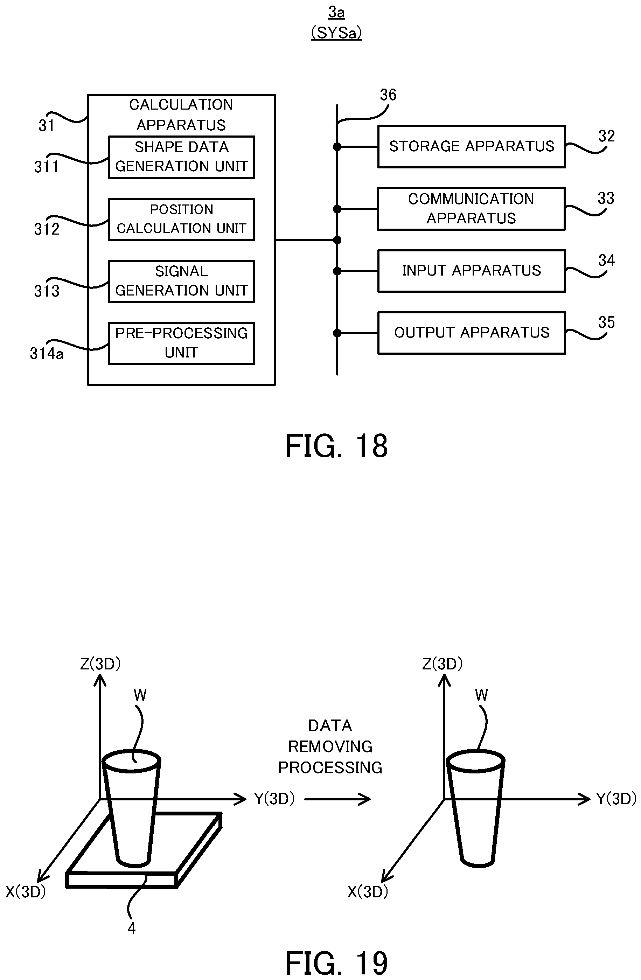

Firstly, a first modified example of the robot system SYS will be described. Incidentally, in the below-described description, the first modified example of the robot system SYS is referred to as a "robot system SYSa" to distinguish it from the robot system SYS described above. The robot system SYSa in the first modified example may be different from the robot system SYS described above in that it includes a control apparatus 3a instead of the control apparatus 3. Other feature of the robot system SYSa may be the same as other feature of the robot system SYS. Therefore, in the below-described description, with reference to FIG. 18, the control apparatus 3a in the first modified example will be described. FIG. 18 is a block diagram that illustrates a configuration of the control apparatus 3a in the first modified example.

As illustrated in FIG. 18, the control apparatus 3a in the first modified example is different from the control apparatus 3 described above in that the calculation apparatus 31 includes a pre-processing unit 314a as the logical processing block. The pre-processing unit 314a performs a pre-processing before the matching processing and the tracking processing are performed. Other feature of the control apparatus 3a may be the same as other feature of the control apparatus 3.

The pre-processing unit 314a may perform the pre-processing on the workpiece shape data WSD generated by the shape data generation unit 311. In this case, the 3D matching unit 3122 may perform the 3D matching processing by using the workpiece shape data WSD on which the pre-processing has been performed. The 3D tracking unit 3124 may perform the 3D tracking processing by using the two workpiece shape data WSD on each of which the pre-processing has been.

The pre-processing performed on the workpiece shape data WSD may include a data removing processing to remove partial data part of the workpiece shape data WSD. Specifically, the workpiece shape data WSD may include not only a data part indicating the shape of the workpiece W, but also a data part indicating a shape of an object that is different from the workpiece W (namely, an object that is different from the target object). For example, since the workpiece shape data WSD is generated from the workpiece image data IMG_3D generated by the imaging apparatus 22 capturing the workpiece W placed on the placing apparatus 4, the workpiece shape data WSD may include a data part indicating the shape of the placing apparatus 4. Therefore, as illustrated in FIG. 19, the pre-processing unit 314a may remove the data part indicating the shape of the placing apparatus 4 from the workpiece shape data WSD.

A placement surface of the placing apparatus 4 on which the workpiece W is placed may be a planar surface. In this case, the pre-processing unit 314a may perform a planar surface removing processing, which is one example of the data removing processing, on the workpiece shape data WSD. At least one of a planar surface removing processing using a RANSAC (Random Sample Consensus) and a planar surface removing processing using a least-squares method is one example of the planar surface removing processing.

This data removing processing reduces the data size of the workpiece shape data WSD. As a result, the calculation amount required for the 3D matching processing using the workpiece shape data WSD and the 3D tracking processing using the workpiece shape data WSD are reduced. Therefore, the 3D matching cycle, which is the period required for the 3D matching unit 3122 to complete the 3D matching processing, and the 3D tracking cycle, which is the period required for the 3D tracking unit 3124 to complete the 3D tracking processing, can be reduced.

Moreover, this data removing processing reduces a possibility that the position calculation unit 312 misrecognizes the data part indicating the shape of the object that is different from the workpiece W (namely, the object that is different from the target object) as the data part indicating the shape of the workpiece W. This is because the data part indicating the shape of the object that is different from the workpiece W, which may be noise for the tracking processing and the matching processing described above, is removed. Therefore, the position calculation unit 312 can appropriately recognize the data part indicating the shape of the workpiece W. For example, in a case where the workpiece shape data WSD is the point cloud data, the position calculation unit 312 can appropriately recognize the point cloud related to the workpiece W. For example, in a case where the workpiece shape data WSD is the depth image data, the position calculation unit 312 can appropriately recognize the depth information related to the workpiece W. As a result, the position detection unit 312 can calculate the position of the workpiece W more accurately, compared to a case where the data removing processing is not performed.

Incidentally, the pre-processing unit 314a may remove the data part indicating the shape of the object different from the workpiece W from the workpiece shape data WSD based on a user instruction designating the data part of the workpiece shape data WSD indicating the shape of the object different from the workpiece W. Specifically, the control apparatus 3 may use the output apparatus 35 including the display apparatus to display a graphical user interface (GUI) that is operable by the user to designate partial data part of the workpiece shape data WSD as the data part indicating the shape of the object different from the workpiece W. For example, the control apparatus 3 may use the output apparatus 35 including the display apparatus to display a plurality of points indicated by the point cloud data, which is one example of the workpiece shape data WSD, and display a GUI that is operable by the user to designate a point among the plurality of points indicating the shape of the object different from the workpiece W. For example, the control apparatus 3 may use the output apparatus 35 including the display apparatus to display the depth image indicated by the depth image data, which is one example of the workpiece shape data WSD, and display a GUI that is operable by the user to designate a pixel in the depth image indicating the shape of the object different from the workpiece W.

The pre-processing unit 314a may perform the pre-processing on at least one of the workpiece image data IMG_2D and IMG_3D. In this case, the 2D matching unit 3121 may perform the 2D matching processing by using the workpiece image data IMG_2D on which the pre-processing has been performed. The 2D tracking unit 3123 may perform the 2D tracking processing by using the two workpiece image data IMG_2D on each of which the pre-processing has been performed. The shape data generation unit 311 may generate the workpiece shape data WSD by using the workpiece image data IMG_3D on which the pre-processing has been performed. The 3D matching unit 3122 may perform the 3D matching processing by using the workpiece shape data WSD generated from the workpiece image data IMG_3D on which the pre-processing has been performed. The 3D tracking unit 3124 may perform the 3D tracking processing by using the two workpiece shape data WSD generated from the two workpiece image data IMG_3D on each of which the pre-processing has been performed.

The pre-processing performed on at least one of the workpiece image data IMG_2D and IMG_3D may include a gamma correction processing. The gamma correction process may include a correction processing for emphasizing an edge of the workpiece W in the workpiece image data IMG_2D (alternatively, the workpiece image data IMG_3D) by adjusting a contrast of the workpiece image data IMG_2D (alternatively, the workpiece image data IMG_3D).

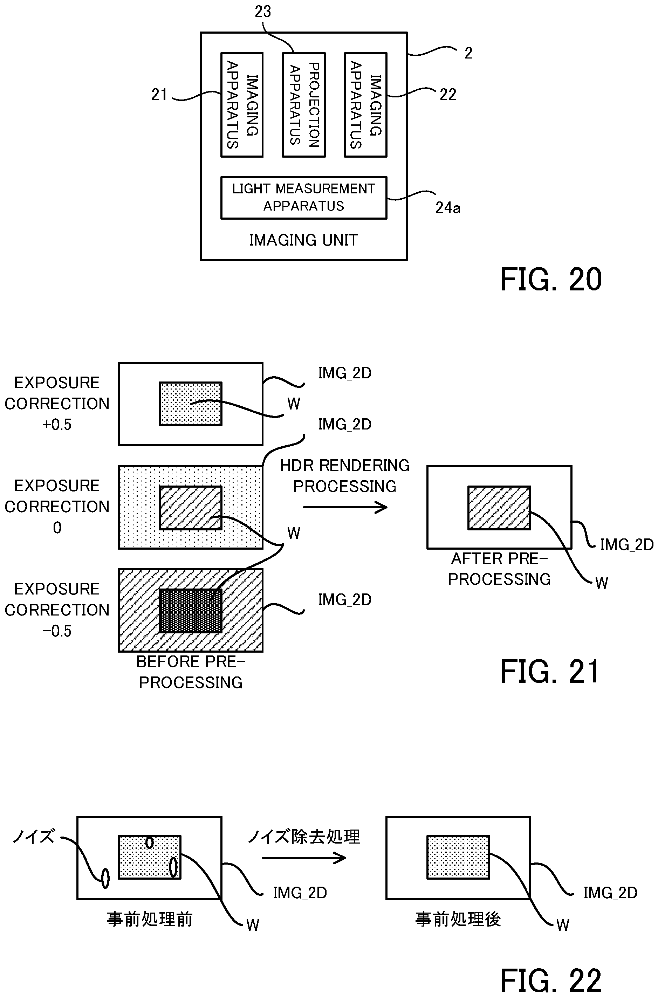

Incidentally, in a case where the gamma correction processing is performed, at least one of the imaging apparatuses 21 and 22 may be configured to automatically adjust an exposure. Specifically, in a case where the gamma correction processing is performed, the imaging unit 2 may include a light measurement apparatus 24a that is configured to measure an luminance (namely, a brightness) of the workpiece W, as illustrated in FIG. 20. At least one of the imaging apparatuses 21 and 22 may automatically adjust the exposure based on the measured result by the light measurement apparatus 24a. Alternatively, at least one of the imaging apparatuses 21 and 22 may automatically adjust the exposure based on a brightness value (for example, an average value of the brightness values of the plurality of pixels) of the actually generated workpiece image data IMG_2D (alternatively, workpiece image data IMG_3D), in addition to or instead of the measured result by the light measurement apparatus 24a. As one example, at least one of the imaging apparatuses 21 and 22 may automatically adjust the exposure so that the brightness value of the workpiece image data IMG_2D (alternatively, the workpiece image data IMG_3D) is within a desired range. In this case, it is possible to adjust the contrast of the workpiece image data IMG_2D (alternatively, the workpiece image data IMG_3D) more appropriately by the gamma correction processing to emphasize the edge of the workpiece W included in the workpiece image data IMG_2D (alternatively, the workpiece image data IMG_3D).

The pre-processing performed on at least one of the workpiece image data IMG_2D and IMG_3D may include a High-Dynamic-Range rendering processing. As illustrated in FIG. 21, the High-Dynamic-Range processing may include a processing for combining a plurality of workpiece image data IMG_2D (alternatively, a plurality of workpiece image data IMG_3D) generated by capturing the workpiece W under a plurality of imaging environments with different exposures to generate the workpiece image data IMG_2D (alternatively, the workpiece image data IMG_3D) with a wide dynamic range in which there is few white clipping and black clipping.

The pre-processing performed on at least one of the workpiece image data IMG_2D and IMG_3D may include a de-noise processing. The de-noise processing may be a processing to generate the workpiece image data IMG_2D (alternatively, workpiece image data IMG_3D) with less noise by removing noise included in the workpiece image data IMG_2D (alternatively, workpiece image data IMG_3D), as illustrated in FIG. 22. The pre-processing unit 314a may perform, as the de-noise processing, a known filtering processing on at least one of the workpiece image data IMG_2D and IMG_3D. For example, the pre-processing unit 314a may perform at least one filtering processing of an averaging filter, a median filter, and a dilation filter on at least one of the workpiece image data IMG_2D and IMG_3D.

Incidentally, the pre-processing unit 314a may perform a known filtering processing, which is other than the de-noise processing, on at least one of the workpiece image data IMG_2D and IMG_3D. For example, the pre-processing unit 314a may perform a filter processing of at least one of a smoothing filter and an edge enhancement filter on at least one of the workpiece image data IMG_2D and IMG_3D.

### (4-2) Second Modified Example

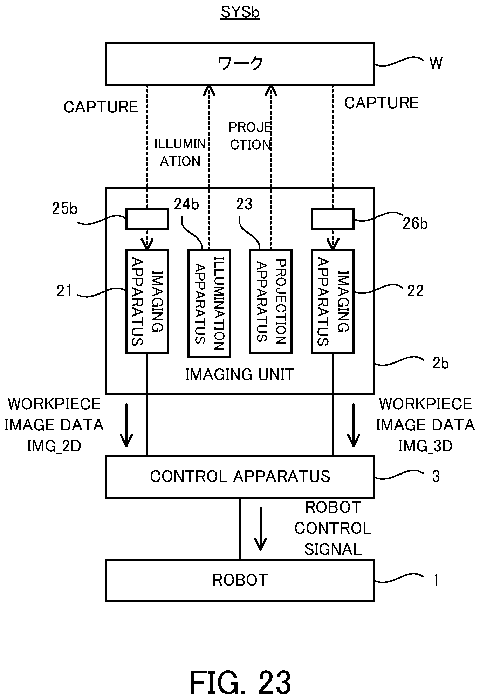

Next, with reference to FIG. 23, a second modified example of the robot system SYS will be described. FIG. 23 is a block diagram that illustrates a configuration of the robot system SYS in the second modified example. Incidentally, in the below-described description, the second modified example of the robot system SYS is referred to as a "robot system SYSb" to distinguish it from the robot system SYS described above.

As illustrated in FIG. 23, the robot system SYSb in the second modified example may be different from the robot system SYS described above in that it includes an imaging unit 2b instead of the imaging unit 2. Other feature of the robot system SYSb may be the same as other feature of the robot system SYS.

The imaging unit 2b in the second modified example is different from the imaging unit 2 described above in that it includes an illumination apparatus 24b, a filter 25b, and a filter 26b. Other feature of the imaging unit 2b may be the same as other feature of the imaging unit 2.

The illumination apparatus 24b is an apparatus that is configured to illuminate the workpiece W with illumination light. Especially, the illumination apparatus 24b is an apparatus that is configured to illuminate the workpiece W with the illumination light by irradiating the workpiece W with the illumination light. The illumination apparatus 24b may illuminate the workpiece W with the illumination light including light component in a second wavelength bandwidth (for example, a wavelength bandwidth of red light). On the other hand, the projection apparatus 23 may illuminate the workpiece W with the projection light including light component in a first wavelength bandwidth (for example, a wavelength bandwidth of blue light) that is different from the second wavelength bandwidth. Incidentally, the projection apparatus 23 is an apparatus that projects the desired projection pattern on the workpiece W by irradiating the workpiece W with the projection light. In this case, the projection apparatus 23 may be considered to illuminate the workpiece W with the projection light. Namely, the projection apparatus 23 may be regarded as an illumination apparatus that illuminates the workpiece W with the projection light. Incidentally, as described above, in a case where the projection apparatus 23 is considered to be the illumination apparatus, the projection light may not be the light capable of projecting the desired projection pattern on the target object.

The filter 25b is capable of attenuating light component in the first wavelength bandwidth. The imaging apparatus 21 captures the workpiece W by optically receiving light from the workpiece W through the filter 25b with an imaging element. Here, the filter 25b attenuates the projection light because the projection light from the projection apparatus 23 includes the light component in the first wavelength bandwidth as described above. Therefore, return light (for example, at least one of reflected light and scattered light of the projection light) from the workpiece W that has been irradiated with the projection light (namely, on which the projection pattern has been projected) is attenuated by the filter 25b. As a result, even in a case where the projection apparatus 23 irradiates the workpiece W with the projection light in order to allow the imaging apparatus 22 to capture the workpiece W, the imaging apparatus 21 can properly capture the workpiece W illuminated with the illumination light emitted from the illumination apparatus 24b without being affected by the projection light emitted from the projection apparatus 23.

The filter 26b is capable of attenuating light component in the second wavelength bandwidth. The imaging apparatus 22 captures the workpiece W (in other words, the projection pattern projected on the workpiece W) by optically receiving light from the workpiece W through the filter 26b with the imaging element. Here, the filter 26b attenuates the illumination light because the illumination light includes the light component in the second wavelength bandwidth as described above. Therefore, return light (for example, at least one of reflected light and scattered light of the illumination light) from the workpiece W that has been irradiated with the illumination light from the illumination apparatus 24b is attenuated by the filter 26b. As a result, even in a case where the illumination apparatus 24b irradiates the workpiece W with the illumination light in order to allow the imaging apparatus 21 to capture the workpiece W, the imaging apparatus 22 can properly capture the workpiece W(in other words, the projection pattern projected on the workpiece W) illuminated with the projection light emitted from the projection apparatus 23 without being affected by the illumination light emitted from the illumination apparatus 24b.

Thus, in the second modified example, the imaging apparatus 21 can capture the workpiece W without being affected by the capture of the workpiece W (the projection pattern projected on the workpiece W) by the imaging apparatus 22. Similarly, the imaging apparatus 22 can capture the workpiece W without being affected by the capture of the workpiece W (the projection pattern projected on the workpiece W) by the imaging apparatus 21. Therefore, the imaging apparatuses 21 and 22 can capture the workpiece W at the same time. Namely, even in a case where the time at which the imaging apparatus 21 captures the workpiece W is the same as the time at which the imaging apparatus 22 captures the workpiece W (the projection pattern projected on the workpiece W), each of the imaging apparatuses 21 and 22 can capture the workpiece W appropriately.

### (4-3) Third Modified Example

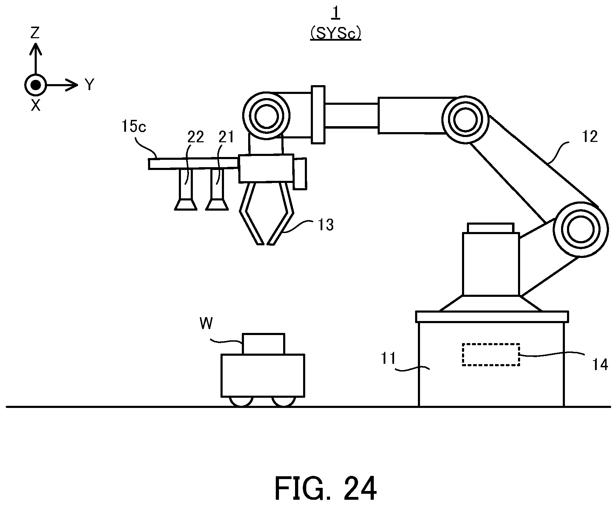

Next, with reference to FIG. 24, a third modified example of the robot system SYS will be described. FIG. 24 is a side view that illustrates an external appearance of the robot system SYS in the third modified example. Incidentally, in the below-described description, the third modified example of the robot system SYS is referred to as a "robot system SYSc" to distinguish it from the robot system SYS described above.

As illustrated in FIG. 24, the robot system SYSc in the third modified example may be different from the robot system SYS described above in that a positional relationship between the robotic arm 12 and each of the imaging apparatuses 21 and 22 is changed. Other feature of the robot system SYSc may be the same as other feature of the robot system SYS.

Specifically, as illustrated in FIG. 24, in the third modified example, the imaging apparatus 22 may be mounted at a position that is farther away from the robotic arm 12 than the position at which the imaging apparatus 21 is mounted is. The imaging apparatuses 21 and 22 may be mounted to the robotic arm 12 so that a distance from the imaging apparatus 22 to the robotic arm 12 is longer than a distance from the imaging apparatus 21 to the robotic arm 12. The imaging apparatus 22 may be mounted at a position that is farther away from the end effector 13 than the position at which the imaging apparatus 21 is mounted is. The imaging apparatuses 21 and 22 may be mounted to the robotic arm 12 so that a distance from the imaging apparatus 22 to the end effector 13 is longer than a distance from the imaging apparatus 21 to the end effector 13.

The imaging apparatuses 21 and 22 may be mounted to the robotic arm 12 through a support member 15c. In this case, the imaging apparatus 21 may be mounted to a first part of the support member 15c. The imaging apparatus 22 may be mounted to a second part of the support member 15c that is farther away from the robotic arm 12 than the first part is. The imaging apparatus 22 may be mounted on the second part of the support member 15c that is farther away from the end effector 13 than the first part is.

In the third modified example, there is a higher possibility that the imaging apparatus 21 can capture the workpiece W from a space directly above the workpiece W or in the vicinity of this space, compared to the imaging apparatus 22. This is because there is a high possibility that the end effector 13 is located directly above the workpiece W in a case where the end effector 13 performs the predetermined process on the workpiece W, and therefore, there is a higher possibility that the imaging apparatus 21, which is located relatively close to the end effector 13, can also capture the workpiece W from the space directly above the workpiece W or in the vicinity of this space. In a case where the imaging apparatus 21 captures the workpiece W from the space directly above the workpiece W or in the vicinity of this space, there is a high possibility that the imaging apparatus 21 can capture the workpiece W in a state where an angle at which the Z-axis(2D) of the 2D imaging coordinate system intersects an upper surface of the workpiece W is close to 90 degrees. As a result, the control apparatus 3 can calculate the position Tx(2D), the position Ty(2D), and the position Rz(2D), the change amount ΔTx(2D), the change amount ΔTy(2D), and the change amount ΔRz(2D) described above with higher accuracy from the workpiece image data IMG_2D. Furthermore, the imaging apparatus 21 can generate the workpiece image data IMG_2D indicating the image including the workpiece W whose distortion of the upper surface is less. Therefore, compared to a case where the workpiece image data IMG_2D indicating the image including the workpiece W whose distortion of the upper surface is much is used, the control apparatus 3 can appropriately recognize a mark formed on the upper surface of the workpiece W from the workpiece image data IMG_2D under a situation where the mark is formed on the upper surface of the workpiece W. In this case, the control apparatus 3 can perform a processing using the mark with high accuracy. For example, in a case where the control apparatus 3 performs, as the processing using the mark, a processing for calculating the position of the workpiece W based on the position of the mark, the control apparatus 3 can calculate the position of the workpiece W with higher accuracy.

On the other hand, there is a high possibility that the imaging apparatus 22 can capture the workpiece W from a space diagonally above the workpiece W, as compared to the imaging apparatus 21. As a result, there is a high possibility that the imaging apparatus 22 can capture not only the upper surface of the workpiece W, but also a side surface of the workpiece W (alternatively, any surface other than the upper surface). In this case, there is a high possibility that the workpiece shape data WSD generated from the workpiece image data IMG_3D indicates not only the three-dimensional shape of the upper surface of the workpiece W, but also the three-dimensional shape of the side surface (alternatively, any surface other than the upper surface). Therefore, it is possible to generate the workpiece shape data WSD that reflects the three-dimensional shape of the workpiece W more appropriately. Furthermore, in a case where the workpiece shape data WSD indicates not only the three-dimensional shape of the upper surface of the workpiece W but also the three-dimensional shape of the side surface of the workpiece W (alternatively, alternatively, any surface other than the upper surface), the 3D matching unit 3122 and the 3D tracking unit 3124 can determine the feature part (for example, at least one of the feature point and the edge) of the workpiece W more easily. As a result, the control apparatus 3 can perform each of the 3D matching processing and the 3D tracking processing more appropriately.

Incidentally, the projection apparatus 23 described above may be mounted to the support member 15c or the robotic arm 12. Moreover, the projection apparatus 23 described above may be mounted to a position that is different from the support member 15c or the robotic arm 12. Incidentally, the illumination apparatus 24b described above may be mounted to the support member 15c or the robotic arm 12. Moreover, the illumination apparatus 24b described above may be mounted to a position that is different from the support member 15c or the robotic arm 12.

### (4-4) Other Modified Example

### (4-4-1) Modified Example of Robot 1

In the above description, the end effector 13 (for example, the hand gripper) that performs at least one of the picking process, the placing processing, and the fitting processing is mounted to the robotic arm 12. However, the end effector 13 is not limited to an apparatus that performs at least one of the picking process, the placing processing, and the fitting processing, but may also be an apparatus that performs other processing on the target object such as the workpiece W.

As one example, a processing apparatus for processing the workpiece W may be mounted to the robotic arm 12 as one example of the end effector 13. The processing apparatus may perform at least one of an additive manufacturing for adding a new build object to the workpiece W, a subtractive manufacturing for removing a part of the workpiece W, a welding processing for jointing two workpieces W, and a cutting processing for cutting the workpiece W. The processing apparatus may process the workpiece W by using a tool. In this case, the processing apparatus including the tool may be mounted to the robotic arm 12. Alternatively, the processing apparatus may process the workpiece W by irradiating the workpiece W with an energy beam (for example, light, electromagnetic wave, and charged particle beam). In this case, the processing apparatus including an irradiation apparatus that irradiates the workpiece W with the energy beam may be mounted to the robotic arm 12.

The processing apparatus that is one example of the end effector 13 may perform soldering processing for soldering a component to the workpiece W. The processing apparatus may solder the component to the workpiece W by using a soldering copper. In this case, the processing apparatus including the soldering copper may be mounted to the robotic arm 12. Alternatively, the processing apparatus may solder the component to the workpiece W by irradiating the solder with an energy beam (for example, light, electromagnetic wave, and charged particle beam). In this case, the processing apparatus including an irradiation apparatus that irradiates the workpiece W with the energy beam may be mounted to the robotic arm 12.

As another example, a measurement apparatus for measuring the workpiece W may be mounted to the robotic arm 12 as one example of the end effector 13. The measurement apparatus may be configured to measure a characteristic of the workpiece W. At least one of the shape of the workpiece W, a size of the workpiece W, and a temperature of the workpiece W is one example of the characteristic of the workpiece W. The measurement apparatus may measure the workpiece W by using a touch probe. In this case, the measurement apparatus including the touch probe may be mounted to the robotic arm 12. Alternatively, the measurement apparatus may measure the workpiece W by irradiating the workpiece W with an energy beam (for example, light, electromagnetic wave, and charged particle beam). In this case, the measurement apparatus including an irradiation apparatus that irradiates the workpiece W with the energy beam may be mounted to the robotic arm 12.

In a case where at least one of the processing apparatus and the measurement apparatus is mounted to the robotic arm 12 as an example of the end effector 13, the control apparatus 3 may generate the control signal for control the operation of at least one of the processing apparatus and the measurement apparatus. For example, the control apparatus 3 may generate the control signal for control a rotation of the tool of the processing apparatus. For example, the control apparatus 3 may generate the control signal for control ON and OFF of the energy beam by the irradiation apparatus of at least one of the processing apparatus and the measurement apparatus.

### (4-4-2) Modified Example of Imaging unit 2

In the above-described description, the imaging unit 2 includes the imaging apparatus 22 and the projection apparatus 23 to generate the workpiece image data IMG_3D. However, the imaging unit 2 may not include the projection apparatus 23 to generate the workpiece image data IMG_3D. This is because the imaging apparatus 22 is the stereo camera as described above and it is possible to generate the workpiece shape data WSD, which indicates the shape of the target object such as the workpiece W, from the two workpiece image data IMG_3D generated by the two imaging elements of the stereo camera, respectively. In this case, the shape data generation unit 311 may calculate the parallax by performing the matching for each part (for example, each pixel) of the images indicated by the two image data, respectively, included in the workpiece image data IMG_3D, and generate the workpiece shape data WSD by using the well-known method based on the principle of triangulation using the calculated parallax.

The imaging apparatus 22 may not be the stereo camera. For example, the imaging apparatus 22 may be a monocular camera that captures the object such as the workpiece W by using a single imaging element. Even in this case, the image indicated by the workpiece image data IMG_3D includes the workpiece W on which the projection pattern is projected. In this case, the shape of the projection pattern in the image indicated by the workpiece image data IMG_3D reflects the three-dimensional shape of the workpiece W on which the projection pattern is projected. Therefore, even in a case where the imaging apparatus 22 is not the stereo camera, the shape data generation unit 311 can generate the workpiece shape data WSD by a well-known processing based on the projection pattern that is included in the image indicated by the workpiece image data IMG_3D.

The imaging unit 2 may include either one of the imaging apparatuses 21 and 22 (namely, a single imaging apparatus) and the projection apparatus 23. In this case, the image data generated by the single imaging apparatus capturing the workpiece W in a period during which the projection apparatus 23 does not project the desired projection pattern on the workpiece W may be used as the workpiece image data IMG_2D. On the other hand, the image data generated by the single imaging apparatus capturing the workpiece W in a period during which the projection apparatus 23 projects the desired projection pattern on the workpiece W may be used as the workpiece image data IMG_3D. Even in this case, the position calculation unit 312 calculates the position of the workpiece W based on the workpiece image data IMG_2D and the workpiece shape data WSD generated from the workpiece image data IMG_3D at the step S3 in FIG. 4. Specifically, the 2D matching unit 3121 may calculate, as the position of the workpiece W in the 2D imaging coordinate system, at least one of the position Tx(2D), the position Ty(2D), the position Tz(2D), the position Rx(2D), the position Ry(2D), and the position Rz(2D) by performing the 2D matching processing. The 3D matching unit 3122 may calculate, as the position of the workpiece W in the 3D imaging coordinate system, at least one of the position Tx(3D), the position Ty(3D), the position Tz(3D), the position Rx(3D), the position Ry(3D), and the position Rz(3D) by performing the 3D matching processing. The 2D tracking unit 3123 may calculate at least one of the change amount ΔTx(2D), the change amount ΔTy(2D), the change amount ΔTz(2D), the change amount ΔRx(2D), the change amount ΔRy(2D), and the change amount ΔRz(2D) by performing the 2D tracking processing. The 3D tracking unit 3124 may calculate at least one of the change amount ΔTx(3D), the change amount ΔTy(3D), the change amount ΔTz(3D), the change amount ΔRx(3D), the change amount ΔRy(3D), and the change amount ΔRz(3D) by performing the 3D tracking processing. However, in a case where the imaging unit 2 includes either one of the imaging apparatuses 21 and 22 (namely, the single imaging apparatus), the 2D imaging coordinate system and the 3D imaging coordinate system are the same coordinate system. Therefore, it can be said that the 2D matching unit 3121 and the 3D matching unit 3122 calculate the 6DOF positions of the workpiece W in the same coordinate system. Similarly, it can be said that the 2D tracking unit 3123 and the 3D tracking unit 3124 calculate the change amount of the 6DOF positions of the workpiece W in the same coordinate system. Then, the coordinate conversion unit 3125 may calculate the position of the workpiece W in the global coordinate system by using the result of the 2D matching processing, the result of the 3D matching processing, the result of the 2D tracking processing, and the 3D tracking processing. Incidentally, in a case where the 2D imaging coordinate system and the 3D imaging coordinate system are the same coordinate system, the coordinate conversion unit 3125 may not perform the coordinate conversion using the above-described conversion matrix M32 or M23. This is because the result of the 2D matching processing and the result of the 3D matching processing may be considered to already indicate the 6DOF positions of the workpiece W in the same coordinate system that may be used as the common coordinate system, and the result of the 2D tracking processing and the result of the 3D tracking processing may be considered to already indicate the change amount of the 6DOF positions of the workpiece W in the same coordinate system that may be used as the common coordinate system. Then, the signal generation unit 313 may generate the robot control signal based on the calculated position of the workpiece W.

The imaging unit 2 may include the imaging apparatus 22 that is the stereo camera, but may not include the imaging apparatus 21. In this case, the image data generated by either one of the two monocular cameras of the imaging apparatus 22 capturing the workpiece W may be used as the workpiece image data IMG_2D. On the other hand, the image data indicating the two images respectively generated by both of the two monocular cameras of the imaging apparatus 22 capturing the workpiece W may be used as the workpiece image data IMG_3D. Even in this case, the position calculation unit 312 calculates the position of the workpiece W based on the workpiece image data IMG_2D and the workpiece shape data WSD generated from the workpiece image data IMG_3D at the step S3 in FIG. 4. Specifically, the 2D matching unit 3121 may calculate, as the position of the workpiece W in the 2D imaging coordinate system, at least one of the position Tx(2D), the position Ty(2D), the position Tz(2D), the position Rx(2D), the position Ry(2D), and the position Rz(2D) by performing the 2D matching processing. The 3D matching unit 3122 may calculate, as the position of the workpiece W in the 3D imaging coordinate system, at least one of the position Tx(3D), the position Ty(3D), the position Tz(3D), the position Rx(3D), the position Ry(3D), and the position Rz(3D) by performing the 3D matching processing. The 2D tracking unit 3123 may calculate at least one of the change amount ΔTx(2D), the change amount ΔTy(2D), the change amount ΔTz(2D), the change amount ΔRx(2D), the change amount ΔRy(2D), and the change amount ΔRz(2D) by performing the 2D tracking processing. The 3D tracking unit 3124 may calculate at least one of the change amount ΔTx(3D), the change amount ΔTy(3D), the change amount ΔTz(3D), the change amount ΔRx(3D), the change amount ΔRy(3D), and the change amount ΔRz(3D) by performing the 3D tracking processing. Incidentally, in a case where the imaging apparatus 22 that is the stereo camera generates the workpiece image data IMG_2D and IMG_3D, the 2D imaging coordinate system and the 3D imaging coordinate system may be the same coordinate system, or the 2D imaging coordinate system and the 3D imaging coordinate system may be coordinate systems different from each other. For example, a coordinate system whose Z-axis is the axis extending along the optical axis of one of the two monocular cameras may be used as each of the 2D imaging coordinate system and the 3D imaging coordinate system. In this case, the 2D imaging coordinate system and the 3D imaging coordinate system may be the same coordinate system. Alternatively, the coordinate system whose Z-axis is the axis extending along the optical axis of one of the two monocular cameras may be used as the 2D imaging coordinate system, and the coordinate system whose Z-axis is the axis extending along the optical axis of the other one of the two monocular cameras may be used as each of the 3D imaging coordinate system. In this case, the 2D imaging coordinate system and the 3D imaging coordinate system may be the coordinate systems different from each other. In a case where the 2D imaging coordinate system and the 3D imaging coordinate system are the same coordinate system, it can be said that the 2D matching unit 3121 and the 3D matching unit 3122 calculate the 6DOF positions of the workpiece W in the same coordinate system. Similarly, it can be said that the 2D tracking unit 3123 and the 3D tracking unit 3124 calculate the change amount of the 6DOF positions of the workpiece W in the same coordinate system. Then, the coordinate conversion unit 3125 may calculate the position of the workpiece W in the global coordinate system by using the result of the 2D matching processing, the result of the 3D matching processing, the result of the 2D tracking processing, and the 3D tracking processing. Incidentally, in a case where the 2D imaging coordinate system and the 3D imaging coordinate system are the same coordinate system, the coordinate conversion unit 3125may not perform the coordinate conversion using the above-described conversion matrix M32 or M23. This is because the result of the 2D matching processing and the result of the 3D matching processing may be considered to already indicate the 6DOF positions of the workpiece W in the same coordinate system that may be used as the common coordinate system, and the result of the 2D tracking processing and the result of the 3D tracking processing may be considered to already indicate the change amount of the 6DOF positions of the workpiece W in the same coordinate system that may be used as the common coordinate system. Then, the signal generation unit 313 may generate the robot control signal based on the calculated position of the workpiece W.

### (4-4-3) Modified Example of Control Apparatus 3

In the above-described description, the control apparatus 3 (especially, the shape data generation unit 311) generates the workpiece shape data WSD from the workpiece image data IMG_3D. However, an apparatus that is different from the control apparatus 3 may generate the workpiece shape data WSD from the workpiece image data IMG_3D. For example, the imaging unit 2 that generates the workpiece image data IMG_3D may generate the workpiece shape data WSD from the workpiece image data IMG_3D. In this case, the control apparatus 3 may acquire the workpiece shape data WSD from the apparatus that is different from the control apparatus 3. The control apparatus 3 may perform at least one of the 3D matching processing and the 3D tracking processing described above by using the workpiece shape data WSD acquired from the apparatus that is different from the control apparatus 3. For example, in a case where the imaging unit 2 generates the workpiece shape data WSD from the workpiece image data IMG_3D, the control apparatus 3 may acquire the workpiece shape data WSD from the imaging unit 2 and perform at least one of the 3D matching and 3D tracking processing described above.

In the above-described description, in a case where the 2D imaging coordinate system is used as the common coordinate system, the coordinate conversion unit 3215 uses the conversion matrix M32 to convert the position Tz'(3D), the position Rx'(3D), and the position Ry'(3D) to the position Tz'(2D), the position Rx'(2D), and the position Ry'(2D). However, the coordinate conversion unit 3215 may calculate the position Tz'(2D), the position Rx'(2D), and the position Ry'(2D) by using a below-described method. Specifically, the coordinate conversion unit 3215 may calculate the position Tx'(3D) by adding the change amount ΔTx(3D) to the position Tx(3D), calculate the position Ty'(3D) by adding the change amount ΔTy(3D) to the position Ty(3D), and calculate the position Rz'(3D) by adding the change amount ΔRz(3D) to the position Rz(3D), in addition to calculating the position Tz'(3D), the position Rx'(3D), and the position Ry'(3D). Incidentally, a method of calculating the position Tx'(3D) by adding the change amount ΔTx(3D) to the position Tx(3D), a method of calculating the position Ty'(3D) by adding the change amount ΔTy(3D) to the position Ty(3D), and a method of adding the change amount ΔRz(3D) to the position Rz(3D) may be the same as the method of calculating the position Tz'(3D) by adding the change amount ΔTz(3D) to the position Tz(3D) already described, so a detailed description thereof is omitted. Namely, the coordinate conversion unit 3215 may calculate the 6DOF positions in the 3D imaging coordinate system based on the result of the 3D matching processing and the result of the 3D tracking processing. Then, the coordinate conversion unit 3215 may calculate a rigid body conversion matrix RTM30 from the 6DOF positions in the 3D imaging coordinate system by using a well-known method for calculating a rigid body conversion matrix. Then, the coordinate conversion unit 3215 may calculate a conversion matrix TM30, which indicates the 6DOF positions in the 2D imaging coordinate system, by calculating a product of the rigid body conversion matrix RTM30 and the conversion matrix M32. Then, the coordinate conversion unit 3215 may calculate the 6DOF positions in the 2D imaging coordinate system from the calculated conversion matrix TM30 by using a well-known method. Then, the coordinate conversion unit 3215 may calculate, from the calculated 6DOF positions in the 2D imaging coordinate system, the position in the Z-axis(2D) direction of the 2D imaging coordinate system, the position in the rotational direction around the X-axis(2D) of the 2D imaging coordinate system, and the position in the rotational direction around the Y-axis(2D) of the 2D imaging coordinate system, as the position Tz'(2D), the position Rx'(2D), and the position Ry'(2D), respectively.

In a case where the position Tz'(2D) is calculated by using the rigid body conversion matrix, the calculated position Tz'(2D) is a position to which each component of the 6DOF positions in the 3D imaging coordinate system calculated based on the result of the 3D matching processing and the result of the 3D tracking processing contributes for the calculation thereof. Namely, the calculated position Tz'(2D) is the position to which not only the component of the position Tz'(3D), but also the component of each of the position Tx'(3D), the position Ty'(3D), the position Rx'(3D), the position Ry'(3D), and the position Rz'(3D) contribute for the calculation. In this case, a degree of the contribution of the position Tz'(3D) to the calculation of the position Tz'(2D) is higher as the 2D imaging coordinate system is closer to the 3D imaging coordinate system. The accuracy of the calculated position Tz'(2D) is higher as the degree of the contribution of the position Tz'(3D) to the calculation of the position Tz'(2D) is higher. For the same reason, in a case where the position Rx'(2D) and the position Ry'(2D) are calculated by using the rigid body conversion matrix, the accuracy of the calculated position Rx'(2D) and position Ry'(2D) is higher as the 2D imaging coordinate system is closer to the 3D imaging coordinate system. Therefore, the imaging apparatuses 21 and 22 may be arranged so that the 2D imaging coordinate system is as close as possible to the 3D image capture coordinate system. For example, the imaging apparatuses 21 and 22 may be arranged so that the X-axis(2D) of the 2D imaging coordinate system is as close as possible to the X-axis(3D) of the 3D imaging coordinate system. The imaging apparatuses 21 and 22 may be arranged so that the Y-axis(2D) of the 2D imaging coordinate system is as close as possible to the Y-axis(3D) of the 3D image capture coordinate system. The imaging apparatuses 21 and 22 may be arranged so that the Z-axis(2D) of the 2D imaging coordinate system is as close as possible to the Z-axis(3D) of the 3D imaging coordinate system.

On the other hand, in the above-described description, in a case where the 3D imaging coordinate system is used as the common coordinate system, the coordinate conversion unit 3215 uses the conversion matrix M23 to convert the position Tx'(2D), the position Ty'(2D), and the position Rz'(2D) to the position Tx'(3D), the position Ty'(3D), and the position Rz'(3D). However, the coordinate conversion unit 3215 may calculate the position Tx'(3D), the position Ty'(3D), and the position Rz'(3D) by using a below-described method. Specifically, the coordinate conversion unit 3215 may calculate the position Tz'(2D) by adding the change amount ΔTz(2D) to the position Tz(2D), calculate the position Rx'(2D) by adding the change amount ΔRx(2D) to the position Rx(2D), and calculate the position Ry'(2D) by adding the change amount ΔRy(2D) to the position Ry(2D), in addition to calculating the position Tx'(2D), the position Ty'(2D), and the position Rz'(2D). Incidentally, a method of calculating the position Tz'(2D) by adding the change amount ΔTz(2D) to the position Tz(2D), a method of calculating the position Rx'(2D) by adding the change amount ΔRx(2D) to the position Rx(2D), and a method of calculating the position Ry'(2D) by adding the change amount ΔRy(2D) to the position Ry(2D) may be the same as the method of calculating the position Tx'(2D) by adding the change amount ΔTx(2D) to the position Tx(2D) already described, so a detailed description thereof is omitted. Namely, the coordinate conversion unit 3215 may calculate the 6DOF positions in the 2D imaging coordinate system based on the result of the 2D matching processing and the result of the 2D tracking processing. Then, the coordinate conversion unit 3215 may calculate a rigid body conversion matrix RTM20 from the 6DOF positions in the 2D imaging coordinate system by using a well-known method for calculating a rigid body conversion matrix. Then, the coordinate conversion unit 3215 may calculate a conversion matrix TM20, which indicates the 6DOF positions in the 3D imaging coordinate system, by calculating a product of the rigid body conversion matrix RTM20 and the conversion matrix M21. Then, the coordinate conversion unit 3215 may calculate the 6DOF positions in the 3D imaging coordinate system from the calculated conversion matrix TM20. Then, the coordinate conversion unit 3215 may calculate, from the calculated 6DOF positions in the 3D imaging coordinate system, the position in the X-axis(3D) direction of the 3D imaging coordinate system, the position in the Y-axis(3D) direction of the 3D imaging coordinate system, and the position in the rotational direction around the Z-axis(3D) of the 3D imaging coordinate system, as the position Tx'(3D), the position Ty'(3D), and the position Rz'(3D), respectively, by using a well-known method.

In a case where the position Tx'(3D) is calculated by using the rigid body conversion matrix, the calculated position Tx'(3D) is a position to which each component of the 6DOF positions in the 2D imaging coordinate system calculated based on the result of the 2D matching processing and the result of the 2D tracking processing contributes for the calculation thereof. Namely, the calculated position Tx'(3D) is the position to which not only the component of the position Tx'(2D), but also the component of each of the position Ty'(2D), the position Tz'(2D), the position Rx'(2D), the position Ry'(2D), and the position Rz'(2D) contribute for the calculation. In this case, a degree of the contribution of the position Tx'(2D) to the calculation of the position Tx'(3D) is higher as the 2D imaging coordinate system is closer to the 3D imaging coordinate system. The accuracy of the calculated position Tx'(3D) is higher as the degree of the contribution of the position Tx'(2D) to the calculation of the position Tx'(3D) is higher. For the same reason, in a case where the position Ty'(3D) and the position Rz'(3D) are calculated by using the rigid body conversion matrix, the accuracy of the calculated position Ty' (3D) and position Rz'(3D) is higher as the 2D imaging coordinate system is closer to the 3D imaging coordinate system. Therefore, the imaging apparatuses 21 and 22 may be arranged so that the 2D imaging coordinate system is as close as possible to the 3D image capture coordinate system. For example, the imaging apparatuses 21 and 22 may be arranged so that the X-axis(2D) of the 2D imaging coordinate system is as close as possible to the X-axis(3D) of the 3D imaging coordinate system. The imaging apparatuses 21 and 22 may be arranged so that the Y-axis(2D) of the 2D imaging coordinate system is as close as possible to the Y-axis(3D) of the 3D image capture coordinate system. The imaging apparatuses 21 and 22 may be arranged so that the Z-axis(2D) of the 2D imaging coordinate system is as close as possible to the Z-axis(3D) of the 3D imaging coordinate system.

Incidentally, the coordinate conversion unit 3125 may use the above-described rigid body conversion matrix to convert the position Tx(2D), the position Ty(2D), the position Tz(3D), the position Rx(3D), the position Ry(3D), and the position Rz(2D) to the positions in the common coordinate system. The coordinate conversion unit 3125 may use the above-described rigid body conversion matrix to convert the change amount ΔTx(2D), the change amount ΔTy(2D), the change amount ΔTz(3D), the change amount ΔRx(3D), the change amount ΔRy(3D), and the change amount ΔRz(2D) to the change amounts in the common coordinate system.

As one example, in the above-described description, in a case where the 2D imaging coordinate system is used as the common coordinate system, the coordinate conversion unit 3215 uses the conversion matrix M32 to convert the position Tz(3D), the position Rx(3D), and the position Ry(3D) to the position Tz(2D_conv), the position Rx(2D_conv), and the position Ry(2D_conv) in the 2D imaging coordinate system that is the common coordinate system. Similarly, the coordinate conversion unit 3125 uses the conversion matrix M32 to convert the change amount ΔTz(3D), the change amount ΔRx(3D), and the change amount ΔRy(3D) to the change amount ΔTz(2D_conv), the change amount ΔRx(2D_conv), and the change amount ΔRy(2D_conv) in the 2D imaging coordinate system that is the common coordinate system. On the other hand, in a case where the rigid body conversion matrix is used, the coordinate conversion unit 3215 may calculate a rigid body conversion matrix RTM31 from the 6DOF positions in the 3D imaging coordinate system calculated by the 3D matching processing (namely, the position Tz(3D), the position Ty(3D), the position Tz(3D), the position Rx(3D), the position Ry(3D), and the position Rz(3D)) by using a well-known method for calculating a rigid body conversion matrix. Then, the coordinate conversion unit 3215 may calculate a conversion matrix TM31, which indicates the 6DOF positions in the 2D imaging coordinate system, by calculating a product of the rigid body conversion matrix RTM31 and the conversion matrix M32. Then, the coordinate conversion unit 3215 may calculate the 6DOF positions in the 2D imaging coordinate system from the calculated conversion matrix TM31 by using a well-known method. Then, the coordinate conversion unit 3215 may calculate, from the calculated 6DOF positions in the 2D imaging coordinate system, the position in the Z-axis(2D) direction of the 2D imaging coordinate system, the position in the rotational direction around the X-axis(2D) of the 2D imaging coordinate system, and the position in the rotational direction around the Y-axis(2D) of the 2D imaging coordinate system, as the position Tz(2D_conv), the position Rx(2D_conv), and the position Ry(2D_conv), respectively. Similarly, the coordinate conversion unit 3215 may calculate a rigid body conversion matrix RTM32 from the change amounts of the 6DOF positions in the 3D imaging coordinate system calculated by the 3D tracking processing (namely, the change amount ΔTz(3D), the change amount ΔTy(3D), the change amount ΔTz(3D), the change amount ΔRx(3D), the change amount ΔRy(3D), and the change amount ΔRz(3D)) by using a well-known method for calculating a rigid body conversion matrix. Then, the coordinate conversion unit 3215 may calculate a conversion matrix TM32 by calculating a product of the rigid body conversion matrix RTM32 and the conversion matrix M32. Then, the coordinate conversion unit 3215 may calculate the change amounts of the 6DOF positions in the 2D imaging coordinate system from the calculated conversion matrix TM32. Then, the coordinate conversion unit 3215 may calculate, from the calculated change amounts of the 6DOF positions in the 2D imaging coordinate system, the change amount of the position in the Z-axis(2D) direction of the 2D imaging coordinate system, the change amount of the position in the rotational direction around the X-axis(2D) of the 2D imaging coordinate system, and the change amount of the position in the rotational direction around the Y-axis(2D) of the 2D imaging coordinate system, as the change amount ΔTz(2D_conv), the change amount ΔRx(2D_conv), and the change amount ΔRy(2D_conv), respectively. Incidentally, even in this case, the accuracy of the calculated position Tz(2D_conv), position Rx(2D_conv), position Ry(2D_conv), change amount ΔTz(2D_conv), change amount ΔRx(2D_conv), and change amount ΔRy(2D_conv) is higher as the 2D imaging coordinate system is closer to the 3D imaging coordinate system, for the same reason already described. Therefore, the imaging apparatuses 21 and 22 may be arranged so that the 2D imaging coordinate system is as close as possible to the 3D image capture coordinate system.

As another example, in the above-described description, in a case where the 3D imaging coordinate system is used as the common coordinate system, the coordinate conversion unit 3215 uses the conversion matrix M23 to convert the position Tx(2D), the position Ty(2D), and the position Rz(2D) to the position Tx(3D_conv), the position Ty(3D_conv), and the position Rz(3D_conv) in the 3D imaging coordinate system that is the common coordinate system. Similarly, the coordinate conversion unit 3125 uses the conversion matrix M23 to convert the change amount ΔTx(2D), the change amount ΔTy(2D), and the change amount ΔRz(2D) to the change amount ΔTx(3D_conv), the change amount ΔTy(3D_conv), and the change amount ΔRz(3D_conv) in the 3D imaging coordinate system that is the common coordinate system. On the other hand, in a case where the rigid body conversion matrix is used, the coordinate conversion unit 3215 may calculate a rigid body conversion matrix RTM21 from the 6DOF positions in the 2D imaging coordinate system calculated by the 2D matching processing (namely, the position Tz(2D), the position Ty(2D), the position Tz(2D), the position Rx(2D), the position Ry(2D), and the position Rz(2D)) by using a well-known method for calculating a rigid body conversion matrix. Then, the coordinate conversion unit 3215 may calculate a conversion matrix TM21, which indicates the 6DOF positions in the 3D imaging coordinate system, by calculating a product of the rigid body conversion matrix RTM21 and the conversion matrix M23. Then, the coordinate conversion unit 3215 may calculate the 6DOF positions in the 3D imaging coordinate system from the calculated conversion matrix TM21 by using a well-known method. Then, the coordinate conversion unit 3215 may calculate, from the calculated 6DOF positions in the 3D imaging coordinate system, the position in the X-axis(3D) direction of the 3D imaging coordinate system, the position in the Y-axis(3D) direction of the 3D imaging coordinate system, and the position in the rotational direction around the Z-axis(3D) of the 3D imaging coordinate system, as the position Tx(3D_conv), the position Ty(3D_conv), and the position Rz(3D_conv), respectively. Similarly, the coordinate conversion unit 3215 may calculate a rigid body conversion matrix RTM22 from the change amounts of the 6DOF positions in the 2D imaging coordinate system calculated by the 2D tracking processing (namely, the change amount ΔTz(2D), the change amount ΔTy(2D), the change amount ΔTz(2D), the change amount ΔRx(2D), the change amount ΔRy(2D), and the change amount ΔRz(2D)) by using a well-known method for calculating a rigid body conversion matrix. Then, the coordinate conversion unit 3215 may calculate a conversion matrix TM22 by calculating a product of the rigid body conversion matrix RTM22 and the conversion matrix M23. Then, the coordinate conversion unit 3215 may calculate the change amounts of the 6DOF positions in the 3D imaging coordinate system from the calculated conversion matrix TM22. Then, the coordinate conversion unit 3215 may calculate, from the calculated change amounts of the 6DOF positions in the 3D imaging coordinate system, the change amount of the position in the X-axis(3D) direction of the 3D imaging coordinate system, the change amount of the position in the Y-axis(3D) direction of the 3D imaging coordinate system, and the change amount of the position in the rotational direction around the Z-axis(3D) of the 3D imaging coordinate system, as the change amount ΔTx(3D_conv), the change amount ΔTy(3D_conv), and the change amount ΔRz(3D_conv), respectively. Incidentally, even in this case, the accuracy of the calculated position Tx(3D_conv), position Ty(3D_conv), position Rz(3D_conv), change amount ΔTx(3D_conv), change amount ΔTy(3D_conv), and change amount ΔRz(3D_conv) is higher as the 2D imaging coordinate system is closer to the 3D imaging coordinate system, for the same reason already described. Therefore, the imaging apparatuses 21 and 22 may be arranged so that the 2D imaging coordinate system is as close as possible to the 3D image capture coordinate system.

In the above-described description, the control apparatus 3 calculates the position of the workpiece W in the global coordinate system based on the position Tx'(2D), the position Ty'(2D), the position Tz'(3D), the position Rx'(3D), the position Ry'(3D), and the position Rz'(2D). However, the control apparatus 3 may calculate the position of the workpiece W in the global coordinate system without using at least one of the position Tx'(2D), the position Ty'(2D), the position Tz'(3D), the position Rx'(3D), the position Ry'(3D), and the position Rz'(2D). For example, the control apparatus 3 may calculate the position Tx'(3D) based on the position Tx(3D) and the change amount ΔTx(3D), and calculate the position of the workpiece W in the global coordinate system based on the calculated position Tx'(3D). The control apparatus 3 may calculate the position Ty'(3D) based on the position Ty(3D) and the change amount ΔTy(3D), and calculate the position of the workpiece W in the global coordinate system based on the calculated position Ty'(3D). The control apparatus 3 may calculate the position Tz'(2D) based on the position Tz(2D) and the change amount ΔTz(2D), and calculate the position of the workpiece W in the global coordinate system based on the calculated position Tz'(2D). The control apparatus 3 may calculate the position Rx'(2D) based on the position Rx(2D) and the change amount ΔRx(2D), and calculate the position of the workpiece W in the global coordinate system based on the calculated position Rx'(2D). The control apparatus 3 may calculate the position Ry'(2D) based on the position Ry(2D) and the change amount ΔRy(2D), and calculate the position of the workpiece W in the global coordinate system based on the calculated position Ry'(2D). The control apparatus 3 may calculate the position Rz'(3D) based on the position Rz(3D) and the change amount ΔRz(3D), and calculate the position of the workpiece W within the global coordinate system based on the calculated position Rz'(3D).

In the above-described description, the control apparatus 3 calculates the position of the workpiece W in the global coordinate system based on the change amount ΔTx(2D), the change amount ΔTy(2D), the change amount ΔRz(2D), the change amount ΔTz(3D), the change amount ΔRx(3D) and the change amount ΔRy(3D), and the position Tx'(2D), the position Ty'(2D), the position Tz'(3D), the position Rx'(3D), the position Ry'(3D), and the position Rz'(2D). However, the control apparatus 3 may calculate the position of the workpiece W without using at least one of the change amount ΔTx(2D), the change amount ΔTy(2D), the change amount ΔRz(2D), the change amount ΔTz(3D), the change amount ΔRx(3D) and the change amount ΔRy(3D), and the position Tx'(2D), the position Ty'(2D), the position Tz'(3D), the position Rx'(3D), the position Ry'(3D), and the position Rz'(2D). For example, the control apparatus 3 may calculate the position of the workpiece W in the global coordinate system may be calculated based on at least one of 6DOF positions calculated by the 2D matching processing unit 3121, the 6DOF positions calculated by 3D matching processing unit 3122, the change amounts of the 6DOF positions calculated by 2D tracking processing unit 3123, and the change amounts of the 6DOF positions calculated by 3D tracking processing unit 3124.

In the above-described description, the control apparatus 3 calculates the position of the workpiece W in the global coordinate system by correcting the result of the 2D matching processing based on the result of the 2D tracking processing and by correcting the result of the 3D matching processing based on the result of the 3D tracking processing. However, control apparatus 3 may calculate the position of the workpiece W in the global coordinate system based on the result of the 2D matching processing and the 3D matching processing without using the result of the 2D tracking processing and the 3D tracking processing. For example, the coordinate conversion unit 3125 may use the position Tx(2D), the position Ty(2D), and the position Rz(2D) calculated by the 2D matching processing as the position Tx'(2D), the position Ty'(2D), and the position Rz'(2D), and may use the position Tz(3D), the position Rx(3D), and the position Ry(3D) calculated by the 3D matching processing as the position Tz'(3D), the position Rx'(3D), and the position Ry'(3D). Even in this case, the fact remains that the control apparatus 3 considers the difference in accuracy of the 6DOF positions of the workpiece W, which are calculated intermediately in the process of calculating the position of the workpiece W in the global coordinate system, in order to achieve the effect of calculating the position of the workpiece W with high accuracy. Therefore, the control apparatus 3 can calculate the position of the workpiece W with higher accuracy to some degree, compared to a case where the difference in the accuracy of the 6DOF positions of the workpiece W, which are calculated intermediately, is not considered. Therefore, the robot 1 can move accurately and at high speed relative to the workpiece W (for example, follow (move closer to) the workpiece W accurately and at high speed) without losing sight of the workpiece (namely, the target object), and can perform the desired process on the workpiece W with the end effector 13. Incidentally, in a case where the workpiece W is stationary, the robot 1 can move closer to the workpiece W accurately and at a high speed, and perform the desired process on the workpiece W with the end effector 13. Incidentally, in this case, the control apparatus 3 may calculate (namely, update) the position of the workpiece W in the global coordinate system at a cycle corresponding to the 2D matching cycle or the 3D matching cycle. As a result, the control apparatus 3 may output the control signal to the robot 1 at the cycle corresponding to the 2D matching cycle or the 3D matching cycle.

As described above, the 2D matching unit 3121 may calculate the position Tx(2D), the position Ty(2D), the position Tz(2D), the position Rx(2D), the position Ry(2D), and the position Rz(2D). The 3D matching unit 3122 may calculate the position Tx(3D), the position Ty(3D), the position Tz(3D), the position Rx(3D), the position Ry(3D), and the position Rz(3D) by using the position Tx(2D), the position Ty(2D), the position Tz(2D), the position Rx(2D), the position Ry(2D), and the position Rz(2D). For example, the 3D matching unit 3122 may select partial data part of the workpiece shape data WSD as the 3D matching target data on which the 3D matching processing is performed by using the position Tx(2D), the position Ty(2D), the position Tz(2D), the position Rx(2D), the position Ry(2D), and the position Rz(2D), and may calculate the position Tx(3D), the position Ty(3D), the position Tz(3D), the position Rx(3D), the position Ry(3D), and the position Rz(3D) by performing the 3D matching processing using the selected 3D matching target data.

As described above, the 2D tracking unit 3123 may calculate the change amount ΔTx(2D), the change amount ΔTy(2D), the change amount ΔTz(2D), the change amount ΔRx(2D), the change amount ΔRy(2D), and the change amount ΔRz(2D). In this case, the 3D tracking unit 3124 may not calculate the change amount ΔTx(3D), the change amount ΔTy(3D), the change amount ΔTz(3D), the change amount ΔRx(3D), the change amount ΔRy(3D), and the change amount ΔRz(3D). Alternatively, even in a case where the 3D tracking unit 3124 calculates at least one of the change amount ΔTx(3D), the change amount ΔTy(3D), the change amount ΔTz(3D), the change amount ΔRx(3D), the change amount ΔRy(3D), and the change amount ΔRz(3D), the calculated change amount of the position of the workpiece W may not be outputted to the coordinate conversion unit 3125. In a case where the 3D tracking unit 3124 does not calculate the change amount ΔTx(3D), the change amount ΔTy(3D), the change amount ΔTz(3D), the change amount ΔRx(3D), the change amount ΔRy(3D), and the change amount ΔRz(3D), the position calculation unit 312 may not include the 3D tracking unit 3124. In this case, the coordinate conversion unit 3125 may calculate the position of the workpiece W in the global coordinate system by using the result of the 2D matching processing, the result of the 3D matching processing, and the result of the 2D tracking processing without using the result of the 3D tracking processing. Specifically, the coordinate conversion unit 3125 may correct the result of the 2D matching processing based on the result of the 2D tracking processing, and may correct the result of the 3D matching processing based on the result of the 2D tracking processing. For example, the coordinate conversion unit 3125 may calculate the position Tx'(2D) by correcting the position Tx(2D) based on the change amount ΔTx(2D). The coordinate conversion unit 3125 may calculate Ty'(2D) by correcting the position Ty(2D) based on the change amount ΔTy(2D). The coordinate conversion unit 3125 may convert the change amount ΔTz(2D) in the 2D imaging coordinate system to the change amount ΔTz(3D_conv) in the 3D imaging coordinate system, and calculate the position Tz'(3D) by correcting the position Tz(3D) based on the converted change amount ΔTz(3D_conv). The coordinate conversion unit 3125 may convert the change amount ΔRx(2D) in the 2D imaging coordinate system to the change amount ΔRx(3D_conv) in the 3D imaging coordinate system, and calculate the position Rx'(3D) by correcting the position Rx(3D) based on the converted change amount ΔRx(3D_conv). The coordinate conversion unit 3125 may convert the change amount ΔRy(2D) in the 2D imaging coordinate system to the change amount ΔRy(3D_conv) in the 3D imaging coordinate system, and calculate the position Ry'(3D) by correcting the position Ry(3D) based on the converted change amount ΔRy(3D_conv). The coordinate conversion unit 3125 may calculate the position Rz'(2D) by correcting the position Rz(2D) based on the change amount ΔRz(2D). The Subsequent processing may be the same as the processing described above.

The coordinate conversion unit 3125 may calculate the position of the workpiece W in the global coordinate system based on the workpiece shape data WSD in addition to the result of the 2D matching processing, the result of the 3D matching processing, and the result of the 2D tracking processing. Especially, the coordinate conversion unit 3125 may calculate the position of the workpiece W in the global coordinate system based on the workpiece shape data WSD generated from the workpiece image data IMG_3D#s2, which is generated by the imaging apparatus 22 capturing the workpiece W at a later time s2 among the times s1 and s2 that are different from each other, in addition to the result of the 2D matching processing, the result of the 3D matching processing, and the result of the 2D tracking processing. Since the signal generation unit 313 generates the robot control signal based on the position of the workpiece W in the global coordinate system, in this case, the signal generation unit 313 may be considered to generate the robot control signal based on the workpiece shape data WSD in addition to the result of the 2D matching processing, the 3D matching processing, and the 2D tracking processing.

The above-described 2D tracking unit 3123 may calculate the change amount of the position of the workpiece W in the 2D imaging coordinate system between the times t1 and t2 based on the workpiece shape data WSD and the two workpiece image data IMG_2D#t1 and IMG_2D#t2 generated by the imaging apparatus 21 capturing the workpiece W at the times t1 and t2 that are different from each other. For example, the 2D tracking unit 3123 may calculate at least one of the change amount ΔTx(2D), the change amount ΔTy(2D), the change amount ΔTz(2D), the change amount ΔRx(2D), the change amount ΔRy(2D), and the change amount ΔRz(2D) described above, based on the workpiece shape data WSD and the two workpiece image data IMG_2D#t1 and IMG_2D#t2. Especially, the 2D tracking unit 3123 may calculate the change amount of the position of the workpiece W based on the two workpiece image data IMG_2D#t1 and IMG_2D#t2 and the workpiece shape data WSD generated from the workpiece image data IMG_3D#s2, which is generated by the imaging apparatus 22 capturing the workpiece W at the later time s2 among the times s1 and s2 that are different from each other. In this case, the coordinate conversion unit 3125 may calculate the position of the workpiece W in the global coordinate system based on the result of the 2D matching processing, the result of the 3D matching processing, and the result of the 2D tracking processing (namely, the change amount calculated based on the two workpiece image data IMG_2D#t1 and IMG_2D#t2 and the workpiece shape data WSD). Since the signal generation unit 313 generates the robot control signal based on the position of the workpiece W in the global coordinate system, in this case, the signal generation unit 313 may be considered to generate the robot control signal based on the result of the 2D matching processing, the result of the 3D matching processing, and the result of the 2D tracking processing (namely, the change amount calculated based on the two workpiece image data IMG_2D#t1 and IMG_2D#t2 and the workpiece shape data WSD).

As described above, the 3D tracking unit 3124 may calculate the change amount ΔTx(3D), the change amount ΔTy(3D), the change amount ΔTz(3D), the change amount ΔRx(3D), the change amount ΔRy(3D), and the change amount ΔRz(3D). In this case, the 2D tracking unit 3123 may not calculate the change amount ΔTx(2D), the change amount ΔTy(2D), the change amount ΔTz(2D), the change amount ΔRx(2D), the change amount ΔRy(2D), and the change amount ΔRz(2D). Alternatively, even in a case where the 2D tracking unit 3123 calculates at least one of the change amount ΔTx(2D), the change amount ΔTy(2D), the change amount ΔTz(2D), the change amount ΔRx(2D), the change amount ΔRy(2D), and the change amount ΔRz(2D), the calculated change amount of the position of the workpiece W may not be outputted to the coordinate conversion unit 3125. In a case where the 2D tracking unit 3123 does not calculate the change amount ΔTx(2D), the change amount ΔTy(2D), the change amount ΔTz(2D), the change amount ΔRx(2D), the change amount ΔRy(2D), and the change amount ΔRz(2D), the position calculation unit 312 may not include the 2D tracking unit 3123. In this case, the coordinate conversion unit 3125 may calculate the position of the workpiece W in the global coordinate system by using the result of the 2D matching processing, the result of the 3D matching processing, and the result of the 3D tracking processing without using the result of the 2D tracking processing. Specifically, the coordinate conversion unit 3125 corrects the result of the 2D matching processing based on the result of the 3D tracking processing and corrects the result of the 3D matching processing based on the result of the 3D tracking processing. For example, the coordinate conversion unit 3125 may convert the change amount ΔTx(3D) in the 3D imaging coordinate system to the change amount ΔTx(2D_conv) in the 2D imaging coordinate system, and calculate the position Tx'(2D) by correcting the position Tx(2D) based on the converted change amount ΔTx(2D_conv). The coordinate conversion unit 3125 may convert the change amount ΔTy(3D) in the 3D imaging coordinate system to the change amount ΔTy(2D_conv) in the 2D imaging coordinate system, and calculate the position Ty'(2D) by correcting the position Ty(2D) based on the converted change amount ΔTy(2D_conv). The coordinate conversion unit 3125 may calculate the position Tz'(3D) by correcting the position Tz(3D) based on the change amount ΔTz(3D). The coordinate conversion unit 3125 may calculate the position Rx'(3D) by correcting the position Rx(3D) based on the change amount ΔRx(3D). The coordinate conversion unit 3125 may calculate the position Ry'(3D) by correcting the position Ry(3D) based on the change amount ΔRy(3D). The coordinate conversion unit 3125 may convert the change amount ΔRz(3D) in the 3D imaging coordinate system to the change amount ΔRz (2D_conv) in the 2D imaging coordinate system, and calculate the position Rz'(2D) by correcting the position Rz (2D) based on the converted change amount ΔRz (2D_conv). The Subsequent processing may be the same as the processing described above. Incidentally, the coordinate conversion unit 3125 may calculate the change amount ΔTx(2D_conv), the change amount ΔTy(2D_conv), and the change amount ΔRz(2D_conv) by using the rigid body conversion matrix, as described above.

The above-described 3D tracking unit 3124 may calculate the change amount of the position of the workpiece W in the 3D imaging coordinate system between the times t1 and t2 based on the workpiece shape data WSD and the two workpiece image data IMG_2D#t1 and IMG_2D#t2 generated by the imaging apparatus 21 capturing the workpiece W at the times t1 and t2 that are different from each other. For example, the 3D tracking unit 3124 may calculate at least one of the change amount ΔTx(3D), the change amount ΔTy(3D), the change amount ΔTz(3D), the change amount ΔRx(3D), the change amount ΔRy(3D), and the change amount ΔRz(3D) described above, based on the workpiece shape data WSD and the two workpiece image data IMG_2D#t1 and IMG_2D#t2. Especially, the 3D tracking unit 3124 may calculate the change amount of the position of the workpiece W based on the two workpiece image data IMG_2D#t1 and IMG_2D#t2 and the workpiece shape data WSD generated from the workpiece image data IMG_3D#s2, which is generated by the imaging apparatus 22 capturing the workpiece W at the later time s2 among the times s1 and s2 that are different from each other. In this case, the coordinate conversion unit 3125 may calculate the position of the workpiece W in the global coordinate system based on the result of the 2D matching processing, the result of the 3D matching processing, and the result of the 3D tracking processing (namely, the change amount calculated based on the two workpiece image data IMG_2D#t1 and IMG_2D#t2 and the workpiece shape data WSD). Since the signal generation unit 313 generates the robot control signal based on the position of the workpiece W in the global coordinate system, in this case, the signal generation unit 313 may be considered to generate the robot control signal based on the result of the 2D matching processing, the result of the 3D matching processing, and the result of the 3D tracking processing (namely, the change amount calculated based on the two workpiece image data IMG_2D#t1 and IMG_2D#t2 and the workpiece shape data WSD).

The control apparatus 3 may include the robot control apparatus 14. The control apparatus 3 may serve as the robot control apparatus 14. The logical functional block configured to serve as the robot control apparatus 14 may be implemented in the calculation apparatus 31 of the control apparatus 3. The control apparatus 3 may control the operation of the robot 1 (for example, control the driving of the actuator built in the joint 122 of the robotic arm 12) based on the robot control signal generated by the control apparatus 3. In this case, the robot 1 may not include the robot control apparatus 14.

In the above-described description, the shape data generation unit 311 of the control apparatus 3 generates the workpiece shape data WSD from one workpiece image data IMG_3D (for example, one workpiece image data IMG_3D including two image data in a case where the imaging apparatus 22 is the stereo camera). However, the shape data generation unit 311 may generate the workpiece shape data WSD from a plurality of workpiece image data IMG_3D. For example, the shape data generation unit 311 may generate the workpiece shape data WSD from the plurality of workpiece image data IMG_3D acquired by capturing the workpiece W from different directions. By using the plurality of the workpiece image data IMG_3D acquired by capturing the workpiece W from different directions, it is possible to reduce a possibility that a part of the workpiece shape data WSD is missing due to occlusion or the like. The signal generation unit 313 may move the imaging unit 2 (namely, the robotic arm 11) based on the position of the workpiece W calculated by at least one processing of the matching processing and the tracking processing described above by the position calculation unit 312 so that the workpiece W is captured from different direction by using the position of the workpiece W as a starting point. Namely, the signal generation unit 313 may generate the robot control signal for moving the robotic arm 11 so that the workpiece W is captured from different direction by using the position of the workpiece W as a starting point, and output it to the robot control apparatus 14. The imaging apparatus 22 may generate a plurality of the workpiece image data IMG_3D acquired by capturing the workpiece W from different directions by performing the capturing a plurality of number of times along with the movement of the imaging unit 2 starting from the position of the workpiece W. The shape data generation unit 311 may generate shape data for each of the plurality of the workpiece image data IMG_3D by the processing described above. Note that this shape data may be referred to as the workpiece shape data WSD. The shape data generation unit 311 may generate the workpiece shape data WSD by combining the plurality of generated shape data by an existing processing. For example, in a case where the plurality of generated shape data are a plurality of point cloud data, the shape data generation unit 311 may combine the plurality of point cloud data by performing a processing based on an ICP (Iterative Closest Point). For example, in a case where the plurality of generated shape data are a plurality of depth image data, the shape data generation unit 311 may combine the plurality of depth image data by performing a processing to align the feature points on the depth images indicated by the plurality of depth image data, respectively. The position calculation unit 312 may calculate the position of the workpiece W by performing at least one of the matching processing and the tracking processing described above by using the workpiece shape data WSD generated by the combining processing by the shape data generation unit 311, and the signal generation unit 313 may generate the robot control signal for the process on the workpiece W by the end effector 13 based on the position of the workpiece W calculated by the position calculation unit 312 and output it to the robot control apparatus 14.

### (5) Supplementary Note

Regarding the above described example embodiment, below described Supplementary notes are further disclosed.

### [Supplementary Note 1]

A control apparatus that generates a control signal for controlling a robot that moves an imaging unit, wherein
the control apparatus includes:
a calculation unit that generates the control signal; and
an output unit that outputs the control signal generated by the calculation unit,
the calculation unit:
   calculates, based on first image data acquired by the imaging unit capturing an object, a first position that includes at least one of a position of the object in at least one direction of a first direction parallel to a first axis, a second direction parallel to a second axis, and a third direction parallel to a third axis and a pose of the object around at least one axis of the first axis, the second axis, and the third axis in a first coordinate system that is defined by the first axis, the second axis, and the third axis that are orthogonal to one another;
   calculates, based on shape data that is generated from second image data acquired by the imaging unit capturing the object and that indicates a three-dimensional shape of the object, a second position that includes at least one of a position of the object in at least one direction of a fourth direction parallel to a fourth axis, a fifth direction parallel to a fifth axis, and a sixth direction parallel to a sixth axis and a pose of the object around at least one axis of the fourth axis, the fifth axis, and the sixth axis in a second coordinate system that is defined by the fourth axis, the fifth axis, and the sixth axis that are orthogonal to one another and that is the same as or different from the first coordinate system; and
   generates the control signal based on the first position and the second position.

### [Supplementary Note 2]

The control apparatus according to the Supplementary Note 1, wherein
the first image data is generated by the imaging unit capturing the object during a relative movement between the object and the imaging unit,
the second image data is generated by the imaging unit capturing the object during a relative movement between the object and the imaging unit.

### [Supplementary Note 3]

The control apparatus according to the Supplementary Note 1 or 2, wherein
the output unit outputs, in a first cycle, the control signal generated by the calculation unit based on the first position and the second position.

### [Supplementary Note 4]

The control apparatus according to any one of the Supplementary Notes 1 to 3, wherein
a time at which the imaging unit captures the object to acquire the first image data is the same as a time at which the imaging unit captures the object to acquire the second image data.

### [Supplementary Note 5]

The control apparatus according to any one of the Supplementary Notes 1 to 4, wherein
the calculation unit:
calculates, based on two first image data acquired by the imaging unit capturing the object at different times, a first change amount that is a change amount of at least one of the position of the object in the at least one direction and the pose of the object around the at least one axis in the first coordinate system between the different times;
calculates, based on two shape data that are generated from two second image data, respectively, acquired by the imaging unit capturing the object at different times and that indicate a three-dimensional shape of the object, a second change amount that is a change amount of at least one of the position of the object in the at least one direction and the pose of the object around the at least one axis in the second coordinate system between the different times; and
generates the control signal based on the first position, the first change amount, the second position, and the second change amount

### [Supplementary Note 6]

The control apparatus according to the Supplementary Note 5, wherein
the output unit outputs, in a second cycle, the control signal generated by the calculation unit based on the first position, the first change amount, the second position, and the second change amount.

### [Supplementary Note 7]

The control apparatus according to the Supplementary Note 5 or 6, wherein
the different times at which the imaging unit captures the object to acquire the two first image data are the same as the different times at which the imaging unit captures the object to acquire the two second image data

### [Supplementary Note 8]

The control apparatus according to any one of the Supplementary Notes 5 to 7, wherein
a shorter period of a period from a time at which the imaging unit captures the object to a time at which the first position is calculated based on the first image data and a period from a time at which the imaging unit captures the object to a time at which the second position is calculated based on the second image data is longer than a longer period of a period from a time at which the imaging unit captures the object at the different times to a time at which the first change amount is calculated based on the two first image data and a period from a time at which the imaging unit captures the object at the different times to a time at which the second change amount is calculated based on the two second image data.

### [Supplementary Note 9]

The control apparatus according to the Supplementary Note 8, wherein
the period from the time at which the imaging unit captures the object to the time at which the first position is calculated based on the first image data is the same as the period from the time at which the imaging unit captures the object to the time at which the second position is calculated based on the second image data.

### [Supplementary Note 10]

The control apparatus according to the Supplementary Note 8 or 9, wherein
the period from the time at which the imaging unit captures the object at the different times to the time at which the first change amount is calculated based on the two first image data is the same as the period from the time at which the imaging unit captures the object at the different times to the time at which the second change amount is calculated based on the two second image data.

### [Supplementary Note 11]

The control apparatus according to any one of the Supplementary Notes 5 to 10, wherein the calculation unit:
calculates the first position in a third cycle;
calculates the first change amount in a fourth cycle that is shorter than the third cycle;
calculates the second position in a fifth cycle;
calculates the second change amount in a sixth cycle that is shorter than the fifth cycle;

### [Supplementary Note 12]

The control apparatus according to the Supplementary Note 11, wherein
the fourth cycle and the sixth cycle are the same cycle.

### [Supplementary Note 13]

The control apparatus according to the Supplementary Note 11 or 12, wherein
the fourth cycle overlaps the sixth cycle.

### [Supplementary Note 14]

The control apparatus according to any one of the Supplementary Notes 11 to 13, wherein
the output unit outputs, in a second cycle, the control signal generated by the calculation unit based on the first position, the first change amount, the second position, and the second change amount,
the predetermined cycle is the same as the fourth cycle or the sixth cycle.

### [Supplementary Note 15]

The control apparatus according to any one of the Supplementary Notes 11 to 14, wherein
the third cycle and the fifth cycle are the same cycle.

### [Supplementary Note 16]

The control apparatus according to any one of the Supplementary Notes 11 to 15, wherein
the third cycle overlaps the fifth cycle.

### [Supplementary Note 17]

The control apparatus according to any one of the Supplementary Notes 5 to 16, wherein the calculation unit:
calculates, based on the first position and the first change amount, a third position that includes at least one of a position of the object in at least one direction of a seventh direction parallel to a seventh axis, an eighth direction parallel to an eighth axis, and a ninth direction parallel to a ninth axis and a pose of the object around at least one axis of the seventh axis, the eighth axis, and the ninth axis in a common coordinate system that is defined by the seventh axis, the eighth axis, and the ninth axis that are orthogonal to one another;
calculates, based on the second position and the second change amount, a fourth position that includes at least one of a position of the object in at least other one direction that is different from the at least one direction and a pose of the object around at least other one axis that is different from the at least one axis in the common coordinate system; and
generates the control signal based on the third position and the fourth position.

### [Supplementary Note 18]

The control apparatus according to the Supplementary Note 17, wherein
the output unit outputs, in a seventh cycle, the control signal generated by the calculation unit based on the third position and the fourth position.

### [Supplementary Note 19]

The control apparatus according to the Supplementary Note 17 or 18, wherein
the calculation unit:
calculates the first position in a third cycle;
calculates the first change amount in a fourth cycle that is shorter than the third cycle;
calculates the second position in a fifth cycle;
calculates the second change amount in a sixth cycle that is shorter than the fifth cycle;
each time the first change amount is newly calculated in the fourth cycle during a period as one cycle of the third cycle from a time at which the first position is newly calculated to a time at which the first position is calculated next, calculates the third position based on the newly calculated first change amount and the newly calculated first position;
each time the second change amount is newly calculated in the sixth cycle during a period as one cycle of the fifth cycle from a time at which the second position is newly calculated to a time at which the second position is calculated next, calculates the fourth position based on the newly calculated second change amount and the newly calculated second position.

### [Supplementary Note 20]

The control apparatus according to any one of the Supplementary Notes 17 to 19, wherein
the seventh axis is the first axis,
the eighth axis is the second axis,
the ninth axis is the third axis,
the calculation unit:
   calculates, as the third position, at least one of the position of the object in the at least one direction and the pose of the object around the at least one axis in the common coordinate system by correcting the first position with the first change amount; and
   calculates the fourth position in the common coordinate system based on at least one of the position of the object in the at least one direction and the pose of the object around the at least one axis in the second coordinate system which is calculated by correcting the second position with the second change amount.

### [Supplementary Note 21]

The control apparatus according to any one of the Supplementary Notes 17 to 19, wherein
the seventh axis is the fourth axis,
the eighth axis is the fifth axis,
the ninth axis is the sixth axis,
the control apparatus:
   calculates the third position in the common coordinate system based on at least one of the position of the object in the at least one direction and the pose of the object around the at least one axis in the first coordinate system which is calculated by correcting the first position with the first change amount; and
   calculates, as the fourth position, at least one of the position of the object in the at least other one direction and the pose of the object around the at least other one axis in the common coordinate system by correcting the second position with the second change amount.

### [Supplementary Note 22]

The control apparatus according to any one of the Supplementary Notes 17 to 19, wherein
the seventh axis is the first axis,
the eighth axis is the second axis,
the ninth axis is the third axis,
the calculation unit:
   calculates, as the third position, at least one of the position of the object in the at least one direction and the pose of the object around the at least one axis in the common coordinate system by correcting the first position with the first change amount; and
   calculates the fourth position by correcting at least one of the position of the object in the at least other one direction and the pose of the object around the at least other one axis in the common coordinate system which is calculated based on the second position with a change amount of at least one of the position of the object in the at least other one direction and the pose of the object around the at least other one axis in the common coordinate system which is calculated based on the second change amount.

### [Supplementary Note 23]

The control apparatus according to any one of the Supplementary Notes 17 to 19, wherein
the seventh axis is the fourth axis,
the eighth axis is the fifth axis,
the ninth axis is the sixth axis,
the calculation unit:
   calculates the third position by correcting at least one of the position of the object in the at least one direction and the pose of the object around the at least one axis in the common coordinate system which is calculated based on the first position with a change amount of at least one of the position of the object in the at least one direction and the pose of the object around the at least one axis in the common coordinate system which is calculated based on the first change amount; and
   calculates, as the fourth position, at least one of the position of the object in the at least other one direction and the pose of the object around the at least other one axis in the common coordinate system by correcting the second position with the second change amount.

### [Supplementary Note 24]

The control apparatus according to any one of the Supplementary Notes 17 to 20 and 22, wherein
the third position includes the position of the object in the eighth direction, the position of the object in the ninth direction, and the pose of the object around the seventh axis,
the fourth position includes the position of the object in the seventh direction, the pose of the object around the eighth direction, and the pose of the object around the ninth axis,
the seventh axis is the first axis,
the eighth axis is the second axis,
the ninth axis is the third axis,
the first axis is an axis that is along an optical axis of an optical system of the imaging unit.

### [Supplementary Note 25]

The control apparatus according to any one of the Supplementary Notes 17 to 19, 21 and 23, wherein
the third position includes the position of the object in the eighth direction, the position of the object in the ninth direction, and the pose of the object around the seventh axis,
the fourth position includes the position of the object in the seventh direction, the pose of the object around the eighth direction, and the pose of the object around the ninth axis,
the seventh axis is the fourth axis,
the eighth axis is the fifth axis,
the ninth axis is the sixth axis,
the fourth axis is an axis that is along an optical axis of an optical system of the imaging unit.

### [Supplementary Note 26]

The control apparatus according to any one of the Supplementary Notes 1 to 25, wherein
the first axis is an axis that is along an optical axis of an optical system of the imaging unit,
the fourth axis is an axis that is along an optical axis of an optical system of the imaging unit,
the first position includes the position of the object in the second direction, the position of the object in the third direction, and the pose of the object around the first axis,
the second position includes the position of the object in the fourth direction, the pose of the object around the fifth axis, and the pose of the object around the sixth axis.

### [Supplementary Note 27]

The control apparatus according to any one of the Supplementary Notes 5 to 25, wherein
the first axis is an axis that is along an optical axis of an optical system of the imaging unit,
the fourth axis is an axis that is along an optical axis of an optical system of the imaging unit,
the first position includes the position of the object in the second direction, the position of the object in the third direction, and the pose of the object around the first axis,
the first change amount includes the change amount of the position of the object in the second direction, the change amount of the position of the object in the third direction, and the change amount of the pose of the object around the first axis,
the second position includes the position of the object in the fourth direction, the pose of the object around the fifth axis, and the pose of the object around the sixth axis,
the second change amount includes the change amount of the position of the object in the fourth direction, the change amount of the pose of the object around the fifth axis, and the change amount of the pose of the object around the sixth axis.

### [Supplementary Note 28]

The control apparatus according to any one of the Supplementary Notes 1 to 27, wherein
the calculation unit:
calculates the first position by performing a matching processing using the first image data and reference image data indicating a two-dimensional image that is a reference of the object; and
calculates the second position by performing a matching processing using the shape data and reference shape data indicating a three-dimensional image that is a reference of the object.

### [Supplementary Note 29]

The control apparatus according to any one of the Supplementary Notes 5 to 25 and 27, wherein
the calculation unit:
calculates the first position by performing a matching processing using the first image data and reference image data indicating a two-dimensional image that is a reference of the object;
calculates the second position by performing a matching processing using the shape data and reference shape data indicating a three-dimensional image that is a reference of the object;
calculates the first change amount by performing a tracking processing using a data part of one first image data indicating a first feature part of the object and a data part of other one first image data indicating the first feature part of the object among the two first image data; and
calculates the second change amount by performing a tracking processing using a second feature part of the object in one shape data and the second feature part of the object in other one shape data among the two shape data.

### [Supplementary Note 30]

The control apparatus according to the Supplementary Note 28 or 29, wherein
the calculation unit:
selects a data part of the shape data that indicates a shape of at least a part of the object based on the first position; and
calculates the second position by performing a matching processing using the selected data part and the reference shape data.

### [Supplementary Note 31]

The control apparatus according to any one of the Supplementary Notes 28 to 30, wherein
the calculation unit:
performs, on the shape data, a data removing processing for removing a data part indicating a shape of another object different from the object; and
calculates the second position by performing a matching processing using the shape data on which the data removing processing has been performed and the reference shape data.

### [Supplementary Note 32]

The control apparatus according to the Supplementary Note 31, wherein
the another object includes a placing apparatus on which the object is placed.

### [Supplementary Note 33]

The control apparatus according to any one of the Supplementary Notes 1 to 32, wherein
a process apparatus that performs a process on the object is mounted to the robot,
the robot moves the process apparatus.

### [Supplementary Note 34]

The control apparatus according to the Supplementary Note 33, wherein
the control signal includes a signal for controlling the process apparatus.

### [Supplementary Note 35]

The control apparatus according to any one of the Supplementary Notes 1 to 34, wherein
the imaging unit is configured to automatically adjust an exposure based on a captured result of the object by the imaging unit.

### [Supplementary Note 36]

The control apparatus according to any one of the Supplementary Notes 1 to 35, wherein
the calculation unit:
performs an image processing on at least one of the first image data and the second image data;
is configured to calculate the first position based on the first image data on which the image processing has been performed; and
is configured to calculate the second position based on the shape data generated from the second image data.

### [Supplementary Note 37]

The control apparatus according to any one of the Supplementary Notes 5 to 25, 27 and 29, wherein
the calculation unit:
performs a image processing on at least one of the two first image data and the two second image data;
is configured to calculate the first change amount based on the two first image data on which the image processing has been performed; and
is configured to calculate the second change amount based on the two shape data generated from the two second image data on which the image processing has been performed.

### [Supplementary Note 38]

The control apparatus according to the Supplementary Note 36 or 37, wherein
the pre-processing includes at least one of a gamma correction processing, a HDR (High-Dynamic-Range) processing, and a de-noise processing.

### [Supplementary Note 39]

The control apparatus according to any one of the Supplementary Notes 1 to 38, wherein
the imaging unit generates at least one of the second image data and the two second image data by capturing the object on which pattern light is projected from a light projection apparatus mounted to the robot.

### [Supplementary Note 40]

A control system including:
the control apparatus according to any one of the Supplementary Notes 1 to 39; and
the imaging unit.

### [Supplementary Note 41]

The control system according to the Supplementary Note 40, wherein
the imaging unit includes a first imaging apparatus and a second imaging apparatus,
the control system further includes:
   a first filter that attenuates light component in a first wavelength bandwidth of light from the object; and
   a second filter that attenuates light component in a second wavelength bandwidth, which is different from the first wavelength bandwidth, of the light from the object, wherein
   the first imaging apparatus captures the object by optically receiving light from the object through the first filter,
   the second imaging apparatus captures the object by optically receiving light from the object through the second filter.

### [Supplementary Note 42]

The control system according to the Supplementary Note 41 further including:
a first illumination apparatus that illuminates the object with first illumination light including light component in the first wavelength bandwidth; and
a second illumination apparatus that illuminates the object with second illumination light including light component in the second wavelength bandwidth.

### [Supplementary Note 43]

The control system according to the Supplementary Note 41 or 42, wherein
a time at which the first imaging apparatus captures the object is the same as a time at which the second imaging apparatus captures the object.

### [Supplementary Note 44]

A robot system including:
the control apparatus according to any one of the Supplementary Notes 1 to 39;
the imaging unit; and
the robotic arm.

### [Supplementary Note 45]

A control method that generates a control signal for controlling a robot that moves an imaging unit, wherein
the control method includes:
calculating, based on first image data acquired by the imaging unit capturing an object, a first position that includes at least one of a position of the object in at least one direction of a first direction parallel to a first axis, a second direction parallel to a second axis, and a third direction parallel to a third axis and a pose of the object around at least one axis of the first axis, the second axis, and the third axis in a first coordinate system that is defined by the first axis, the second axis, and the third axis that are orthogonal to one another;
calculating, based on shape data that is generated from second image data acquired by the imaging unit capturing the object and that indicates a three-dimensional shape of the object, a second position that includes at least one of a position of the object in at least one direction of a fourth direction parallel to a fourth axis, a fifth direction parallel to a fifth axis, and a sixth direction parallel to a sixth axis and a pose of the object around at least one axis of the fourth axis, the fifth axis, and the sixth axis in a second coordinate system that is defined by the fourth axis, the fifth axis, and the sixth axis that are orthogonal to one another and that is the same as or different from the first coordinate system; and
generating the control signal based on the first position and the second position.

### [Supplementary Note 46]

A computer program that allows a computer to execute the control method according to the Supplementary Note 45.

### [Supplementary Note 47]

A control apparatus that generates a control signal for controlling a robot that moves an imaging unit, wherein
the control apparatus includes:
a calculation unit that generates the control signal; and
an output unit that outputs the control signal generated by the calculation unit,
the calculation unit:
   calculates, based on first image data acquired by the imaging unit capturing an object, a first position that includes at least one of a position of the object in at least one direction of a first direction parallel to a first axis, a second direction parallel to a second axis, and a third direction parallel to a third axis and a pose of the object around at least one axis of the first axis, the second axis, and the third axis in a first coordinate system that is defined by the first axis, the second axis, and the third axis that are orthogonal to one another;
   acquires, from the imaging unit, shape data that is generated by the imaging unit from second image data acquired by the imaging unit capturing the object and that indicates a three-dimensional shape of the object;
   calculates, based on the shape data, a second position that includes at least one of a position of the object in at least one direction of a fourth direction parallel to a fourth axis, a fifth direction parallel to a fifth axis, and a sixth direction parallel to a sixth axis and a pose of the object around at least one axis of the fourth axis, the fifth axis, and the sixth axis in a second coordinate system that is defined by the fourth axis, the fifth axis, and the sixth axis that are orthogonal to one another and that is the same as or different from the first coordinate system; and
   generates the control signal based on the first position and the second position.

### [Supplementary Note 48]

The control apparatus according to the Supplementary Note 47, wherein
the first image data is generated by the imaging unit capturing the object during a relative movement between the object and the imaging unit,
the second image data is generated by the imaging unit capturing the object during a relative movement between the object and the imaging unit.

### [Supplementary Note 49]

The control apparatus according to the Supplementary Note 47 or 48, wherein
the output unit outputs, in a first cycle, the control signal generated by the calculation unit based on the first position and the second position.

### [Supplementary Note 50]

The control apparatus according to any one of the Supplementary Notes 47 to 49, wherein
a time at which the imaging unit captures the object to acquire the first image data is the same as a time at which the imaging unit captures the object to acquire the second image data.

### [Supplementary Note 51]

The control apparatus according to any one of the Supplementary Notes 47 to 50, wherein the calculation unit:
calculates, based on two first image data acquired by the imaging unit capturing the object at different times, a first change amount that is a change amount of at least one of the position of the object in the at least one direction and the pose of the object around the at least one axis in the first coordinate system between the different times;
calculates, based on two shape data that are generated from two second image data, respectively, acquired by the imaging unit capturing the object at different times and that indicate a three-dimensional shape of the object, a second change amount that is a change amount of at least one of the position of the object in the at least one direction and the pose of the object around the at least one axis in the second coordinate system between the different times; and
generates the control signal based on the first position, the first change amount, the second position, and the second change amount

### [Supplementary Note 52]

The control apparatus according to the Supplementary Note 51, wherein
the output unit outputs, in a second cycle, the control signal generated by the calculation unit based on the first position, the first change amount, the second position, and the second change amount.

### [Supplementary Note 53]

The control apparatus according to the Supplementary Note 51 or 52, wherein
the different times at which the imaging unit captures the object to acquire the two first image data are the same as the different times at which the imaging unit captures the object to acquire the two second image data

### [Supplementary Note 54]

The control apparatus according to any one of the Supplementary Notes 51 to 53, wherein
a shorter period of a period from a time at which the imaging unit captures the object to a time at which the first position is calculated based on the first image data and a period from a time at which the imaging unit captures the object to a time at which the second position is calculated based on the second image data is longer than a longer period of a period from a time at which the imaging unit captures the object at the different times to a time at which the first change amount is calculated based on the two first image data and a period from a time at which the imaging unit captures the object at the different times to a time at which the second change amount is calculated based on the two second image data.

### [Supplementary Note 55]

The control apparatus according to the Supplementary Note 54, wherein
the period from the time at which the imaging unit captures the object to the time at which the first position is calculated based on the first image data is the same as the period from the time at which the imaging unit captures the object to the time at which the second position is calculated based on the second image data.

### [Supplementary Note 56]

The control apparatus according to the Supplementary Note 54 or 55, wherein
the period from the time at which the imaging unit captures the object at the different times to the time at which the first change amount is calculated based on the two first image data is the same as the period from the time at which the imaging unit captures the object at the different times to the time at which the second change amount is calculated based on the two second image data.

### [Supplementary Note 57]

The control apparatus according to any one of the Supplementary Notes 51 to 56, wherein
the calculation unit:
calculates the first position in a third cycle;
calculates the first change amount in a fourth cycle that is shorter than the third cycle;
calculates the second position in a fifth cycle;
calculates the second change amount in a sixth cycle that is shorter than the fifth cycle;

### [Supplementary Note 58]

The control apparatus according to the Supplementary Note 57, wherein
the fourth cycle and the sixth cycle are the same cycle.

### [Supplementary Note 59]

The control apparatus according to the Supplementary Note 57 or 58, wherein
the fourth cycle overlaps the sixth cycle.

### [Supplementary Note 60]

The control apparatus according to any one of the Supplementary Notes 57 to 59, wherein
the output unit outputs, in a second cycle, the control signal generated by the calculation unit based on the first position, the first change amount, the second position, and the second change amount,
the predetermined cycle is the same as the fourth cycle or the sixth cycle.

### [Supplementary Note 61]

The control apparatus according to any one of the Supplementary Notes 57 to 60, wherein
the third cycle and the fifth cycle are the same cycle.

### [Supplementary Note 62]

The control apparatus according to any one of the Supplementary Notes 57 to 61, wherein
the third cycle overlaps the fifth cycle.

### [Supplementary Note 63]

The control apparatus according to any one of the Supplementary Notes 51 to 62, wherein
the calculation unit:
calculates, based on the first position and the first change amount, a third position that includes at least one of a position of the object in at least one direction of a seventh direction parallel to a seventh axis, an eighth direction parallel to an eighth axis, and a ninth direction parallel to a ninth axis and a pose of the object around at least one axis of the seventh axis, the eighth axis, and the ninth axis in a common coordinate system that is defined by the seventh axis, the eighth axis, and the ninth axis that are orthogonal to one another;
calculates, based on the second position and the second change amount, a fourth position that includes at least one of a position of the object in at least other one direction that is different from the at least one direction and a pose of the object around at least other one axis that is different from the at least one axis in the common coordinate system; and
generates the control signal based on the third position and the fourth position.

### [Supplementary Note 64]

The control apparatus according to the Supplementary Note 63, wherein
the output unit outputs, in a seventh cycle, the control signal generated by the calculation unit based on the third position and the fourth position.

### [Supplementary Note 65]

The control apparatus according to the Supplementary Note 63 or 64, wherein
the calculation unit:
calculates the first position in a third cycle;
calculates the first change amount in a fourth cycle that is shorter than the third cycle;
calculates the second position in a fifth cycle;
calculates the second change amount in a sixth cycle that is shorter than the fifth cycle;
each time the first change amount is newly calculated in the fourth cycle during a period as one cycle of the third cycle from a time at which the first position is newly calculated to a time at which the first position is calculated next, calculates the third position based on the newly calculated first change amount and the newly calculated first position;
each time the second change amount is newly calculated in the sixth cycle during a period as one cycle of the fifth cycle from a time at which the second position is newly calculated to a time at which the second position is calculated next, calculates the fourth position based on the newly calculated second change amount and the newly calculated second position.

### [Supplementary Note 66]

The control apparatus according to any one of the Supplementary Notes 63 to 65, wherein
the seventh axis is the first axis,
the eighth axis is the second axis,
the ninth axis is the third axis,
the calculation unit:
   calculates, as the third position, at least one of the position of the object in the at least one direction and the pose of the object around the at least one axis in the common coordinate system by correcting the first position with the first change amount; and
   calculates the fourth position in the common coordinate system based on at least one of the position of the object in the at least one direction and the pose of the object around the at least one axis in the second coordinate system which is calculated by correcting the second position with the second change amount.

### [Supplementary Note 67]

The control apparatus according to any one of the Supplementary Notes 63 to 65, wherein
the seventh axis is the fourth axis,
the eighth axis is the fifth axis,
the ninth axis is the sixth axis,
the control apparatus:
   calculates the third position in the common coordinate system based on at least one of the position of the object in the at least one direction and the pose of the object around the at least one axis in the first coordinate system which is calculated by correcting the first position with the first change amount; and
   calculates, as the fourth position, at least one of the position of the object in the at least other one direction and the pose of the object around the at least other one axis in the common coordinate system by correcting the second position with the second change amount.

### [Supplementary Note 68]

The control apparatus according to any one of the Supplementary Notes 63 to 65, wherein
the seventh axis is the first axis,
the eighth axis is the second axis,
the ninth axis is the third axis,
the calculation unit:
   calculates, as the third position, at least one of the position of the object in the at least one direction and the pose of the object around the at least one axis in the common coordinate system by correcting the first position with the first change amount; and
   calculates the fourth position by correcting at least one of the position of the object in the at least other one direction and the pose of the object around the at least other one axis in the common coordinate system which is calculated based on the second position with a change amount of at least one of the position of the object in the at least other one direction and the pose of the object around the at least other one axis in the common coordinate system which is calculated based on the second change amount.

### [Supplementary Note 69]

The control apparatus according to any one of the Supplementary Notes 63 to 65, wherein
the seventh axis is the fourth axis,
the eighth axis is the fifth axis,
the ninth axis is the sixth axis,
the calculation unit:
   calculates the third position by correcting at least one of the position of the object in the at least one direction and the pose of the object around the at least one axis in the common coordinate system which is calculated based on the first position with a change amount of at least one of the position of the object in the at least one direction and the pose of the object around the at least one axis in the common coordinate system which is calculated based on the first change amount; and
   calculates, as the fourth position, at least one of the position of the object in the at least other one direction and the pose of the object around the at least other one axis in the common coordinate system by correcting the second position with the second change amount.

### [Supplementary Note 70]

The control apparatus according to any one of the Supplementary Notes 63 to 66 and 68, wherein
the third position includes the position of the object in the eighth direction, the position of the object in the ninth direction, and the pose of the object around the seventh axis,
the fourth position includes the position of the object in the seventh direction, the pose of the object around the eighth direction, and the pose of the object around the ninth axis,
the seventh axis is the first axis,
the eighth axis is the second axis,
the ninth axis is the third axis,
the first axis is an axis that is along an optical axis of an optical system of the imaging unit.

### [Supplementary Note 71]

The control apparatus according to any one of the Supplementary Notes 63 to 65, 67 and 69, wherein
the third position includes the position of the object in the eighth direction, the position of the object in the ninth direction, and the pose of the object around the seventh axis,
the fourth position includes the position of the object in the seventh direction, the pose of the object around the eighth direction, and the pose of the object around the ninth axis,
the seventh axis is the fourth axis,
the eighth axis is the fifth axis,
the ninth axis is the sixth axis,
the fourth axis is an axis that is along an optical axis of an optical system of the imaging unit.

### [Supplementary Note 72]

The control apparatus according to any one of the Supplementary Notes 47 to 71, wherein
the first axis is an axis that is along an optical axis of an optical system of the imaging unit,
the fourth axis is an axis that is along an optical axis of an optical system of the imaging unit,
the first position includes the position of the object in the second direction, the position of the object in the third direction, and the pose of the object around the first axis,
the second position includes the position of the object in the fourth direction, the pose of the object around the fifth axis, and the pose of the object around the sixth axis.

### [Supplementary Note 73]

The control apparatus according to any one of the Supplementary Notes 51 to 72, wherein
the first axis is an axis that is along an optical axis of an optical system of the imaging unit,
the fourth axis is an axis that is along an optical axis of an optical system of the imaging unit,
the first position includes the position of the object in the second direction, the position of the object in the third direction, and the pose of the object around the first axis,
the first change amount includes the change amount of the position of the object in the second direction, the change amount of the position of the object in the third direction, and the change amount of the pose of the object around the first axis,
the second position includes the position of the object in the fourth direction, the pose of the object around the fifth axis, and the pose of the object around the sixth axis,
the second change amount includes the change amount of the position of the object in the fourth direction, the change amount of the pose of the object around the fifth axis, and the change amount of the pose of the object around the sixth axis.

### [Supplementary Note 74]

The control apparatus according to any one of the Supplementary Notes 47 to 73, wherein
the calculation unit:
calculates the first position by performing a matching processing using the first image data and reference image data indicating a two-dimensional image that is a reference of the object; and
calculates the second position by performing a matching processing using the shape data and reference shape data indicating a three-dimensional image that is a reference of the object.

### [Supplementary Note 75]

The control apparatus according to any one of the Supplementary Notes 51 to 71 and 73, wherein
the calculation unit:
calculates the first position by performing a matching processing using the first image data and reference image data indicating a two-dimensional image that is a reference of the object;
calculates the second position by performing a matching processing using the shape data and reference shape data indicating a three-dimensional image that is a reference of the object;
calculates the first change amount by performing a tracking processing using a data part of one first image data indicating a first feature part of the object and a data part of other one first image data indicating the first feature part of the object among the two first image data; and
calculates the second change amount by performing a tracking processing using a second feature part of the object in one shape data and the second feature part of the object in other one shape data among the two shape data.

### [Supplementary Note 76]

The control apparatus according to the Supplementary Note 74 or 75, wherein
the calculation unit:
selects a data part of the shape data that indicates a shape of at least a part of the object based on the first position; and
calculates the second position by performing a matching processing using the selected data part and the reference shape data.

### [Supplementary Note 77]

The control apparatus according to any one of the Supplementary Notes 74 to 76, wherein
the calculation unit:
performs, on the shape data, a data removing processing for removing a data part indicating a shape of another object different from the object; and
calculates the second position by performing a matching processing using the shape data on which the data removing processing has been performed and the reference shape data.

### [Supplementary Note 78]

The control apparatus according to the Supplementary Note 77, wherein
the another object includes a placing apparatus on which the object is placed.

### [Supplementary Note 79]

The control apparatus according to any one of the Supplementary Notes 47 to 78, wherein
a process apparatus that performs a process on the object is mounted to the robot,
the robot moves the process apparatus.

### [Supplementary Note 80]

The control apparatus according to the Supplementary Note 79, wherein
the control signal includes a signal for controlling the process apparatus.

### [Supplementary Note 81]

The control apparatus according to any one of the Supplementary Notes 47 to 80, wherein
at least one of the first and imaging unit is configured to automatically adjust an exposure based on a captured result of the object by at least one of the first and imaging unit.

### [Supplementary Note 82]

The control apparatus according to any one of the Supplementary Notes 47 to 81, wherein
the calculation unit:
performs an image processing on at least one of the first image data and the second image data;
is configured to calculate the first position based on the first image data on which the image processing has been performed; and
is configured to calculate the second position based on the shape data generated from the second image data on which the image processing has been performed.

### [Supplementary Note 83]

The control apparatus according to any one of the Supplementary Notes 51 to 71, 73 and 75, wherein
the calculation unit:
performs a image processing on at least one of the two first image data and the two second image data;
is configured to calculate the first change amount based on the two first image data on which the image processing has been performed; and
is configured to calculate the second change amount based on the two shape data generated from the two second image data on which the image processing has been performed.

### [Supplementary Note 84]

The control apparatus according to the Supplementary Note 82 or 83, wherein
the pre-processing includes at least one of a gamma correction processing, a HDR (High-Dynamic-Range) processing, and a de-noise processing.

### [Supplementary Note 85]

The control apparatus according to any one of the Supplementary Notes 47 to 84, wherein
the imaging unit generates at least one of the second image data and the two second image data by capturing the object on which pattern light is projected from a light projection apparatus mounted to the robot.

### [Supplementary Note 86]

A control system including:
the control apparatus according to any one of the Supplementary Notes 47 to 85; and
the imaging unit.

### [Supplementary Note 87]

The control system according to the Supplementary Note 86, wherein
the imaging unit includes a first imaging apparatus and a second imaging apparatus,
the control system further includes:
   a first filter that attenuates light component in a first wavelength bandwidth of light from the object; and
   a second filter that attenuates light component in a second wavelength bandwidth, which is different from the first wavelength bandwidth, of the light from the object, wherein
   the first imaging apparatus captures the object by optically receiving light from the object through the first filter,
   the second imaging apparatus captures the object by optically receiving light from the object through the second filter.

### [Supplementary Note 88]

The control system according to the Supplementary Note 87 further including:
a first illumination apparatus that illuminates the object with first illumination light including light component in the first wavelength bandwidth; and
a second illumination apparatus that illuminates the object with second illumination light including light component in the second wavelength bandwidth.

### [Supplementary Note 89]

The control system according to the Supplementary Note 87 or 88, wherein
a time at which the first imaging apparatus captures the object is the same as a time at which the second imaging apparatus captures the object.

### [Supplementary Note 90]

A robot system including:
the control apparatus according to any one of the Supplementary Notes 47 to 85;
the imaging unit; and
the robotic arm.

### [Supplementary Note 91]

A control method that generates a control signal for controlling a robot that moves an imaging unit, wherein
the control method includes:
calculating, based on first image data acquired by the imaging unit capturing an object, a first position that includes at least one of a position of the object in at least one direction of a first direction parallel to a first axis, a second direction parallel to a second axis, and a third direction parallel to a third axis and a pose of the object around at least one axis of the first axis, the second axis, and the third axis in a first coordinate system that is defined by the first axis, the second axis, and the third axis that are orthogonal to one another;
acquiring, from the imaging unit, shape data that is generated by the imaging unit from second image data acquired by the imaging unit capturing the object and that indicates a three-dimensional shape of the object;
calculating, based on the shape data, a second position that includes at least one of a position of the object in at least one direction of a fourth direction parallel to a fourth axis, a fifth direction parallel to a fifth axis, and a sixth direction parallel to a sixth axis and a pose of the object around at least one axis of the fourth axis, the fifth axis, and the sixth axis in a second coordinate system that is defined by the fourth axis, the fifth axis, and the sixth axis that are orthogonal to one another and that is the same as or different from the first coordinate system; and
generating the control signal based on the first position and the second position.

### [Supplementary Note 92]

A computer program that allows a computer to execute the control method according to the Supplementary Note 91.

At least a part of the features of each example embodiment described above may be appropriately combined with at least another part of the features of each example embodiment described above. A part of the features of each example embodiment described above may not be used. Moreover, the disclosures of all publications and United States patents related to an apparatus and the like cited in each embodiment described above are incorporated in the disclosures of the present application by reference if it is legally permitted.

The present invention is not limited to the above described examples and is allowed to be changed, if desired, without departing from the essence or spirit of the invention which can be read from the claims and the entire specification, and a control apparatus, a control system, a robot system, a control method, and a computer program, which involve such changes, are also intended to be within the technical scope of the present invention.

### Description of Reference Codes

SYS robot system
1 robot
12 robotic arm
13 end effector
14 control apparatus
2 imaging unit
21, 22 imaging apparatus
23 projection apparatus
24b illumination apparatus
25b, 26b filter
3 robot control apparatus
31 calculation apparatus
311 image conversion unit
312 position calculation unit
3121 2D matching unit
3122 3D matching unit
3123 2D tracking unit
3124 3D tracking unit
3125 coordinate conversion unit
313 signal generation unit
314a pre-processing unit
33 communication unit
4 placing apparatus
W workpiece
IMG_2D, IMG_3D workpiece shape data
IMG_2M reference image data
WSD workpiece shape data
WMD reference shape data

## Claims

1. A control apparatus that generates a control signal for controlling a robotic arm, wherein
a process apparatus that performs a process on an object, a first imaging apparatus that outputs first image data, and a second imaging apparatus that outputs second image data are mounted to the robotic arm,
the robotic arm moves the process apparatus, the first imaging apparatus, and the second imaging apparatus,
the control apparatus comprises:
a calculation unit that generates the control signal; and
an output unit that outputs the control signal generated by the calculation unit,
the calculation unit:
calculates, based on the first image data acquired by the first imaging apparatus capturing the object during a relative movement between the object and the first and second imaging apparatuses, a first position that includes at least one of a position of the object in at least one direction of a first direction parallel to a first axis, a second direction parallel to a second axis, and a third direction parallel to a third axis and a pose of the object around at least one axis of the first axis, the second axis, and the third axis in a first coordinate system that is defined by the first axis, the second axis, and the third axis that are orthogonal to one another;
calculates, based on shape data that is generated from the second image data acquired by the second imaging apparatus capturing the object during the relative movement and that indicates a three-dimensional shape of the object, a second position that includes at least one of a position of the object in at least one direction of a fourth direction parallel to a fourth axis, a fifth direction parallel to a fifth axis, and a sixth direction parallel to a sixth axis and a pose of the object around at least one axis of the fourth axis, the fifth axis, and the sixth axis in a second coordinate system that is defined by the fourth axis, the fifth axis, and the sixth axis that are orthogonal to one another and that is different from the first coordinate system; and
generates the control signal based on the first position and the second position,
the output unit outputs, in a first cycle, the control signal generated by the calculation unit based on the first position and the second position.

2. The control apparatus according to claim 1, wherein
a time at which the first imaging apparatus captures the object to acquire the first image data is the same as a time at which the second imaging apparatus captures the object to acquire the second image data.

3. The control apparatus according to claim 1 or 2, wherein
the calculation unit:
calculates, based on two first image data acquired by the first imaging apparatus capturing the object at different times during the relative movement, a first change amount that is a change amount of at least one of the position of the object in the at least one direction and the pose of the object around the at least one axis in the first coordinate system between the different times; and
generates the control signal based on the first position, the first change amount, and the second position,
the output unit outputs, in a second cycle, the control signal generated by the calculation unit based on the first position, the first change amount, and the second position.

4. The control apparatus according to claim 3, wherein
the calculation unit generates the control signal based on the first position, the first change amount, the second position, and shape data that is generated from the second image data acquired by the second imaging apparatus capturing the object during the relative movement and that indicates a three-dimensional shape of the object,
the output unit outputs, in the second cycle, the control signal generated by the calculation unit based on the first position, the first change amount, the second position, and the shape data.

5. The control apparatus according to claim 1 or 2, wherein
the calculation unit:
calculates, based on two first image data acquired by the first imaging apparatus capturing the object at different times during the relative movement and shape data that is generated from the second image data acquired by the second imaging apparatus capturing the object during the relative movement and that indicates a three-dimensional shape of the object, a change amount of at least one of the position of the object and the pose of the object between the different times; and
generates the control signal based on the first position, the second position, and the change amount,
the output unit outputs, in a second cycle, the control signal generated by the calculation unit based on the first position, the second position, and the change amount.

6. The control apparatus according to claim 4 or 5, wherein
the shape data include data that is generated from the second image data acquired by the second imaging apparatus capturing the object at a later time of the different times and that indicates a three-dimensional shape of the object.

7. The control apparatus according to claim 1 or 2, wherein
the calculation unit:
calculates, based on two shape data that are generated from two second image data, respectively, acquired by the second imaging apparatus capturing the object at different times during the relative movement and that indicate a three-dimensional shape of the object, a second change amount that is a change amount of at least one of the position of the object in the at least one direction and the pose of the object around the at least one axis in the second coordinate system between the different times; and
generates the control signal based on the first position, the second position, and the second change amount,
the output unit outputs, in a second cycle, the control signal generated by the calculation unit based on the first position, the second position, and the second change amount.

8. The control apparatus according to claim 1 or 2, wherein
the calculation unit:
calculates, based on two first image data acquired by the first imaging apparatus capturing the object at different times during the relative movement, a first change amount that is a change amount of at least one of the position of the object in the at least one direction and the pose of the object around the at least one axis in the first coordinate system between the different times;
calculates, based on two shape data that are generated from two second image data, respectively, acquired by the second imaging apparatus capturing the object at different times during the relative movement and that indicate a three-dimensional shape of the object, a second change amount that is a change amount of at least one of the position of the object in the at least one direction and the pose of the object around the at least one axis in the second coordinate system between the different times; and
generates the control signal based on the first position, the first change amount, the second position, and the second change amount,
the output unit outputs, in a second cycle, the control signal generated by the calculation unit based on the first position, the first change amount, the second position, and the second change amount.

9. The control apparatus according to claim 8, wherein
the different times at which the first imaging apparatus captures the object to acquire the two first image data are the same as the different times at which the second imaging apparatus captures the object to acquire the two second image data

10. The control apparatus according to claim 8 or 9, wherein
a shorter period of a period from a time at which the first imaging apparatus captures the object to a time at which the first position is calculated based on the first image data and a period from a time at which the second imaging apparatus captures the object to a time at which the second position is calculated based on the second image data is longer than a longer period of a period from a time at which the first imaging apparatus captures the object at the different times to a time at which the first change amount is calculated based on the two first image data and a period from a time at which the second imaging apparatus captures the object at the different times to a time at which the second change amount is calculated based on the two second image data.

11. The control apparatus according to claim 10, wherein
the period from the time at which the first imaging apparatus captures the object to the time at which the first position is calculated based on the first image data is the same as the period from the time at which the second imaging apparatus captures the object to the time at which the second position is calculated based on the second image data.

12. The control apparatus according to claim 10 or 11, wherein
the period from the time at which the first imaging apparatus captures the object at the different times to the time at which the first change amount is calculated based on the two first image data is the same as the period from the time at which the second imaging apparatus captures the object at the different times to the time at which the second change amount is calculated based on the two second image data.

13. The control apparatus according to any one of claims 8 to 12, wherein
the calculation unit:
calculates the first position in a third cycle during the relative movement;
calculates the first change amount in a fourth cycle that is shorter than the third cycle during the relative movement;
calculates the second position in a fifth cycle during the relative movement;
calculates the second change amount in a sixth cycle that is shorter than the fifth cycle during the relative movement;

14. The control apparatus according to claim 13, wherein
the fourth cycle and the sixth cycle are the same cycle.

15. The control apparatus according to claim 13 or 14, wherein
the fourth cycle overlaps the sixth cycle.

16. The control apparatus according to any one of claims 13 to 15, wherein
the second cycle is the same as the fourth cycle or the sixth cycle.

17. The control apparatus according to any one of claims 13 to 16, wherein
the third cycle and the fifth cycle are the same cycle.

18. The control apparatus according to any one of claims 13 to 16, wherein
the third cycle overlaps the fifth cycle.

19. The control apparatus according to any one of claims 8 to 18, wherein
the calculation unit:
calculates, based on the first position and the first change amount, a third position that includes at least one of a position of the object in at least one direction of a seventh direction parallel to a seventh axis, an eighth direction parallel to an eighth axis, and a ninth direction parallel to a ninth axis and a pose of the object around at least one axis of the seventh axis, the eighth axis, and the ninth axis in a common coordinate system that is defined by the seventh axis, the eighth axis, and the ninth axis that are orthogonal to one another;
calculates, based on the second position and the second change amount, a fourth position that includes at least one of a position of the object in the at least one direction and a pose of the object around the at least one axis in the common coordinate system; and
generates the control signal based on the third position and the fourth position,
the output unit outputs, in a second cycle, the control signal generated by the calculation unit based on the third position and the fourth position.

20. The control apparatus according to claim 19, wherein
the calculation unit:
calculates the first position in a third cycle during the relative movement;
calculates the first change amount in a fourth cycle that is shorter than the third cycle during the relative movement;
calculates the second position in a fifth cycle during the relative movement;
calculates the second change amount in a sixth cycle that is shorter than the fifth cycle during the relative movement;
each time the first change amount is newly calculated in the fourth cycle during a period as one cycle of the third cycle from a time at which the first position is newly calculated to a time at which the first position is calculated next, calculates the third position based on the newly calculated first change amount and the newly calculated first position;
each time the second change amount is newly calculated in the sixth cycle during a period as one cycle of the fifth cycle from a time at which the second position is newly calculated to a time at which the second position is calculated next, calculates the fourth position based on the newly calculated second change amount and the newly calculated second position.

21. The control apparatus according to claim 19 or 20, wherein
the seventh axis is the first axis,
the eighth axis is the second axis,
the ninth axis is the third axis,
the control apparatus:
calculates, as the third position, at least one of the position of the object in the at least one direction and the pose of the object around the at least one axis in the common coordinate system by correcting the first position with the first change amount; and
calculates the fourth position in the common coordinate system based on at least one of the position of the object in the at least one direction and the pose of the object around the at least one axis in the second coordinate system which is calculated by correcting the second position with the second change amount.

22. The control apparatus according to claim 19 or 20, wherein
the seventh axis is the fourth axis,
the eighth axis is the fifth axis,
the ninth axis is the sixth axis,
the calculation unit:
calculates the third position in the common coordinate system based on at least one of the position of the object in the at least one direction and the pose of the object around the at least one axis in the first coordinate system which is calculated by correcting the first position with the first change amount; and
calculates, as the fourth position, at least one of the position of the object in the at least other one direction and the pose of the object around the at least other one axis in the common coordinate system by correcting the second position with the second change amount.

23. The control apparatus according to claim 19 or 20, wherein
the seventh axis is the first axis,
the eighth axis is the second axis,
the ninth axis is the third axis,
the calculation unit:
calculates, as the third position, at least one of the position of the object in the at least one direction and the pose of the object around the at least one axis in the common coordinate system by correcting the first position with the first change amount; and
calculates the fourth position by correcting at least one of the position of the object in the at least other one direction and the pose of the object around the at least other one axis in the common coordinate system which is calculated based on the second position with a change amount of at least one of the position of the object in the at least other one direction and the pose of the object around the at least other one axis in the common coordinate system which is calculated based on the second change amount.

24. The control apparatus according to claim 19 or 20, wherein
the seventh axis is the fourth axis,
the eighth axis is the fifth axis,
the ninth axis is the sixth axis,
the calculation unit:
calculates the third position by correcting at least one of the position of the object in the at least one direction and the pose of the object around the at least one axis in the common coordinate system which is calculated based on the first position with a change amount of at least one of the position of the object in the at least one direction and the pose of the object around the at least one axis in the common coordinate system which is calculated based on the first change amount; and
calculates, as the fourth position, at least one of the position of the object in the at least other one direction and the pose of the object around the at least other one axis in the common coordinate system by correcting the second position with the second change amount.

25. The control apparatus according to claim 19, 20, 21, or 23, wherein
the third position includes the position of the object in the eighth direction, the position of the object in the ninth direction, and the pose of the object around the seventh axis,
the fourth position includes the position of the object in the seventh direction, the pose of the object around the eighth direction, and the pose of the object around the ninth axis,
the seventh axis is the first axis,
the eighth axis is the second axis,
the ninth axis is the third axis,
the first axis is an axis that is along an optical axis of an optical system of the first imaging apparatus.

26. The control apparatus according to claim 19, 20, 22, or 24, wherein
the third position includes the position of the object in the eighth direction, the position of the object in the ninth direction, and the pose of the object around the seventh axis,
the fourth position includes the position of the object in the seventh direction, the pose of the object around the eighth direction, and the pose of the object around the ninth axis,
the seventh axis is the fourth axis,
the eighth axis is the fifth axis,
the ninth axis is the sixth axis,
the fourth axis is an axis that is along an optical axis of an optical system of the second imaging apparatus.

27. The control apparatus according to any one of claims 1 to 26, wherein
the first axis is an axis that is along an optical axis of an optical system of the first imaging apparatus,
the fourth axis is an axis that is along an optical axis of an optical system of the second imaging apparatus,
the first position includes the position of the object in the second direction, the position of the object in the third direction, and the pose of the object around the first axis,
the second position includes the position of the object in the fourth direction, the pose of the object around the fifth axis, and the pose of the object around the sixth axis.

28. The control apparatus according to any one of claims 8 to 26, wherein
the first axis is an axis that is along an optical axis of an optical system of the first imaging apparatus,
the fourth axis is an axis that is along an optical axis of an optical system of the second imaging apparatus,
the first position includes the position of the object in the second direction, the position of the object in the third direction, and the pose of the object around the first axis,
the first change amount includes the change amount of the position of the object in the second direction, the change amount of the position of the object in the third direction, and the change amount of the pose of the object around the first axis,
the second position includes the position of the object in the fourth direction, the pose of the object around the fifth axis, and the pose of the object around the sixth axis,
the second change amount includes the change amount of the position of the object in the fourth direction, the change amount of the pose of the object around the fifth axis, and the change amount of the pose of the object around the sixth axis.

29. The control apparatus according to any one of claims 1 to 28, wherein
the calculation unit:
calculates the first position by performing a matching processing using the first image data and reference image data indicating a two-dimensional image that is a reference of the object; and
calculates the second position by performing a matching processing using the shape data and reference shape data indicating a three-dimensional image that is a reference of the object.

30. The control apparatus according to any one of claims 8 to 26 and 28, wherein
the calculation unit:
calculates the first position by performing a matching processing using the first image data and reference image data indicating a two-dimensional image that is a reference of the object;
calculates the second position by performing a matching processing using the shape data and reference shape data indicating a three-dimensional image that is a reference of the object;
calculates the first change amount by performing a tracking processing using a first feature part of the object in one first image data and the first feature part of the object in other one first image data among the two first image data; and
calculates the second change amount by performing a tracking processing using a second feature part of the object in one shape data and the second feature part of the object in other one shape data among the two shape data.

31. The control apparatus according to claim 29 or 30, wherein
the calculation unit:
selects a data part of the shape data that indicates a shape of at least a part of the object based on the first position; and
calculates the second position by performing a matching processing using the selected data part and the reference shape data.

32. The control apparatus according to any one of claims 29 to 31, wherein
the calculation unit:
performs, on the shape data, a data removing processing for removing a data part indicating a shape of another object different from the object; and
calculates the second position by performing a matching processing using the shape data on which the data removing processing has been performed and the reference shape data.

33. The control apparatus according to claim 32, wherein
the another object includes a placing apparatus on which the object is placed.

34. The control apparatus according to any one of claims 1 to 33, wherein
the control signal includes a signal for controlling the process apparatus.

35. The control apparatus according to any one of claims 1 to 34, wherein
at least one of the first and second imaging apparatuses is configured to automatically adjust an exposure based on a captured result of the object by at least one of the first and second imaging apparatuses.

36. The control apparatus according to any one of claims 1 to 35, wherein
the calculation unit:
performs a pre-processing on at least one of the first image data and the second image data;
is configured to calculate the first position based on the first image data on which the pre-processing has been performed; and
is configured to calculate the second position based on the shape data generated from the second image data on which the pre-processing has been performed.

37. The control apparatus according to any one of claims 8 to 26 and 28 to 30, wherein
the calculation unit:
performs a pre-processing on at least one of the two first image data and the two second image data;
is configured to calculate the first change amount based on the two first image data on which the pre-processing has been performed; and
is configured to calculate the second change amount based on the two shape data generated from the two second image data on which the pre-processing has been performed.

38. The control apparatus according to claim 36 or 37, wherein
the pre-processing includes at least one of a gamma correction processing, a High-Dynamic-Range rendering processing, and a de-noise processing.

39. The control apparatus according to any one of claims 1 to 38, wherein
the second imaging apparatus generates the second image data by capturing the object on which pattern light is projected from a light projection apparatus mounted to the robotic arm.

40. The control apparatus according to any one of claims 1 to 39, wherein
the first imaging apparatus generates the first image data by capturing the object that is illuminated with illumination light from an illumination apparatus mounted to the robotic arm.

41. The control apparatus according to claim 40, wherein
a wavelength of the illumination light is different from a wavelength of the pattern light.

42. The control apparatus according to any one of claims 1 to 41, wherein
the second imaging apparatus includes a stereo camera,
the second image data outputted from the second imaging apparatus includes two image data.

43. The control apparatus according to any one of claims 1 to 42, wherein
the first imaging apparatus includes a monocular camera.

44. A control system comprising:
the control apparatus according to any one of claims 1 to 43;
the first imaging apparatus; and
the second imaging apparatus.

45. The control system according to claim 44 further comprising:
a first filter that attenuates light component in a first wavelength bandwidth of light from the object; and
a second filter that attenuates light component in a second wavelength bandwidth, which is different from the first wavelength bandwidth, of the light from the object, wherein
the first imaging apparatus captures the object by optically receiving light from the object through the first filter,
the second imaging apparatus captures the object by optically receiving light from the object through the second filter.

46. The control system according to claim 45 further comprising:
an illumination apparatus that illuminates the object with illumination light including light component in the first wavelength bandwidth; and
a light projection apparatus that project, on the object, pattern light including light component in the second wavelength bandwidth.

47. The control system according to any one of claims 44 to 46, wherein
a time at which the first imaging apparatus captures the object is the same as a time at which the second imaging apparatus captures the object.

48. The control system according to any one of claims 44 to 47, wherein
the second imaging apparatus includes a stereo camera.

49. The control system according to any one of claims 44 to 48, wherein
the first imaging apparatus includes a monocular camera.

50. A robot system comprising:
the control apparatus according to any one of claims 1 to 43;
the first imaging apparatus;
the second imaging apparatus; and
the robotic arm.

51. The robot system according to claim 50 further comprising: the process apparatus that performs the process on the object.

52. A control method that generates a control signal for controlling a robotic arm, wherein
a process apparatus that performs a process on an object, a first imaging apparatus that outputs first image data, and a second imaging apparatus that outputs second image data are mounted to the robotic arm,
the robotic arm moves the process apparatus, the first imaging apparatus, and the second imaging apparatus, wherein
the control method comprises:
calculating, based on the first image data acquired by the first imaging apparatus capturing the object during a relative movement between the object and the first and second imaging apparatuses, a first position that includes at least one of a position of the object in at least one direction of a first direction parallel to a first axis, a second direction parallel to a second axis, and a third direction parallel to a third axis and a pose of the object around at least one axis of the first axis, the second axis, and the third axis in a first coordinate system that is defined by the first axis, the second axis, and the third axis that are orthogonal to one another;
calculating, based on shape data that is generated from the second image data acquired by the second imaging apparatus capturing the object during the relative movement and that indicates a three-dimensional shape of the object, a second position that includes at least one of a position of the object in at least one direction of a fourth direction parallel to a fourth axis, a fifth direction parallel to a fifth axis, and a sixth direction parallel to a sixth axis and a pose of the object around at least one axis of the fourth axis, the fifth axis, and the sixth axis in a second coordinate system that is defined by the fourth axis, the fifth axis, and the sixth axis that are orthogonal to one another and that is different from the first coordinate system;
generating the control signal based on the first position and the second position; and
outputting, in a first cycle, the control signal generated based on the first position and the second position.

53. The control method according to claim 52 comprising:
calculating, based on two first image data acquired by the first imaging apparatus capturing the object at different times during the relative movement, a first change amount that is a change amount of at least one of the position of the object in the at least one direction and the pose of the object around the at least one axis in the first coordinate system between the different times; and
calculating, based on two shape data that are generated from two second image data, respectively, acquired by the second imaging apparatus capturing the object at different times during the relative movement and that indicate a three-dimensional shape of the object, a second change amount that is a change amount of at least one of the position of the object in the at least one direction and the pose of the object around the at least one axis in the second coordinate system between the different times, wherein
the generating the control signal includes generating the control signal based on the first position, the first change amount, the second position, and the second change amount,
the outputting the control signal includes outputting, in a second cycle, the control signal generated based on the first position, the first change amount, the second position, and the second change amount.

54. A computer program that allows a computer to execute the control method according to claim 52 or 53.
